# EUROPEAN PATENT SPECIFICATION

(11) **EP 1 127 011 B1**
(45) Date of publication and mention of the grant of the patent: **09.10.2002**
(21) Application number: 99956952.8
(22) Date of filing: 05.11.1999
(51) Int. Cl.: B65D 33/24, A44B 18/00

(54) **TOUCH FASTENERS, THEIR MANUFACTURE, AND PRODUCTS INCORPORATING THEM**
HAFTVERSCHLÜSSE, DEREN HERSTELLUNG UND SIE AUFWEISENDEN PRODUKTEN
FIXATIONS PAR CONTACT, LEUR FABRICATION ET PRODUITS LES INCORPORANT

(30) Priority: 06.11.1998 US 187389; 16.04.1999 US 293257; 14.10.1999 US 159489 P
(43) Date of publication of application: 29.08.2001
(73) Proprietor: VELCRO INDUSTRIES B.V., Curacao (AN)
(72) Inventor: CLUNE, William, Concord, NH 03301 (US); SHEPARD, William, H., Amherst, NH 03031 (US); PROVOST, George, A., Litchfield, NH 03052 (US)
(74) Representative: Müller-Boré & Partner Patentanwälte
(86) International application number: US9926261
(87) International publication number: WO00027721

(56) References cited:
- US-A- 5 172 980

## Description

### BACKGROUND OF THE INVENTION

This invention relates generally to touch fasteners, such as composite touch fasteners having both loops and loop-engageable fastener elements extending from one side of a common substrate, to their application in products such as closure strips for reclosable bags, and to methods and apparatus for their manufacture. This invention also relates to applying recloseable touch fasteners strips to sheet or film, especially to flexible, disposable sheet or film for packaging purposes, such as in vertical form and fill and horizontal form and fill packaging and in pouch manufacture.

There has been much development over the last thirty years in the field of hook-and-loop fasteners. Early touch fastener products of this type consisted of two mating tapes, each being knit or woven. One tape would include loops of filament woven into a base, and the other would include filaments woven to form loops and then cut to form hooks. In some cases free ends of drawn plastic filaments on the male tape would be melted to form protruding heads. This shape of fastener element is sometimes called a "mushroom", to distinguish it from "hook"-shaped elements with re-entrant crooks. In some cases, arrays of similar discrete fastening elements on two parts are shaped to engage with each other to form a releasable closure, these being known as "self-engageable" hooks or closures.

More recently, continuous molding of fastener elements extending from a common sheet-form resin base has resulted in less expensive and thinner male tapes. Significant improvements in this area include the development of continuous fastener tape molding using fixed mold cavities (see Fischer, U.S. Patent 4,794,028), and the ability to provide loops on the back side of the male fastener tape as the fastener tape substrate and elements are being formed (see Kennedy et al., U.S. Patent 5,260,015), thus creating a composite fastener tape capable of fastening to itself. Further improvements have reduced the size of the fastener elements moldable by such techniques, to heights of 0.015 inch (0.38 millimeter) or less, which provide a very smooth touch when arranged in dense arrays.

Another example of molded fastener tape involves molding perform stems or similar structures integral with a plastic backing substrate, and thereafter performing a forming operation to convert outer portions to a J hook, a mushroom head or similar engaging structure.

As molded fastener tape has been improved to be more flexible and less expensive, it has found application in disposable garments, such as diapers. Further improvements are desirable to extend the applicability of molded touch fastener products to other uses.

One such use that is discussed in more detail below is as a closure for reclosable bags and other such packaging.

Other types of repeated use closures for bags have included, for instance, rib-and-groove type of locking or zipper closures such as are marketed under the name ZIPLOC. These have very different fastening characteristics and exacting requirements for joining to sheet or film in comparison to the touch-fastener closures that are concerned here.

US-A-5,172,980 discloses a reclosable fastener for plastic bags in form of a closure strip. The closure strip comprises a hook and loop fastener means.

### SUMMARY OF THE INVENTION

The invention features, in several of its aspects, a composite touch fastener product having both a band of loops and a band of hooks extending from a single face of a common, sheet-form substrate. Among other applications, this product can be included at the opening of a bag to function as a repeated use closure.

According to one aspect of the invention, an elongated closure strip includes a sheet-form resin substrate having a front face a sheet-form resin substrate having a front face and a back face; an array of loop-engageable fastener elements integrally molded with and extending from the front face of the substrate and forming a discrete band of fastener elements extending longitudinally along the length of the closure strip; and a loop strip carried on the front face of the substrate and forming a discrete band of engageable loops extending along the length of the closure strip and spaced apart from the band of fastener elements. The loop strip is arranged to be engaged by the array of fastener elements when the substrate is folded along a fold line extending between the loop strip and the array of fastener elements.

In some embodiments, the substrate has attachment regions extending along its length for permanently attaching the closure strip across a bag opening, the attachment regions being devoid of fastener elements and loops. The attachment regions are disposed either on the front face or the back face of the substrate. In some cases the attachment regions are covered with a layer of adhesive for permanently attaching the closure strip across the bag opening. In some other cases the attachment regions comprise exposed resin of the substrate, for permanently welding the closure strip to opposite sides of a bag formed of a compatible material.

In some embodiments the substrate defines at least one frangible region extending longitudinally along the length of the closure strip between the band of loops and the band of fastener elements, for tearing the substrate between the loops and the fastener elements, to open an associated bag. In some cases the frangible region comprises at least one longitudinal groove extending along the substrate. In some configurations the frangible region comprises a pair of spaced apart, longitudinal grooves, and a longitudinal rib integrally molded with and extending from the substrate between the pair of grooves. The groove may be defined on either the front face or the back face of the substrate.

In some instances a longitudinal rib is integrally molded with and extends from the substrate adjacent the groove, on a side of the groove opposite the fold line, for resisting propagation of a tear from the groove away from the fold line.

The frangible region may include an embedded longitudinally continuous filament adapted to be torn from the closure strip to tear the substrate along the frangible region. In some cases the filament is completely enclosed within a longitudinal rib integrally molded with and extending from the substrate between the band of loops and the band of fastener elements. For some applications the longitudinal rib enclosing the filament is disposed on the back face of the substrate.

In some cases the longitudinal rib is offset from the fold line.

In some embodiments, the loop strip comprises a non-woven web of entangled fibers forming the loops, preferably having a basis weight of less than about 4 ounces per square yard (0.14 kg per square meter) (more preferably, less than about 2 ounces per square yard) (0.07 kg per square meter). In some cases, the non-woven web comprises a needled web in a stretched condition.

In some embodiments, fibers of the loop strip are affixed to the substrate across the width of the loop strip, such as by being encapsulated by resin of the substrate. By "width" of the loop strip, we mean the entire transverse dimension of the preformed strip, as measured between the outermost edges of the preformed strip before it is attached to the substrate.

In many cases, the loop strip has a fiber density which is substantially constant across its width, yet the loop strip has discrete regions which are more encapsulated by resin than other regions of the loop strip. These discrete, more encapsulated regions may be spaced apart longitudinally along the loop strip, extend lengthwise along the loop strip and be spaced apart widthwise, or be arranged in a checkerboard pattern, for instance.

When we refer to regions of the loop strip as being more "encapsulated" than other regions, we mean that the fibers of the more encapsulated regions are generally more thoroughly embedded in the resin of the substrate than the fibers of other regions. Generally, this will involve a deeper penetration of the substrate resin into the loop strip.

In some embodiments, longitudinal edge regions of the loop strip are affixed to the substrate, while a center region (between the edge regions) is substantially loose from the substrate. The center region of the loop strip may advantageously define a gentle arc extending away from the substrate in some of these embodiments.

In some configurations, a barrier layer (of a different material than the substrate) is included between the substrate and the loop strip. This barrier layer may be of paper or a polymer resin, for example.

In some cases the loop strip has at least one edge which is substantially loose from the substrate. This edge may be either an inner or outer edge in a finished bag, and can help to redirect peel separation forces to enhance the peel strength of the fastening.

In some closure strips, open-ended pockets are defined between an edge of the loop strip and the substrate. These pockets can also help to enhance peel strength in some cases.

In some embodiments, the edge regions of the loop strip have fibers directly encapsulated within resin of the substrate, while the closure strip also includes a binder (of a different material than the substrate) connecting fibers of the center region (between the edge regions) of the loop strip to resin of the substrate.

The substrate of some embodiments of the closure strip is advantageously formed of the same material as the substrate, e.g. enabling welding the substrate to the bag material. Such material can for instance be polypropylene, polyester or nylon, chosen for their excellent barrier qualities (as well as polyethylene which has poor barrier qualities), and copolymers and compatible mixtures that include at least one of such resins.

Some embodiments of the closure strip also include an adhesive strip carried on the front face of the substrate between the band of fastener elements and the band of loops. The adhesive strip has an exposed surface arranged to contact the front face of the closure strip when the closure strip is folded to engage the loops with the fastener elements, to retain the closure strip in a folded state.

Alternatively, some embodiments have a first adhesive strip carried on the front face of the substrate between the band of fastener elements and the pair of grooves, and a second adhesive strip carried on the front face of the substrate between the band of loops and the pair of grooves. The first and second adhesive strips have exposed surfaces arranged to contact each other when the closure strip is folded to engage the loops with the fastener elements, to retain the closure strip in a folded state. In either case, these adhesive strips can advantageously provide an air-tight seal when the closure is closed.

In some cases the closure strip includes a strip of peelable adhesive carried on the front face of the substrate for providing a peelable seal across the opening of an associated bag. For some applications the strip of peelable adhesive is disposed between a longitudinal edge of the closure strip and both of the bands of fastener elements and loops. In some other applications the strip of peelable adhesive is disposed between the bands of fastener elements and loops.

In some embodiments, the closure strip includes a layer of paper permanently adhered to the substrate. In some cases, this layer of paper is carried on the front face of the substrate, in its longitudinal edge regions. In some cases, the paper is carried on the back face of the substrate. In some other cases, the layer of paper is disposed between a center region of the loop strip and the substrate.

In some embodiments the closure strip includes a second array of loop-engageable fastener elements integrally molded with and extending from the back face of the substrate and forming a second band of fastener elements extending longitudinally along the length of the closure strip, for hanging an associated package for display. In some cases a second loop strip is carried on the back face of the substrate and forms a second discrete band of engageable loops spaced apart from the second band of fastener elements, for engaging the second band of fastener elements of another package.

In some cases a second loop strip carried on the back face of the substrate and forms a second discrete band of engageable loops extending along the length of the closure strip, for hanging an associated package for display.

In some embodiments the substrate further defines multiple longitudinal rows of hump-shaped projections extending from its front face between the fold line and each of the bands of loops and fastener elements.

According to a second aspect of the invention, an elongated closure strip includes a sheet-form resin substrate having front and back faces, a loop strip carried on the front face of the substrate, and an array of loop-engageable fastener elements carried on the front face of the substrate. The loop strip forms a discrete band of hook-engageable, free-standing loops along the length of the closure strip, and the array of fastener elements forms a discrete band of fastener elements extending longitudinally along the length of the closure strip and spaced apart from the band of loops. The substrate defines a pair of grooves extending longitudinally along the length of the closure strip between the band of loops and the band of fastener elements, and a longitudinal rib integrally molded with and extending from the substrate between the pair of grooves.

According to a third aspect of the invention, an elongated closure strip includes a sheet-form resin substrate having front and back faces, a loop strip carried on the front face of the substrate, and an array of loop-engageable fastener elements carried on the front face of the substrate. The loop strip forms a discrete band of hook-engageable, freestanding loops along the length of the closure strip, and the array of fastener elements forms a discrete band of fastener elements extending longitudinally along the length of the closure strip and spaced apart from the band of loops. The loop strip has width and a fiber density that is substantially constant across its width, and is at least partially encapsulated in resin of the substrate across its width, with the loop strip having discrete regions which are more encapsulated by resin than other regions of the loop strip.

According to a fourth aspect of the invention, a reclosable bag includes a bag body and an elongated closure strip. The bag body has two opposing side walls joined along three edges to form therebetween a pouch having an open end.

The closure strip is permanently affixed to the two side walls of the bag body along the open end, and includes a sheet-form resin substrate having a front and a back face; an array of loop-engageable fastener elements integrally molded with and extending from the front face of the substrate and forming a discrete band of fastener elements extending longitudinally along the length of the closure strip; and a loop strip carried on the front face of the substrate and forming a discrete band of engageable loops extending along the length of the closure strip and spaced apart from the band of fastener elements. The loop strip is arranged to be engaged by the array of fastener elements to releasably retain the bag in a closed condition.

In some preferred embodiments the substrate is continuous and solid between the band of loops and the band of fastener elements and forms a seal to retain the bag in a sealed condition before the bag is opened.

In some embodiments, the substrate of the closure strip is permanently affixed to the side walls of the bag body with adhesive. In some other embodiments, the substrate of the closure strip is welded to the side walls of the bag body. The substrate of the closure strip and the side walls of the bag body may both be formed of the same resin, for instance, including, polyethylene and, in cases involving barrier films and sheets, polypropylene, polyester and nylon, and copolymers and compatible mixtures that include such resins.

In some cases the resin of the sheet or film packaging material or the resin of the backing substrate of a closure strip to be joined to the packaging material, or both, includes an additive in the resin blend or a discrete outer layer, as by coextrusion, of a material that contributes to weldability of the matching surfaces. Such additives include for instance an ionomer such as marketed by duPont under the mark surlynTM, or an ethylene vinyl acetate (EVA) additive which lowers the weld temperature, or a material known as metalocene which is used to sharpen or adjust the melting range of materials to be welded together.

For some applications the substrate of the closure strip defines at least one frangible region extending longitudinally along the length of the closure strip between the band of loops and the band of fastener elements, for tearing the substrate between the loops and the fastener elements to open the bag. The frangible region may include, for instance, at least one longitudinal groove extending along the substrate. In some cases the frangible region comprises a pair of spaced apart, longitudinal grooves, and a longitudinal rib integrally molded with and extending from the substrate between the pair of grooves.

In some other cases the frangible region has an embedded, longitudinally continuous filament adapted to be torn from the closure strip to tear the substrate along the frangible region. The filament may be fully enclosed within a longitudinal rib extending from the back face of the substrate of the closure strip and disposed inside the bag, for example. In some bags the filament has an end attached to a pull tab extending from one edge of the bag. In some other bags a slit is defined through an edge region of the bag but not extending into the interior of the bag, the slit defining a graspable pull tab within the edge region and containing an end of the filament. The pull tab may also be defined between a pair of slits on either side of the filament and extending through an adjacent edge of the bag.

In some embodiments the loop strip of the closure strip comprises a non-woven web of fibers having a basis weight of less than about 4 ounces per square yard.

In some applications a strip of peelable adhesive is carried on the front face of the substrate for providing a peelable seal across the opening of the bag.

The peelable seal may be disposed either inboard or outboard of the bands of loops and fastener elements.

In some embodiments the back face of the closure strip forms an outer surface of the bag, with the bands of loops and fastener elements carried on an inner surface of the bag.

In some bags the closure strip also has a second array of loop-engageable fastener elements integrally molded with and extending from the back face of the substrate and forming a second band of fastener elements extending longitudinally along the outer surface of the bag, for hanging the bag for display.

The closure strip may also include a second loop strip carried on the back face of the substrate and forming a second discrete band of engageable loops extending along the outer surface of the bag, for hanging the bag for display.

In some cases the front face of the closure strip forms an outer surface of the bag, with the bands of loops and fastener elements carried on said outer surface of the bag. Both the band of loops and the band of fastener elements may be disposed on a front side of the bag, for example, such that the fastener elements engage the loops when an adjacent edge of the bag is folded over.

Preferably, the substrate of the closure strip defines a frangible region between the bands of loops and fastener elements, the frangible region running along one side of the bag and configured to be torn to open the bag.

For some consumer applications this frangible region is configured to be torn by applying a transverse tensile load across the frangible region, such that the frangible region is burst to gain access to the bag. The load may be applied by grasping the bag on either side of the frangible region, for example, and then separating the hands to tear the frangible region. Preferably, the frangible region of the substrate is weaker with respect to a transverse tensile load than the side walls of the bag and the attachment between the side walls of the bag and the bag closure.

The side wall forming the front side of the bag may have an exposed tab, for example, for grasping and pulling the front side of the bag to tear the frangible region of the closure strip. This tab may extend across the front side of the bag.

In some embodiments the bands of loops and fastener elements are disposed on opposite sides of the bag, such that the fastener elements engage the loops when an adjacent edge of the bag, formed by a fold in the closure strip, is folded over twice. In some cases, adjacent layers of the substrate together form a barrier to fluids with the closure strip folded over twice.

In some applications the side walls of the bag are attached to the closure strip along the back face of the closure strip. In some cases, one edge of the bag is formed by a fold along the substrate of the closure strip between the bands of loops and fastener elements. In some other cases, the substrate forms a fold between the bands of fastener elements and loops, with the fold of the substrate directed toward the interior of the bag. The substrate may be solid and continuous between the side walls of the bag, to form a seal across the bag opening until the bag is initially opened. The side walls of the bag may be joined together outboard of the longitudinal edges of the closure strip to form a seal until the bag is initially opened.

Advantageously, in some embodiments at least one longitudinal edge of the closure strip is disposed inside the bag and unattached to the sides of the bag except at the edges of the bag.

The substrate of the closure strip carries printed indicia in some applications.

Also, in some applications the substrate of the closure strip defines a hole forming a graspable handle for carrying the bag.

According to a fifth aspect of the invention, a reclosable bag includes a bag body having two opposing side walls joined along three edges to form a pouch having an open end, and a closure strip permanently affixed to the two side walls of the bag body along the open end. The closure strip includes a sheet-form resin substrate having a front face, a loop strip carried on the front face of the substrate, and an array of loop-engageable fastener elements carried on the front face of the substrate. The loop strip forms a discrete band of hook-engageable, free-standing loops along the length of the closure strip, and the array of loop-engageable fastener elements forms a discrete band of fastener elements extending longitudinally along the length of the closure strip and arranged to engage the band of loops to releasably retain the bag in a closed condition when the opposing sides of the bag body are pressed together at the open end. The substrate defines a pair of grooves extending longitudinally along the length of the closure strip between the band of loops and the band of fastener elements, the pair of grooves spaced apart to define between them a band of substrate resin for retaining the bag in a closed condition until the closure strip is torn along the pair of grooves. The substrate also defines a longitudinal rib integrally molded with and extending from the substrate between the pair of grooves, the rib having thickness and arranged to be grasped between adjacent regions of the substrate and pulled to tear the closure strip along the pair of grooves.

According to a sixth aspect of the invention, a continuous sheet-form product useful for forming bags includes a continuous sheet-form film and a length of closure strip permanently bonded to the film. The closure strip includes a sheet-form resin substrate having an exposed front face; a loop strip carried on the front face of the substrate and comprising a discrete band of hook-engageable loops extending along the length of the closure strip; and an array of loop-engageable fastener elements integrally molded with resin of the front face of the substrate and forming a discrete band of fastener elements extending longitudinally along the length of the closure strip and spaced apart from the band of loops.

The closure strip, in some applications, is continuous and extends along the film centerline. In some other applications the closure strip is continuous and extends along one edge of the film.

In some cases the closure strip extends transversely across the film.

According to a seventh aspect of the invention, a continuous sheet-form product useful for forming bags includes a continuous sheet-form film and multiple lengths of closure strip extending transversely across the film at spaced intervals and permanently bonded to the film. Each length of closure strip includes two overlapping substrates, with each substrate bonded separately to the bag film on opposite sides of an associated frangible region of the film; a loop strip carried on the front face of the first substrate and comprising a discrete band of engageable loops extending along the length of the closure strip; and an array of loop-engageable fastener elements extending from the second substrate and forming a discrete band of fastener elements extending longitudinally along the length of the closure. The first and second substrates are overlapped as bonded to the film such that the bands of loops and fastener elements overlap for engagement.

Preferably, the fastener elements are integrally molded with resin of the front face of the second substrate.

According to an eighth aspect of the invention, a method of fabricating a closure strip is provided. The method includes the steps of molding a continuous, sheet-form substrate having a band of fastener elements integrally molded with and extending from a front face of the substrate; and attaching a continuous strip of loop material to resin forming the front face of the substrate to form a discrete band of loops spaced apart from the band of fastener elements.

In some cases the step of molding includes forming the substrate to have a longitudinal frangible section arranged to be disposed between the band of loops and the band of fastener elements. The frangible section of the substrate may define, for example, at least one longitudinally extending groove, with the molding step including forming the groove in the substrate as the substrate is formed. The groove may be formed in the front or back face of the substrate.

In some instances the frangible section defines a pair of longitudinally extending grooves in the substrate, and the step of molding may also include simultaneously forming a longitudinal rib extending from the substrate between the grooves.

In some cases the step of molding includes simultaneously forming a longitudinal rib extending from the substrate, the rib arranged to be disposed between the bands of fastener elements and loops. The rib, in some instances, is molded to be closer to one than the other of the bands of fastener elements and loops.

The step of molding, for some applications, includes simultaneously embedding a longitudinally continuous filament in resin of the substrate. The filament may be completely enclosed by resin of a rib extending from one face of the substrate, for example.

In some preferred applications of the method of the invention, the strip of loop material comprises a non-woven web of entangled fibers forming the loops and having a basis weight of less than about 4 ounces per square yard (0.14 kg per square meter).

In some embodiments the step of attaching includes encapsulating fibers of the strip of loop material in resin of the substrate across the width of the strip of loop material.

The strip of loop material, in some cases, has a fiber density which is substantially constant across its width, and the step of attaching includes permanently bonding discrete regions of the strip of loop material to the substrate while leaving other regions of the strip of loop material in a less bonded condition.

In some embodiments the strip of loop material is permanently attached to the substrate after the substrate is molded, such as by heating the front face of the substrate and then pressing the loop material against the front face of the substrate with the front face of the substrate at an elevated temperature.

In other embodiments the strip of loop material is permanently attached to the substrate as the substrate is molded. In some such cases the steps of molding and attaching include continuously feeding the strip of loop material through a nip defined between a rotating mold roll and a pressure roll, the rotating mold roll defining a multiplicity of cavities about its periphery for molding the fastener elements, while continuously introducing molten resin to the mold roll under conditions which cause the resin to fill the cavities and form the substrate, such that pressure in the nip bonds the strip of loop material to resin of the substrate.

In some configurations the mold roll has two extending ridges that form a pair of grooves in the substrate. The step of molding may also include simultaneously forming a longitudinal rib extending from the substrate between the pair of grooves, the mold roll defining, between its two ridges, a channel for forming the longitudinal rib.

In some instances the steps of molding and attaching include continuously feeding the strip of loop material through a gap defined between a rotating mold roll and a stationary extrusion head, the rotating mold roll defining a multiplicity of cavities about its periphery for molding the fastener elements, while continuously introducing molten resin to the gap under conditions which cause the resin to fill the cavities and form the substrate and to permanently adhere to the strip of loop material.

In some embodiments the method also includes, while continuously feeding the strip of loop material through the gap, continuously feeding a strip of preformed material through the gap between the strip of loop material and the extrusion head, such that the preformed material inhibits the encapsulation of fibers of the strip of loop material in predetermined regions and the preformed material is incorporated into the closure strip. This preformed material is preferably selected from the group consisting of paper, fabric and plastic film, and may have perforations through it for allowing heavier penetration of substrate resin in some predetermined areas.

In some cases the steps of molding and attaching include continuously feeding the strip of loop material through a nip defined adjacent the periphery of a rotating mold roll, the mold roll comprising at least one staking ring having a contoured outer edge and arranged to hold a predetermined region of the strip of loop material against the resin under pressure in the gap. The outer edge of the staking ring may have protrusions spaced about its periphery, for example, with the protrusions corresponding to discrete regions of relatively greater encapsulation of the strip of loop material. Preferably, the mold roll comprises multiple staking rings arranged to produce a predetermined bonding pattern across the strip of loop material.

According to a ninth aspect of the invention, a method of fabricating a closure strip is provided. The closure strip is in the form of a sheet-form resin substrate having a front face, with both a loop strip and an array of loop-engageable fastener elements carried on the front face of the substrate. The loop strip has width and forms a discrete band of hook-engageable, extended loops along the length of the closure strip. The array of loop-engageable fastener elements forms a discrete band of fastener elements extending longitudinally along the length of the closure strip and spaced apart from the band of loops, the substrate having a frangible section between the band of loops and the band of fastener elements. The method includes the steps of molding a continuous, sheet-form substrate having both a band of fastener elements integrally molded with and extending from its front face, and a frangible section, and attaching a continuous strip of loop material to resin forming the front face of the substrate to form a band of loops, with the frangible section of the substrate disposed between the band of loops and the band of fastener elements.

According to a tenth aspect of the invention, a method of fabricating reclosable bags is provided. The method includes the steps of:
a) providing a continuous length of sheet-form bag wall material;
b) providing a continuous closure strip comprising a sheet-form resin substrate having a front face; a loop strip carried on the front face of the substrate and forming a discrete band of engageable loops along the length of the closure strip; and an array of loop-engageable fastener elements integrally molded with the front face of the substrate and forming a discrete band of fastener elements extending longitudinally along the length of the closure strip and spaced apart from the band of loops;
c) permanently attaching the closure strip along the sheet-form bag wall material to form a continuous length of preform bag material; and then
d) forming individual bags from the preform bag material.

In some embodiments the step of attaching produces a preform tube of bag material, and the steps of attaching and forming are performed simultaneously in a vertical form and fill process, with the individual bags containing a predetermined quantity of material to be stored in the bags.

In some applications, the closure strip is attached to longitudinal edges of the sheet-form plastic to form a fin seal of the preform tube.

In some cases the closure strip is folded to form a fold extending outward, away from the preform tube. The fold defines a distal edge of the fin seal in some of these cases.

In some other cases the closure strip is folded to form a fold extending inward, toward the preform tube.

In some embodiments the step of attaching produces a preform tube of bag material. The steps of attaching and forming are performed simultaneously in a horizontal form and fill process, with the individual bags formed about associated packages of material. In some preferred arrangements longitudinal edges of the bag side wall material are brought together to form a fin seal with the closure strip folded longitudinally and disposed within the fin seal. In some other applications longitudinal edges of the bag side wall material are brought together in a fin seal with the closure strip folded longitudinally about and attached to the longitudinal edges of the bag side wall material.

In some embodiments the step of attaching includes folding the closure strip along its length to engage the bands of loops and fastener elements in an engagement zone, the loops and fastener elements holding their underlying regions of the substrate in spaced apart relation. In some of these cases the step of attaching further includes welding the bag side wall material to the back face of the substrate, the engagement zone providing a heat barrier to inhibit permanently welding the substrate together in its folded condition.

In some cases the step of forming includes folding the preform bag material along its centerline and then forming transverse seals spaced along the preform bag material at bag length intervals to form a chain of open-ended bags.

The closure strip may be attached along the bag side wall material between longitudinal edges of said material, for instance, with the preform bag material being subsequently folded at the closure strip to engage the bands of loops and fastener elements.

In some applications the step of attaching includes individually folding the bag side wall material and the closure strip, and then joining the folded wall material and closure strip along their longitudinal edges to form a continuous tube of preform bag material. In some of these applications the step of forming includes creating transverse seals across the tube of preform bag material to form a series of discrete, empty bags.

In some embodiments the bag side wall material is provided as two separate material sheets, the step of attaching including attaching the closure strip to one longitudinal edges of each sheet, such that the preform bag material comprises the two material sheets joined at the closure strip. The step of forming individual bags includes forming transverse seals across the preform bag material and joining the other longitudinal edges of the sheets of material to form a series of sealed bags.

In some instances the closure strip contains an embedded pull cord, and the step of forming includes forming a graspable pull tab extending from an edge of each bag, with the pull tab containing an end of the pull cord. The graspable pull tab may be formed by slitting each bag in a side seal area of the bag, for instance. Alternatively, the slitting may cut through the pull cord but not extend into the interior of the bag. The slitting forms, in some cases, two slits extending from an adjacent edge of the bag to the filament.

According to an eleventh aspect of the invention, a method of fabricating reclosable bags is provided. The method includes the steps of:
(a) providing a continuous length of sheet-form plastic, folded along its length and having two exposed longitudinal edges;
(b) providing a continuous closure strip folded along its length and having two exposed longitudinal edges (the closure strip having a sheet-form resin substrate with a front face, a loop strip carried on the front face of the substrate and forming a discrete band of hook-engageable, free-standing loops along the length of the closure strip, and an array of loop-engageable fastener elements integrally molded with the front face of the substrate and forming a discrete band of fastener elements extending longitudinally along the length of the closure strip and spaced apart from the band of loops, as described above);
(c) permanently attaching the longitudinal edges of the sheet-form plastic to the longitudinal edges of the closure strip to form a continuous preform tube; and
(d) forming sealed individual bags from the preform tube.

In some embodiments, the step of forming sealed individual bags includes cutting the continuous preform tube to predetermined lengths (each cut length comprising a section of closure strip and a section of sheet-form plastic), sealing a first open end of each cut length of preform tube, and sealing a second open end of each cut length of preform tube to form a sealed bag. In many cases, between the steps of sealing the first and second open ends, each cut length of preform tube is filled with material to be stored in the sealed bag.

In some embodiments, the step of forming sealed individual bags includes:
(d1) sealing the tube at a sealing point spaced from one end of the tube to form an end pouch with a single opening;
(d2) filling the end pouch with material;
(d3) sealing the single opening of the end pouch to form a sealed bag containing the material;
(d4) separating the sealed bag from the tube by severing the tube below the sealing point;
(d5) advancing the tube; and
(d6) repeating steps (d1) through (d5).

In some embodiments, the substrate of the closure strip defines a pair of grooves extending longitudinally along the length of the closure strip between the band of loops and the band of fastener elements, with the pair of grooves spaced apart to define between them a band of substrate resin for retaining the bag in a closed condition until the closure strip is torn along the pair of grooves.

According to a twelfth aspect of the invention, a composite touch fastener has an elongated, sheet-form resin substrate with a front face, a fibrous loop strip partially encapsulated in resin of the front face of the substrate, and an array of loop-engageable fastener elements integrally molded with resin of the front face of the substrate. The loop strip forms a discrete band of hook-engageable, freestanding loops along the length of the substrate, the loop strip having a substantially constant fiber density across its width between its two longitudinal edges. The array of loop-engageable fastener elements forms a discrete band of fastener elements extending longitudinally along the substrate.

In some embodiments, the loop strip comprises a non-woven web of entangled fibers forming the loops. Preferably, the web has a basis weight of less than about 4 ounces per square yard (0.14 kg per square meter) (more preferably, less than about 2 ounces per square yard) (0.07 kg per square meter). The non-woven web may be in the form of a needled web in a stretched condition, for instance.

According to a thirteenth aspect of the invention, a composite touch fastener includes an elongated, sheet-form resin substrate, a fibrous loop strip partially encapsulated in resin of the substrate, with the loop strip having discrete regions which are substantially more encapsulated by resin than other regions thereof, and an array of loop-engageable fastener elements integrally molded with resin of the substrate.

In some embodiments, the loop strip has a substantially constant fiber density across its width.

In some cases, the strip of loop material has regions of substantially higher loft than regions corresponding to the discrete regions that are substantially more encapsulated by resin.

By "loft", we mean the distance the exposed loops of the loop material extend from the front face of the substrate, as presented for engagement by fastener elements.

In some embodiments, the strip of loop material comprises a non-woven web of entangled fibers forming the loops and having a basis weight of less than about 4 ounces per square yard (0.14 kg per square meter).

According to a fourteenth aspect of the invention, a method of fabricating a composite touch fastener is provided. The composite touch fastener is in the form of an elongated, sheet-form resin substrate having a front face, with both a loop strip and an array of loop-engageable fastener elements carried on the front face of the substrate. The loop strip has width and forms a discrete band of hook-engageable, exposed loops extending longitudinally along the substrate. The array of loop-engageable fastener elements forms a discrete band of fastener elements extending longitudinally along the length of the substrate. The method includes the steps of molding a continuous, sheet-form substrate having a band of fastener elements integrally molded with and extending from its front face, and attaching a continuous strip of loop material to resin forming the front face of the substrate to form a band of loops.

Preferably, the strip of loop material comprises a non-woven web of entangled fibers forming the loops and having a basis weight of less than about 4 ounces per square yard (0.14 kg per square meter) (more preferably, less than about 2 ounces per square yard) (0.07 kg per square meter).

In some embodiments, the strip of loop material has a fiber density that is substantially constant across its width, yet the step of attaching permanently bonds discrete regions of the strip of loop material to the substrate while leaving other regions of the strip of loop material in a less bonded condition.

In some cases, the strip of loop material is permanently attached to the substrate as the substrate is molded. For instance, in some preferred methods, the steps of molding and attaching include continuously feeding the strip of loop material through a gap defined adjacent a rotating mold roll (defining a multiplicity of cavities about its periphery for molding the fastener elements), while continuously introducing molten resin to the mold roll under conditions which cause the resin to fill the cavities and form the substrate, such that pressure in the gap bonds the strip of loop material to resin of the substrate.

In some cases, the gap is a nip defined between the mold roll and a pressure roll.

In some other cases, the gap is defined between the mold roll and a fixed extrusion head.

In some embodiments, the mold roll contains at least one staking ring having a contoured outer edge, the staking ring arranged to hold a predetermined region of the strip of loop material against the resin under pressure in the gap.

In one presently preferred configuration, the outer edge of the staking ring has protrusions spaced about its periphery, the protrusions corresponding to discrete regions of relatively greater encapsulation of the strip of loop material.

In some cases, the mold roll has multiple staking rings arranged to produce a predetermined bonding pattern across the strip of loop material.

According to a fifteenth aspect of the invention, a method of fabricating a composite touch fastener is provided. The touch fastener is in the form of an elongated sheet-form resin substrate carrying both a preformed material and an array of loop-engageable fastener elements integrally molded with the substrate.

The method includes molding a continuous, sheet-form substrate having a band of fastener elements integrally molded with and extending from the substrate, by continuously introducing molten resin to a gap defined adjacent a rotating mold roll defining a multiplicity of cavities about its periphery for molding the fastener elements, under conditions which cause the resin to fill the cavities and form the substrate, while permanently attaching a continuous strip of preformed material to resin of the substrate in a nip defined between the mold roll and a pressure roll, by causing pressure variations within the nip. The pressure variations result in regions of relatively high penetration of substrate resin into the preformed material and regions of relatively low penetration of substrate resin into the preformed material.

In some preferred embodiments, the mold roll has protrusions extending radially into the nip, for causing local increases in nip pressure that correspond to the regions of relatively high penetration of substrate resin.

In some embodiments, the pressure roll has protrusions extending radially into the nip, the protrusions causing local increases in nip pressure that correspond to the regions of relatively high penetration of substrate resin.

In some cases, the gap and the nip are coextensive. In some other cases, the gap is defined between the mold roll and a fixed extrusion head.

In some embodiments, the regions of relatively high penetration of substrate resin into the preformed material are arranged in a checkerboard pattern along the strip of preformed material.

In some configurations, the array of fastener elements is disposed on a front face of the substrate and the strip of preformed material is attached to a back face of the substrate. The preformed material is, in some embodiments, coextensive with the back face of the substrate.

In some other configurations, the strip of preformed material and the array of fastener elements are both disposed on a common side of the substrate.

In some embodiments, the strip of preformed material comprises a strip of loop material having exposed loops arranged for releasable engagement by the fastener elements.

According to a sixteenth aspect of the invention, an apparatus for fabricating a composite touch fastener is provided. The composite touch fastener, as described above, is in the form of an elongated sheet-form resin substrate having a front face, a loop strip carried on the front face of the substrate (the loop strip having width and forming a discrete band of hook-engageable, extended loops along the length of the touch fastener), and an array of loop-engageable fastener elements carried on the front face of the substrate and forming a discrete band of fastener elements extending longitudinally along the substrate. The apparatus includes a rotating mold roll defining a multiplicity of fixed cavities about its periphery for molding the fastener elements, means of supplying molten resin to the mold roll under conditions which cause the resin to fill the cavities and form the substrate, means of supplying a continuous strip of loop material between the molten resin and the mold roll under conditions which cause the strip of loop material to permanently bond to the front face of the substrate, and means of stripping the fastener elements from the cavities. The "means" elements of the apparatus will be understood to be those discussed or represented schematically herein or in the disclosures incorporated by reference, and their equivalents.

According to a seventeenth aspect of the invention, a method of fabricating reclosable bags in a vertical form and fill process is provided. The method includes the steps of:
a) unrolling a continuous length of sheet-form bag film and directing the unrolled film over a forming head, advancing the bag film one bag length between pauses;
b) during each pause, attaching a length of closure strip across the unrolled bag film upstream of the forming head, each length of closure strip comprising a sheet-form resin substrate having a front face; a loop strip carried on the front face of the substrate and forming a discrete band of engageable loops along the length of the closure strip; and an array of loop-engageable fastener elements integrally molded with the front face of the substrate and forming a discrete band of fastener elements extending longitudinally along the length of the closure strip and spaced apart from the band of loops; and
c) forming individual bags from the bag film, each bag having an associated length of closure strip.

According to an eighteenth aspect of the invention, a horizontal form/fill packaging machine is provided. The machine includes means for forming a continuous tube from a sheet of film (the tube having an extending flange formed by opposite edge regions of the film brought together in face-to-face relation), means for introducing a reclosable closure strip to the flange of the tube, means for sealing the closure strip to the edge regions of the film means for inserting discrete items to be packaged into the tube, and means for severing and sealing the tube between adjacent items to form individual packages containing the items.

According to a nineteenth aspect of the invention, a reclosable roll-top bag has a closure strip sealed along an upper end of the bag. The closure strip has a substrate defining at least one frangible region to be severed to open the bag, a band of hook elements extending from the closure strip and disposed on one side of the bag, and a band of loop material carried on the substrate on an opposite side of the bag. When the upper end of the bag is folded over upon itself in a predetermined arrangement, the band of hook elements releasably engages the band of loop material to form a releasable fastening, with adjacent layers of the substrate together forming a barrier to fluids.

According to a twentieth aspect of the invention, a reclosable bag has a closure strip having parallel hook and loop bands extending from an outer surface thereof and separated by a frangible region, such that the bag, after being opened by severing the frangible region, is adapted to be reclosed by folding the bag about the frangible region to place the hook and loop bands in releasable engagement.

According to a twenty first aspect of the invention, a method of fabricating a closure strip includes molding a continuous, sheet-form substrate having a band of fastener elements integrally molded with and extending from a front face of the substrate, and attaching a continuous strip of loop material to resin forming the front face of the substrate to form a discrete band of loops spaced apart from the band of fastener elements.

According to a twenty-second aspect of the invention, a method of forming a bag or package of disposable flexible packaging film or sheet having a surface of predetermined thermoplastic composition is provided. The method includes providing inter-engageable closure strip portions which are either separate strips or strip portions of a common member, and joining the backing of said strip portions to respective portions of the surface of said plastic film or sheet by welding. The strip portions are either separate strips or strip portions of a common member. At least a first of the closure strip portions provides an array of discrete fastener elements such as hook elements having crooks or hook elements of mushroom form, the fastener elements having stems integrally molded with and extending from a thermoplastic backing substrate. The other of the strip portions provides an array of engageable elements such as loops or fibers, or elements self-engageable with fastener elements of the first strip portion, such that the elements of the strip portions are capable of forming a releasable closure. Each of the strip portions has a backing surface comprised substantially of the predetermined thermoplastic composition of which the surface of the film is formed.

In some cases, during welding, the fastener elements of the respective strip portions are inter-engaged and the backings of the strip portions are simultaneously joined to respective portions of the sheet or film by application of energy to the respective sheet or film portions, air space provided by the inter-engaged elements serving to prevent unwanted welding of the strip portions to each other.

According to further aspects of the invention, methods of applying a reclosable fastener to sheet or film are provided, which include the steps of providing inter-engageable closure strip portions which are either separate strips or strip portions of a common member and joining the backing of the strip portions to respective portions of the surface of the sheet or film by application of energy such as heat. acoustic or radio-frequency energy, to produce for instance welding or adhesive bonding. At least a first of the closure strip portions provides an array of discrete fastener elements such as hook elements having crooks or hook elements having mushroom form, the fastener elements having stems integrally molded with and extending from a thermoplastic backing substrate. The other of the strip portions provides an array of engageable elements such as hook-engageable loops or fibers, or elements self-engageable with fastener elements of the first strip portion, such that the discrete elements of the strip portions are capable of forming a releasable closure. In one aspect, during joining, the fastener elements of the respective strip portions are inter-engaged and the backings of the strip portions are simultaneously joined to respective portions of the sheet or film by application of energy to the respective sheet or film portions, with insulating air pockets provided in the space created by the inter-engaged elements serving to limit thermal transfer and unwanted adhesion or bonding of the closure portions to each other.

In another aspect, the cooperating parts of the releasable closure are of materials that are incompatible or of significantly different melting temperatures such that, under temperature conditions of joining, the interengaged elements do not tend to adhere to each other. Such provisions can avoid the need for presence of a release sheet during the joining action.

In one example, loops or fibers of the second strip portion are encapsulated by and secured by thermoplastic resin of the backing of the respective closure strip portion, the loops or fibers being comprised of resin, such as polyester, that is incompatible with or has a higher melting temperature than the resin such as polyolefin, of the respective backing substrate, and/or of components of the opposed first strip portion, such that, under conditions of joining, the dissimilarity of the material of the loops or fibers serves to prevent detrimental change to the loops or fibers or detrimental adhesion or bonding of the loops or fibers to the first closure strip portion, preferably, the mass of the hook elements of the first portion being substantially greater than that of the loop elements, the thermal mass of the hook elements being sufficient to prevent undue distortion of the hooks during the joining action.

In some cases, the method of the invention is advantageously performed during vertical form and fill packaging. In other cases the method advantageously is performed during horizontal form and fill packaging. The method is also employed to advantage during pouch making.

In such cases it is to be noted that the invention does not require the use of any particular resin for the various components. This permits the use of backing substrates of e.g. polypropylene, polyester and nylon for desired barrier qualities that polyethylene does not provide.

Also, in cases desired, a wide range of compatibility layers may be employed. For instance, for joining a polyester backing of a closure strip to a polyester sheet or film, a lower melting point layer on either component that adheres to each can be applied. In another case, or where the sheet is a plain or coated paper either a bonding layer may be introduced to one of the mating surfaces or the substance of the backing substrate itself may be used as the bonding surface, e.g. where the backing is polyethylene.

According to still another aspect of the invention, a reclosable flexible package is formed of flexible plastic film of wall thickness less than about 0.005 inch and includes a reclosable, elongated closure in which the reclosable fastener has opposable strips adapted to be facially engaged to close the package. The strips are constructed to be usefully engaged upon application of a uniform facial engagement force of less than about one pound per lineal inch of closure (0.18 Newton per millimeter), and to be opened by a transverse peel force of less than about two pounds per lineal inch of closure (0.35 Newton per millimeter).

In some embodiments each of the strips have a bi-dimensional field of at least one type of discrete fastener elements, the fastener elements of each strip being constructed to individually interact with elements of the other opposable strip to form a field of localized releasable fastenings to form a peel-open closure.

In some instances each strip has at least two types of discrete fastener elements, with hooks of each strip engage with loops of the other.

In some cases the strips each comprise loops and loop-engageable fastener elements.

Preferably, the closure is less than about one inch in width and has multiple interlaced rows of loop-engageable fastener elements and rows of loops.

For instance, in some cases there are at least 10 rows of loop-engageable elements and 10 rows of loops across the width of the closure strip. Preferably, the fastener element density is greater than about 1000 fastener elements per square inch (150 per square centimeter) of closure.

In some cases the loops are formed of the filaments of multi-filament yarn.

In some embodiments the closure contains a molded strip having parallel rows of fastener elements molded integrally with a face of the strip, and, interspersed between groups of from one to three adjacent rows of fastener elements, at least one continuous, multi-filament yam bonded the face of the strip, with filaments of the yarn extending from the face of the strip for engagement by the fastener elements. The multi-filament yarns may be permanently crimped or staked to the face of the strip at spaced apart points along the strip, for example.

In some instances the yarns are comprised of polyester.

In some cases the fastener elements are formed of polypropylene. Another aspect of the invention features a bag closure having matable touch fastener elements arranged in parallel strips extending from one surface of a bag.

Between the strips of fastener elements is a frangible region adapted to be torn apart to initially open the bag. After initial opening, the bag is reclosed by folding the closure about the torn frangible region to engage the strips of matable fastener elements.

In some embodiments, one of the strips of fastener elements is a band of hook-engageable loops or fibers; the other strip being of extending male fastener elements, such as hooks or mushrooms.

In some other embodiments, the strips are of self-engageable male fastener elements, having arrays of spaced-apart elements that are designed to interlock, for example, when pressed together.

Preferably, the closure is a continuous, thin, strip-form extrusion of plastic material upon one face of which the fastener elements are either integrally molded of material of the extrusion or bonded to the extrusion while the extrusion is in a softened state, such that the fastener elements are joined directly to the extruded material, or are formed out of the extruded material, without separate adhesives or bonding agents.

The frangible zone may be, for instance, a channel formed in one face of the extruded material between the strips of fastener elements. The channel may be either on the outer or inner face of the closure, as incorporated into a bag.

Joined with bag material to form a bag, the closure is preferably arranged such that the frangible zone extends parallel to and adjacent one edge of the bag.

By adjacent, we mean that the frangible zone is preferably between one-half and two inches from the bag edge, such that sufficient space is provided between the frangible zone and the bag edge to grasp the edge region of the bag with one hand while, with the other hand, the main body of the bag is pinched, on the other side of the frangible zone, and pulled away from the frangible zone to tear the closure along the frangible zone.

In one preferred bag construction, the bag material forming the back face of the bag is permanently bonded to the back surface of the closure along one closure edge, and the bag material forming the front face of the bag is permanently bonded to the front face of the closure along its opposite edge, in an edge bonding zone free of fastener elements.

As an alternative to pinching the main body of the bag to separate the closure along its frangible zone, a pull flap may be provided at the connection of the closure to the bag material forming the front face of the bag. The pull flap may either be in the form of a loose edge of the bag material not joined to the closure but exposed along the closure to be grasped and pulled, or a discrete, local flap of bag material formed, for instance, by die-cutting the bag material prior to attaching the closure.

In one presently preferred embodiment, the closure is formed of polyethylene and has a nominal thickness of about 0.004 inch (0.1 millimeter).

The frangible zone is a groove in which the thickness of the closure is reduced to about 0.002 inch (0.05 millimeter) over a groove width of about 0.036 inch (0.9 millimeter). Such a construction can provide acceptable tear properties when incorporated into a bag otherwise formed of 0.002 to 0.005 inch thick (0.05 to 0.125 millimeter thick) polyethylene, for example.

In other embodiments of the invention, the frangible zone includes a pull rib which is designed to be pulled along the closure from one edge of the bag to the opposite bag edge, thereby tearing the closure between the strips of fastener elements. In such embodiments, the pull rib may be exposed for grasping by forming a hole or notch through the bag material of the back face of the bag extending partially across the width of the side seal of the bag, immediately behind the pull rib. With the back face of the bag relieved or otherwise spaced apart from the end of the pull rib, the end of the pull rib can be readily grasped and pulled along the width of the bag to initially open the closure.

This aspect of the invention can provide a bag closure that is readily opened without the level of fine motor control required to manipulate very small features. This can be particularly important who, due to arthritis, weak eyesight or other disabilities have a lower level of dexterity.

As a repeated use closure, the product of the invention provides a ventilated, easily alignable seal. As the bands of loops and fastener elements are relatively wide, there is no need for accurate alignment to form a reliable closure.

The closure is able to accommodate a fair amount of dirt or debris without losing its function as a closure, making it particularly applicable as a closure for bags containing granular or powder substances. In addition, the natural porosity of the closure can provide some degree of filtering of airborne dust. Such a ventilated closure can be particularly desirable in cargo containers of airplanes in order to accommodate pressure changes, and, by its venting action, may help to avoid moisture buildup to keep produce and other such items fresh. The groove and rib tear strip molded into the center of the closure strip in some cases advantageously maintains an airtight seal until the bag is initially opened. The continuous closure strip provided by the invention is readily adaptable to standard bag-making equipment and, in many instances, is directly weldable to compatible bag materials. These advantages accrue to bags produced according to the invention and having such a repeated use closure.

If made of an appropriate width, the closure strip of the invention can be folded and sealed to itself to form an enclosed bag.

By employing a very light, non-woven loop material and integrally molded fastener elements in several instances, the resulting product is relatively inexpensive and flexible.

The product of the invention is also useful in other applications, either as a packaging closure or as a general purpose fastener. Encapsulating fibers of the loop material in a predetermined pattern of alternating regions of light and heavy encapsulation can produce regions of particularly high loft in which hook-engageable fibers are particularly well-presented for engagement.

As a method of producing fastener products, the invention also provides a reliable method of securing very lightweight loop materials to the front face of a resin substrate having fastener elements, in many cases without adhesives and while the substrate and fastener elements are themselves being formed, eliminating a post-forming attachment step. The method does not require the loop material to have a variable fiber density to provide for variable resin penetration, and can therefore accommodate and locally bond loop materials having a homogeneous fiber density. As fibers of the loop material are, in many instances, directly encapsulated within resin of the substrate, undesirable delamination of loop material from the substrate is avoided during high peel loads. And, as the fastener elements are, in many cases, integrally molded with the substrate, delamination between the fastener elements and the substrate is also avoided. The fastener elements and resin substrate (including any tear strip features such as ribs and grooves appropriate for closure strips) can be molded in a single continuous process from the same flow of resin, with the loop material fed right through the substrate-forming gap or nip on the side of the resin adjacent the fastener element-forming mold roll.

By appropriately controlling the forming speed and resin temperature and pressure (the optimal values of which are interdependent and will depend on the type of resin employed and the geometry of the product, as will be understood by those of normal skill in the art), the resulting penetration of substrate resin into the loop material may be controlled so as to not completely flood the exposed surface of loops with resin. In many applications, the use of appropriately contoured staking rings in the region of the mold roll adjacent the loop material can help to form a pattern of lofted regions of loop material, which are less penetrated by resin than other areas. Such lofted regions can extend loops for ready engagement by fastener elements.

The apparatus of the invention can provide an efficient means of carrying out the steps of the inventive method described above, to produce a continuous strip of fastener product.

Other features and advantages will be apparent from the following detailed description and attached drawings, and from the disclosures of our earlier U.S. patent applications incorporated by reference above.

Other features and advantages of the invention will be apparent from the following description of embodiments, and from the claims.

### BRIEF DESCRIPTION OF THE DRAWINGS

Fig. 1 is a perspective view of a composite touch fastener in the form of a closure strip.

Figs. 1A and 1H are enlarged views of areas 1A and 1H, respectively, in Fig. 1.

Figs. 1B through 1G illustrate the structure of area 1A in various other closure strip embodiments.

Fig. 2A illustrates the application of fill-shifting loads in a bag having the closure strip of Figs. 1 and 1B.

Fig. 2B illustrates the application of peel force to the closure strip of Figs. 1 and 1B.

Fig. 2C illustrates another closure strip configuration providing an inner/outer peel preference.

Fig. 3 is a cross-sectional view of the closure strip, folded and installed at the opening of a bag in a sealed condition.

Figs. 4A and 4B illustrate a bag with the closure strip of Fig. 1, in sealed and opened conditions, respectively.

Fig. 5 is an enlarged cross-sectional view of the outer edge of the closure strip being grasped to open the bag.

Fig. 6 is a perspective view of a closure strip having a paper backing.

Fig. 7 illustrates a first method and apparatus for forming composite touch fastener tapes, such as the closure strips of Figs. 1 and 6.

Fig. 8 is an enlarged, unsealed view of the forming nip of the apparatus of Fig. 7.

Fig. 9 is a highly enlarged view of the loop material securing region of the nip of Fig. 8.

Fig. 9A illustrates an alternative arrangement of the loop material staking region.

Fig. 10 is an enlarged view of a portion of the outer edge of a staking ring.

Fig. 11 illustrates a second method and apparatus for forming composite touch fastener tapes, such as the closure strips of Figs. I and 6.

Fig. 12 shows a nip formed between a mold roll and a contoured pressure roll.

Fig. 13 is a transverse cross-section of a composite fastener tape formed in the nip of Fig. 13.

Fig. 14 illustrates a first vertical form/fill bag-making apparatus.

Fig. 15 illustrates a second vertical form/fill bagging apparatus, configured to accommodate the closure strip of the invention.

Fig. 15A is an enlarged view of the means for joining the closure strip to the bag web in Fig. 15, with portions removed to show the configuration of the insulator rail and sealing jaws.

Fig. 16 is a cross-sectional view, taken along line 16-16 in Fig. 15.

Fig. 16A is a cross-sectional view, corresponding to Fig. 16, with an inverted closure strip arrangement.

Fig. 17 shows a first inverted horizontal form/fill packaging apparatus and method, with the closure strip fed into the fin seal between the web flanges.

Fig. 17A is a cross-sectional view, taken along line 17A-17A of Fig. 17.

Fig. 18 shows a second inverted horizontal form/fill packaging configuration, with the closure strip wrapped about the web flanges.

Fig. 18A is a cross-sectional view, taken along line 18A-18A of Fig. 18.

Fig. 19 shows a third horizontal form/fill packaging method, with the fin seal formed on the underside of the packages.

Fig. 20 shows an apparatus and method for forming bags to be filled from an open end opposite their closures.

Fig. 21 is a cross-sectional view, taken along line 21-21 in Fig. 20.

Fig. 22 is an enlarged view of area 22 in Fig. 20, showing the configuration of the closure as applied to the web.

Fig. 23 shows one configuration of an edge seal formed between two adjacent bags in the process of Fig. 20, for forming exposed closure pull tabs.

Fig. 24 illustrates opening a bag with an exposed closure pull tab, such as formed from the edge seal configuration of Fig. 23.

Fig. 25 shows another method for forming pouches, in which the closure strip is bonded to the edges of a sheet of bag film as the film is folded.

Fig. 26 illustrates making recloseable bags from two parallel plastic webs and a closure strip.

Fig. 26A shows a bag made by the process of Fig. 26.

Fig. 27 shows a package having a broad closure strip displaying consumer information.

Fig. 28 is a transverse cross-section through the closure strip included in the package of Fig. 27.

Figs. 29 and 30 are enlarged views of areas 29 and 30, respectively, in Fig. 28.

Fig. 31 is a cross-section through a bag having a closure strip with exposed loop-engageable elements extending from an outer bag surface.

Fig. 32 illustrates a method and apparatus for forming the closure strip of Fig. 31.

Fig. 33 is a partial outer view of an upper corner of a pouch having a recloseable top.

Fig. 34A is a side cross-sectional view of the pouch of Fig. 33, taken along line 34A, showing the structure and attachment of the closure strip.

Figs. 34B and 34C sequentially illustrate the opening and reclosing of the pouch of Fig. 34A.

Fig. 35A is a cross-sectional view through the closure end of a roll-top bag.

Figs. 35B through 35D sequentially illustrate the opening and reclosing of the bag of Fig. 35A.

Fig. 36 is a cross-sectional view through the closure end of a bag with an inverted closure.

Fig. 37 illustrates a method and device for attaching the closure strip to the bag of Fig. 36.

Figs. 38A-38C show rolled bag films with pre-applied closures, in various configurations.

Fig. 39 is a perspective view of a reclosable bag.

Fig. 40 illustrates the bag of Fig. 39 being opened by pinching and pulling.

Fig. 41A is a cross-sectional view of the closure end of the bag, taken along line 41A-41A in Fig. 39.

Fig. 41B shows the bag cross-section of Fig. 41 A with the bag initially opened and then folded about the opening to engage the fastener elements of the closure.

Fig. 42 illustrates the closure, in transverse cross-sectional view, before being attached to bag material.

Fig. 43 is an enlarged view of area 43 in Fig. 42.

Fig. 44 is a cross-sectional view, taken along line 44-44 in Fig. 43.

Fig. 45 is a cross-sectional view similar to Fig. 41A but of a bag having an edge pull tab along the lower closure edge.

Fig. 46 is a perspective view of another bag, having a front face pull tab.

Fig. 47 shows a bag having a closure tear rib with a graspable end.

Fig. 48 illustrates a third vertical form/fill bagging apparatus and method, in which the closure strip is applied to the bag film before the film is wrapped about the forming head.

Fig. 49A is a cross-sectional view, taken along line 49A-49A in Fig. 48.

Fig. 49B is taken from the same perspective as Fig. 49A, with a different closure strip configuration.

Figs. 50A and 50B show closure strips with peelable seals.

Fig. 51 shows a hook-to-hook engagement between facing bands of oppositely-directed, hook-shaped fastener elements.

Fig. 52 is a cross-sectional view, taken along line 52-52 in Fig. 51.

### DESCRIPTION OF EMBODIMENTS

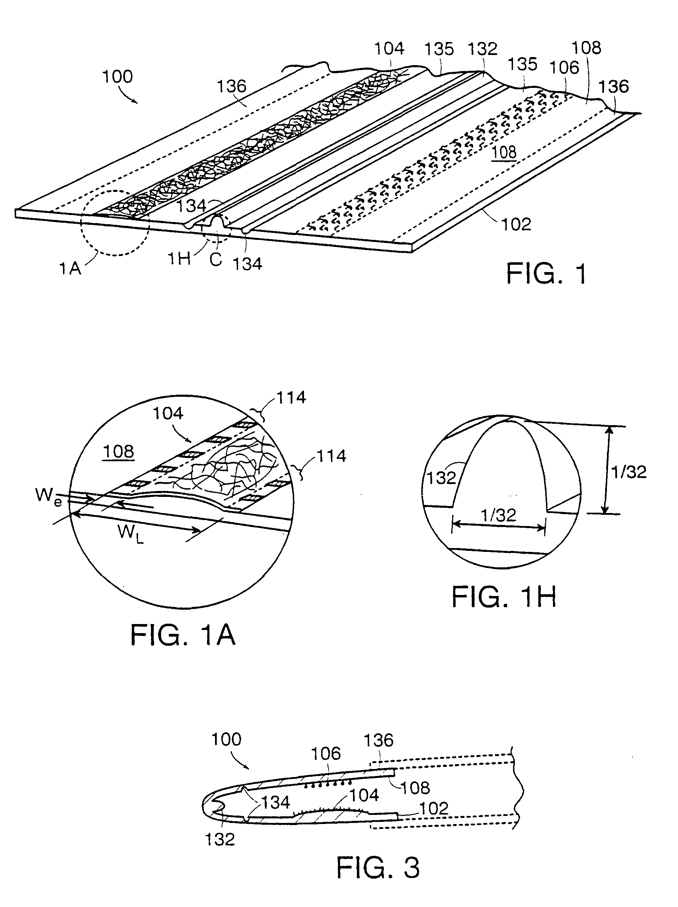

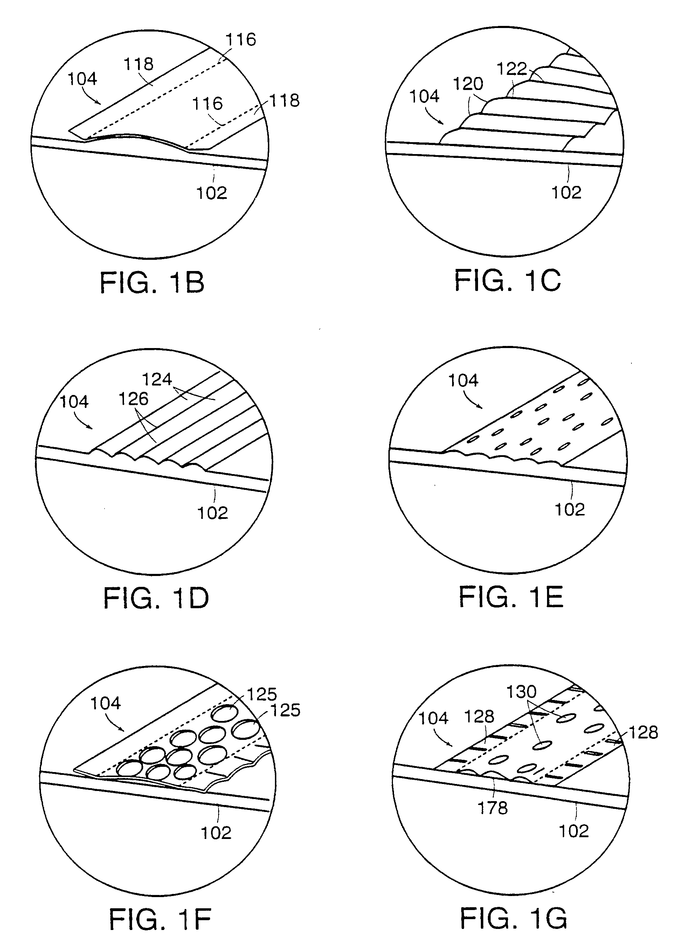

Referring to Fig. 1, a lengthwise-continuous closure strip 100, such as for sealing a bag, consists of a thin, sheet-form resin substrate 102 with lengthwise-continuous, parallel bands 104 and 106 of loops and fastener elements, respectively, on its front face 108. Bands 104 and 106 are equally spaced from the center "C" of the closure strip, such that when the strip is folded longitudinally at "C" to cover front face 108, the fastener elements of band 106 engage and retain the loops of band 104 to form a releasable fastening. The fastener elements 110 of band 106 are integrally molded with and extend from front face 108. In this embodiment, these fastener elements are in the form of J-hooks that extend, in rows, along the length of the closure strip. Some of the J-hooks face in opposite directions along the strip. Other fastener element shapes may also be employed, including those that overhang the substrate 102 in a widthwise direction. A suitable fastener element shape is the CFM29 hook shape (of about 0.015 inch or 0.38 mm in height), available in various products sold by Velcro USA in Manchester, New Hampshire.

Band 104 of loops consists of a preformed, non-woven web of polymer fibers, which may include a stabilizing binder, and which are bonded to front face 108 of substrate 102 at various points across the width and length of the web.

Suitable loop materials include those disclosed in U.S. Patent application 08/922,292, and in the related PCT patent application PCT/US98/18401, filed as a continuation in part of the foregoing application, the entire disclosures of which are hereby incorporated by reference as if fully set forth.

Preferably, the non-woven loop material in band 104 is very thin, such as less than about 0.040 inch or 1.0 mm thick (more preferably, less than about 0.020 inch or 0.5 mm thick), with web fibers held in a transversely stretched condition and freestanding loop structures extending from its exposed surface. As discussed in the above-referenced patent applications, the loop structures extend from associated knots in the stretched web, which may be stabilized by liquid binder wicked into the knots and cured. Between knots, the thin fiber mat is not very dense and is sheer enough to permit images to be readily seen through it. Overall, the loop material has a basis weight (in its preformed state, including any pre-applied binder) of less than about 4 ounces per square yard (136 grams per square meter), preferably less than about 2 ounces per square yard (68 grams per square meter). Other details of this loop material may be found in the above-referenced applications. For applications in which the loop material is partially penetrated by resin of the substrate as the substrate is formed (as discussed below), the needled loop material is preferably only stretched in a transverse direction only about 22 percent to leave a fair amount of loft and avoid total penetration.

In some instances, loop material 104 is partially encapsulated directly in resin of the substrate as the substrate is formed in a continuous molding process (described below). In other cases, it is bonded to the formed substrate, either by ultrasonic bonding, welding, or adhesives.

Some lightweight knits are also suitable loop materials for certain applications. Examples of such knits are Product 19902 from Guilford Knits in Greenville, South Carolina, which is of polyester fibers and has a basis weight of only about 1.6 ounces per square yard (54 grams per square meter). For a heavier knit, we prefer Guilford's Product 19029, a nylon knit of about 3.3 ounces per square yard (112 grams per square meter). Lightweight knit products are also available from TYBOR in Spain, and MIZARD in Italy.

Figs. 1A through 1D illustrate various patterns of variable bonding between loop material 104 and substrate 102. Such variable bonding patterns correspond, in some cases, to variable resin penetration into the web of the loop material, which may be achieved by employing different arrangements of staking rings and/or barrier materials between the loop material and substrate, both of which are discussed further below. In Fig. 1a, loop material 104 is only fully penetrated by substrate resin in narrow edge regions 114, and is less penetrated at its center. For instance, if loop material is about 3/4 inch (19 millimeters) wide (W_{L}), then fully penetrated edge regions 114 may have a width of only about 1/8 inch (3.2 millimeters) (wₑ). The center region of the loop material is less penetrated and gently arches away from the substrate, presenting the loops for engagement The inclined sides of the center arch can also help to enhance the peel strength of the fastening at the edges of the loop material, as they resolve a small component of the peel force in a tangential, or shear, direction.

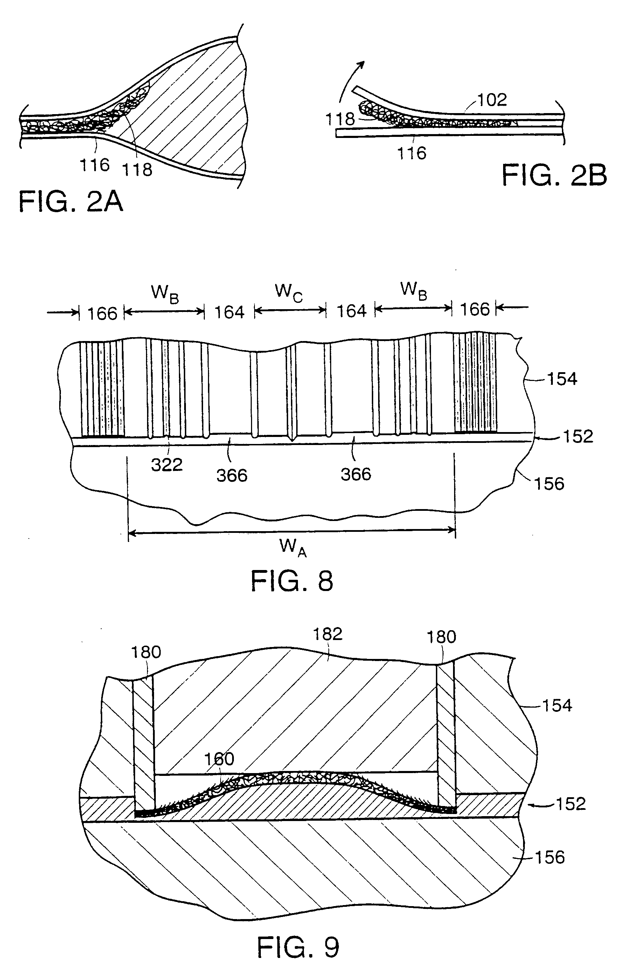

In Fig. 1B, the loop material is fully bonded to the substrate in narrow bands 116 spaced inward from its edges, leaving edge regions 118 relatively lightly bonded, or even loose. One advantage of this bonding pattern is that the inner edge region 118 on the inside of the associated bag helps to deflect separation loads caused by shifting bag contents, which would otherwise generate high peel forces between the fastener elements and the loops, into separation forces between the loop material and substrate (as illustrated in Fig. 2A). The high bonding strength of inner band 118 helps to avoid delamination of the loop material from the substrate. Another advantage of this bonding pattern is that it enhances initial peel strength of the fastening, as the outer edge region 118 of the loop material follows the fastener elements during peel until it is separated in shear (Fig. 2B).

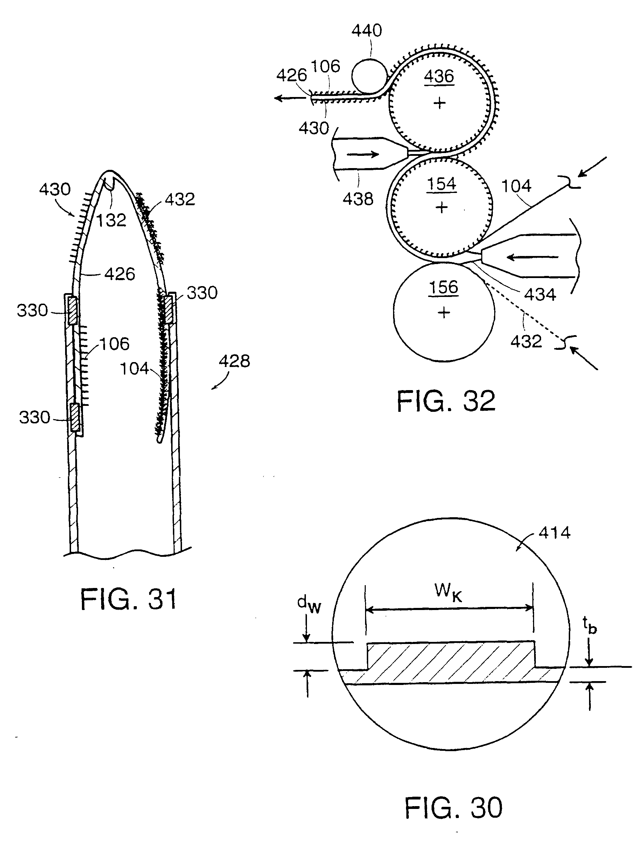

Having only one inner edge region 118 unbonded can in some instances provide better inner opening resistance (e.g., from content shifting) than having both inner edge regions free. We presently prefer to leave only the edge of the loop side of the closure strip unattached to the bag web in most cases, as shown in Fig. 31 (discussed below), with the hook side edge bonded to the inner surface of the bag web.

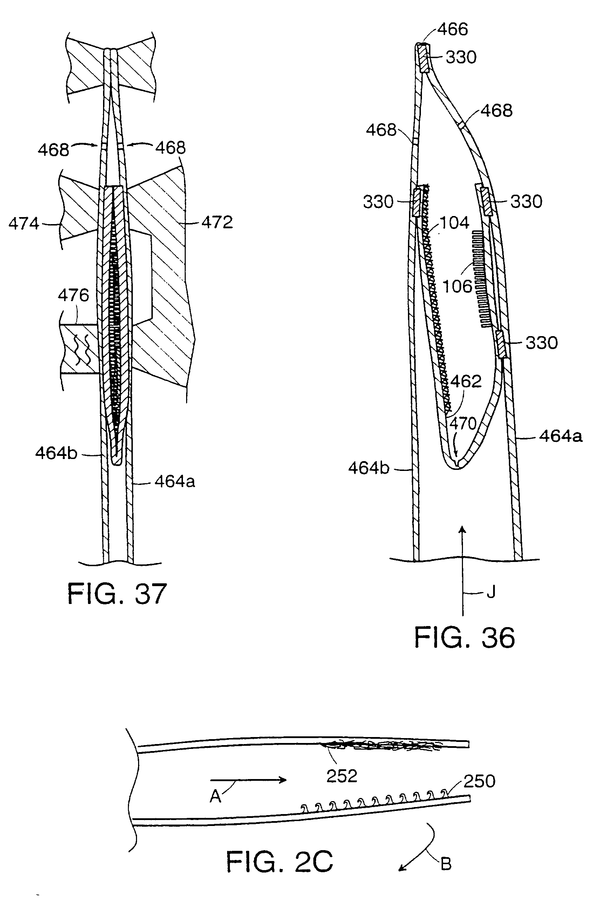

Another closure arrangement for providing good resistance to being opened from inside the bag but readily opened from outside the bag is shown in Fig. 2C. All of the hook elements 250 are arranged with their loop-engaging tips facing the inside of the bag, providing a difference in inside and outside peel resistances. With the hooks fully engaging the loops of loop material 252, peel forces applied to the closure by movement of bag contents in the direction of arrow "A" are resisted to a greater degree than user-applied peel forces in the direction of arrow "B".

The pattern of variable bonding shown in Fig. 1 C creates transverse pillows 120 of relatively lightly bonded, or loose, loop material separated by transverse bands 122 of relatively more fully bonded (e.g., more deeply encapsulated) loop material. The loftiness of pillows 120 is exaggerated for illustration. This pattern provides some of the peel-enhancing and load-shifting advantages of the pattern of Fig. 1B, due to the "free" pillow ends along the inner and outer edges of the loop material.

Fig. 1D illustrates a bonding pattern with longitudinal pillows 124 of relatively lightly bonded, or loose, loop material, separated by longitudinal bands 126 of relatively more fully bonded (e.g., more deeply encapsulated) loop material. Again, the loftiness of the pillows is exaggerated for illustration. Fig. 1E is a variation of the pattern of Fig. 1D, with each longitudinal band of more fully bonded material separated into longitudinally alternating regions of light and heavy bonding. The regions of light and heavy bonding are staggered across the loop material, producing a checkerboard pattern of lofted loop pillows. In the pattern illustrated in Fig. IF, the center region of loop material 104 is heavily bonded to the substrate about the peripheries of spaced apart, circular lofted regions 125 which are less firmly bonded. The exposed surfaces of the lofted loop pillows 125 extend outward to present loops for engagement. Other shapes of lofted regions 125, such as ovals, may also be employed. One of the edge regions of the loop material of Fig. IF is similar to the edge regions shown in Fig. 1B, while the other forms transverse pillows similar to those of Fig. 1C. Fig. 1G shows a bonding pattern with edge regions 128 of alternating light and heavy bonding, and a center region bonded in only isolated regions 130. The bonding patterns described above may be mixed and varied for different applications, as required.

As an alternative to feeding a preformed sheet of loop material into a forming nip to create the loop band 104 of the closure strip, engageable loops may be formed subsequent to forming the base of the closure strip by stitching loops directly into the base (as in a MALAMO process), or by bonding a strip of loop material to the face of the closure strip.

Referring back to Fig. 1, molded into the front face 108 of substrate 102 along its center is a hump-shaped longitudinal rib 132 between a pair of grooves 134 molded into front face 108. As shown in Fig. 1H, one example of this rib 132 has a height of about 1/32 inch (0.8 millimeter) and a width of about 1/32 inch (0.8 millimeter) at its base. The rib may have a hump-shaped profile, as shown, or a rectangular cross-section with parallel sides. The rib is preferably longitudinally continuous, as shown, but may alternatively be formed as a row of appropriately shaped protrusions. At least one of the flat regions 135 between grooves 134 and the loop and hook bands 104 and 106 in Fig. 1 contains, in some cases, a layer of adhesive such as a pressure sensitive adhesive (not shown), for providing a reclosable seal for applications where a resealable opening is desired. In these instances surfaces 135 provide an airtight, non-ventilated seal when the bag is closed, and supplement the mechanical closure strength of the hook and loop fasteners. Preferably, an adhesive is employed which has been compounded so that it sticks primarily only to itself or to the opposing face of the substrate, so as to not pick up excessive debris from the bag contents. In other, non-illustrated embodiments, either grooves 134 or rib 132, or both, are formed on the back face of the substrate, opposite the fastener elements and loop material.

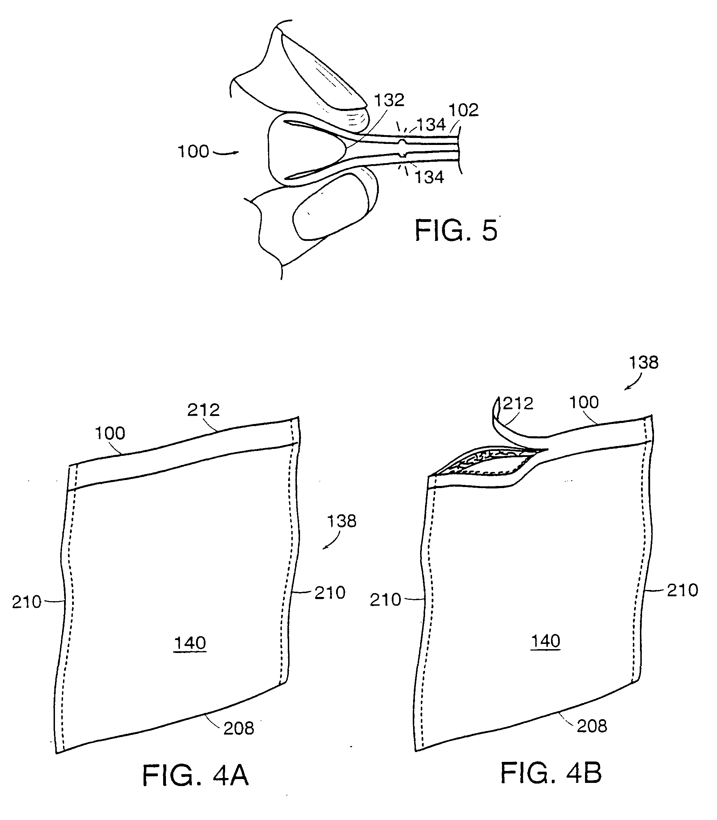

The formed closure strip 100 is permanently installed at the openable end of a bag by attaching edge regions 136 of the closure strip to outer edges of the bag at its opening, with the loop and hook bands facing each other, as shown in Fig. 3. The bag may be attached to the back face of the closure strip as shown, in which case edge regions 136 are defined on the back face of the closure strip, or on the front face, with the edges of the bag on the inside. Methods of attaching the closure strip to the bag include, but are not limited to, welding, gluing, adhering or stitching. One preferable method of attaching a closure strip to a bag of a compatible resin is by directly welding the resin of the closure substrate to the resin of the bag, as discussed below. In this manner, polyethylene closure strips may be readily welded to polyethylene bags.

Fig. 4A illustrates a sealed bag 138 having a polyethylene body 140 welded to closure strip 100 across its openable end. Preferably, the thickness of the substrate of the closure strip is about the same as the thickness of the material of the bag body, in the range of 0.002 to 0.005 inch (0.05 to 0.13 millimeter). Substrates of up to at least 0.015 inch (0.38 millimeter) in thickness, however, may be produced by the methods described below. To initially break the seal and open the bag, the outer fold of closure strip 100 is grasped and pulled, thereby tearing the folded edge from the bag from one end of the bag to the other, as shown in Fig. 4B. In grasping the outer fold of the closure strip, the middle rib 132 is grasped between the thumb and forefinger. Rib 132 thus provides an edge of increased thickness for easy grasping. As the folded edge of the closure strip is torn away, the closure strip tears along grooves 134. Grooves 134 function as frangible tear points for initially opening the associated bag, and may be straddled by an associated local thickening of the substrate, such as in the form of ribs or rows of raised bumps (not shown) to direct the propagation of the tear along the grooves.

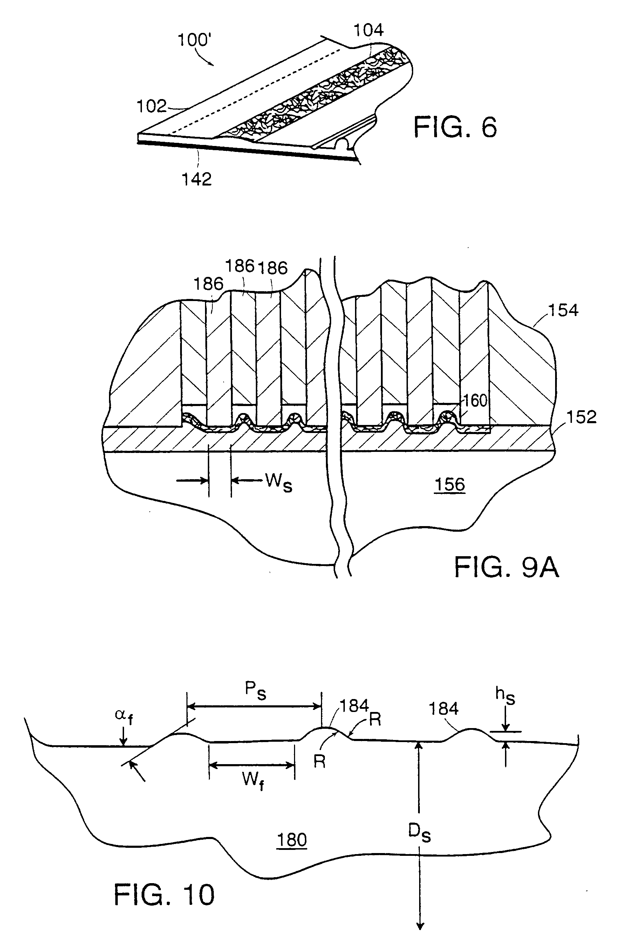

Preferably, the resin of the substrate of the closure strip is compatible with the resin of the bag body, to enable direct welding of the two together. In situations where this is not practical, a separate layer of a bag-compatible material may be provided on the closure strip. For example, a layer of paper 142 may be bonded to either the front face of the closure strip (e.g., in edge regions 136 in Fig. 1), or across the back face of the closure strip as shown in Fig. 6, or along just the edges of the back face of the closure strip (not shown). The paper 142 may be directly bonded to the resin of the substrate (e.g., during the forming of the substrate, as described below), or joined with adhesive after the substrate is formed.

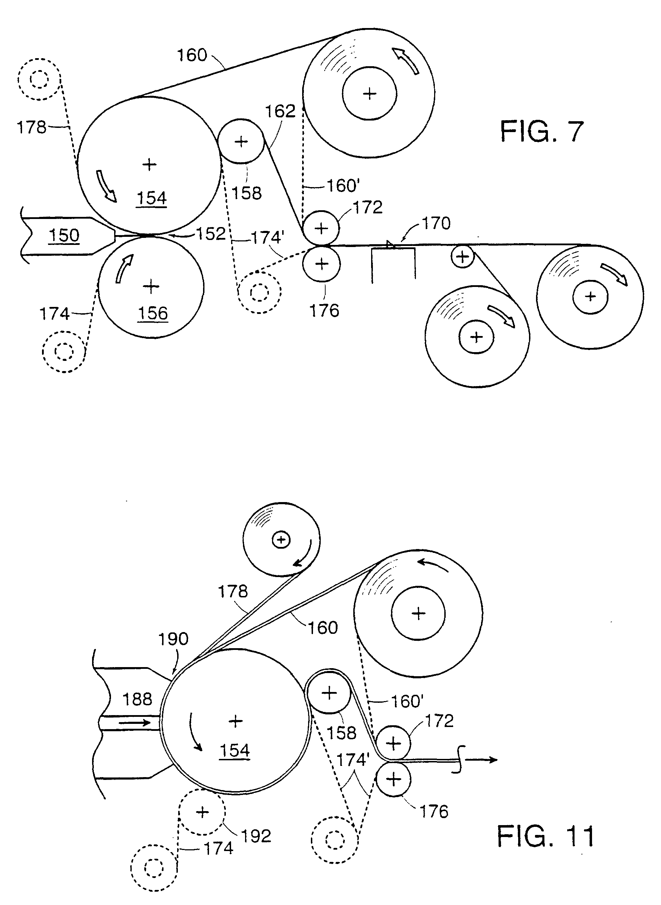

Fig. 7 illustrates one method and apparatus for producing the above-described closure strips. The method builds upon the continuous extrusion/roll-forming method for molding fastener elements on an integral, sheet-form base described by Fischer in U.S. Patent 4,794,028, and the nip lamination process described by Kennedy, et al. in U.S. Patent 5,260,015, the details of both of which are incorporated herein by reference. The relative position and size of the rolls and other components is not to scale. An extrusion head 150 supplies a continuous sheet of molten resin to a nip 152 between a rotating mold roll 154 and a counter-rotating pressure roll 156. Mold roll 154 contains an array of miniature, fastener element-shaped mold cavities extending inward from its periphery (not shown) for molding the fastener elements. Pressure in nip 152 forces resin into the fastener element cavities and forms the substrate. The formed product is cooled on the mold roll until the solidified fastener elements (e.g., hooks) are stripped from their fixed cavities by a stripper roll 158. Along with the molten resin, a continuous strip of loop material 160 (which becomes loop band 104 in Fig. 1) is fed into nip 152, where it is partially impregnated by resin and becomes permanently bonded to the front face of the substrate. Thus the product 162 that is stripped from the mold roll includes both fastener elements and loops.

For higher production rates, two or more widths of closure strip may be simultaneously produced on a single mold roll, and later split and spooled. Referring also to Fig. 8, two strips 160 of loop product are fed in parallel into positions 164 along nip 152. Molten resin is introduced across the entire nip, forming two bands of hooks in regions 166. Mold roll plates of appropriate widths and edge configurations are arranged to produce the ribs and grooves at the center of each closure strip. A splitting channel ring at the center of the mold roll produces a splitting channel in the product, along which the resulting tape is split by a blade 170 (Fig. 7; either stationary or rotating) into two separate runs of closure strip which are separately spooled. In some configurations, a wide section of the mold roll surface is defined by a single, solid roll sleeve having a profiled outer surface for forming one or more of the series of features extending along the closure strip. For instance, in one arrangement, the entire width WA of the mold roll surface between the hook bands is defined by a single sleeve having a ground circumferential profile defining all features between the hook bands. When thin staking rings (discussed below) are employed in the loop material regions 366, widths WB and Wc of the mold roll surface are preferably formed by solid, wide mold roll sections. Employing such wide plates provides additional resistance to mold roll bending loads caused by molding nip pressures, enabling wider product widths to be formed without excessive product thickness variations.

Fig. 7 also indicates several variations of the above-described method. For instance, rather than introduce the loop material 160 through nip 152 and thereby join it to the substrate as the substrate is molded, the loop material may be joined to the substrate after the substrate has been formed, such as is indicated by the run 160' of loop material shown in dashed outline. In this case, front face idler 172 is heated and has a contoured surface for producing the desired pattern of bonding between the loop material and the substrate. Paper may be joined to the back face of the substrate, to produce the product shown in Fig. 6, by either running a strip 174 of paper through nip 152 on the pressure roll side of the resin, or by adhering adhesive-coated paper 174' to the formed substrate either at stripping roll 158 or at idler 176. In some cases, adhesive-coated paper 174' includes a transfer coating, such that its paper backing may be peeled from the adhesive on the back of the product to secure the back of the final product to a supporting surface. The adhesive applied to the back of the product in this manner may be either a pressure-sensitive or heat-activated adhesive, for instance. For decreasing the permeability of the final product, a second flow of resin (either molten or in the form of a film) may be added to the nip against pressure roll 156, as strip 174 is shown, to form a backing on the final product. For instance, a layer of polyester may be added to reduce the permeability of a polyethylene closure strip, such as for packaging certain foods. Adding a strip of barrier material 178 between the loop material and the molten resin optionally controls the pattern of penetration of resin into the loop material in nip 152. Barrier material 178 is, in some instances, a perforated paper or film that allows resin to pass into the loop material in selected regions but inhibits its flow into other regions, such as for producing the bonding pattern of the center region of loop material shown in Fig. 1G. The barrier material may also be a homogeneous sheet of material having a high porosity, equally limiting the penetration of resin into the loop material across the width of the barrier material. Rather than be introduced as a separate sheet, in some cases the barrier material is pre-applied to the surface of loop material 160 and may be in the form of a binder located in discrete areas of the loop material and locally encapsulating fibers of the loop material, for instance. In many cases, the barrier material is narrower than the loop material, and centered along the width of the loop material, to enable full penetration of resin into the edges of the loop material. In some cases, however, as to produce the bonding pattern of Fig. 1B, for instance, thin strips of barrier material are run into the nip along the edges of the loop material to inhibit the bonding of edge regions 118 (Fig. 1B) to the substrate. Other arrangements of barrier and loop materials, and resulting bonding patterns, will be apparent upon reading this disclosure. In all cases in which the barrier material becomes permanently bonded to the substrate and therefore becomes an integral part of the final product, it should be selected for its low material cost and weight.

Fig. 9 illustrates the bonding of the loop material 160 to the resin of the substrate in area 164 of nip 152 (Fig. 8). "Staking" rings 180 on either side of a reduced diameter plate 182 engage the edges of the loop material to locally hold the edges of the loop material against the resin of the substrate as the resin forms the substrate under nip pressure, thereby ensuring heavy penetration of the loop material in predetermined areas along its edges. This configuration shown in Fig. 9 produces the bonding pattern illustrated in Fig. 1A, the staking rings 180 forming heavily bonded edge regions 114, the width Wₑ corresponding to the width of the staking ring. The staking rings may extend slightly beyond the nominal mold roll diameter, as shown in Fig. 9, or be flush with adjoining mold roll rings (as shown in Fig. 9A, for example).

To form a row of heavily bonded points separated by regions of lower resin penetration, some staking rings 180 have a contoured outer edge as shown in Fig. 10. A series of protrusions 184 extending beyond the nominal diameter Dₛ of the staking ring cause the resin to locally penetrate farther into the loop material. In this example configuration, Dₛ is 9.968 inches (25.32 centimeters), the height (hₛ) of each protrusion 184 is 0.014 inch (0.36 millimeter), and the inner and outer radii (R) at the flank of each protrusion is 0.015 inch (0.38 millimeter). The protrusion pitch (Pₛ) is 0.190 inch (4.8 millimeters), and the length of the flat between protrusions (w_{f}) is 0.130 inch (3.3 millimeters). The dimensions of the protrusions are selected to attempt to optimize the maximum approach angle α_{f} of the protrusion flank with respect to a local ring tangent. A steep approach angle (i.e., an abrupt change in ring diameter) can cause a sharp local increase in nip pressure and an undesirable local flooding of the front side of the loop material with resin. Such flooded areas can create local "depth stops" to mating fastener elements, reducing the fastener element penetration into the loop material. A zero approach angle (i.e., no protrusions) would result in a homogeneous resin penetration beneath the staking ring, which may not be as desirable as local loop material "pillowing" (discussed above) in some applications. The maximum approach angle α_{f} in the illustrated staking ring embodiment is about 40 degrees. A shallower angle (e.g., of about 30 degrees) may be preferable in some cases, as may a longer spacing w_{f} between protrusions to provide longer, lofted pillow regions.

Fig. 9A shows a staking ring configuration for producing the bonding pattern shown in Fig. 1E. Staking rings 186 having the profile shown in Fig. 10 are stacked together with staggered protrusions, such that the pattern of heavily bonded regions resembles a checkerboard with elongated "pillows" extending outward between the heavily bonded regions. The width wₛ of each ring is about 0.018 inch (0.46 millimeter).

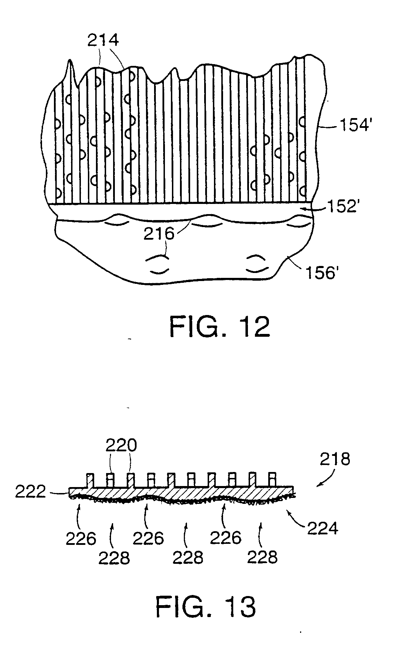

This in situ staking method for attaching loop material to the resin of a fastener substrate as the substrate is being formed has broad applicability to the production of composite touch fasteners. For example, Fig. 12 shows a nip 152' between a mold roll 154' and a pressure roll 156'. Mold roll 154' contains many thin fastener element molding rings 214, which may be alternated with spacer rings (not shown), to integrally mold fastener elements extending from one side of a sheet-form base as taught by Fischer. In this case, however, pressure roll 156' has a pattern of protrusions 216 extending from its otherwise smooth surface. The protrusions locally narrow gap 152' in discrete regions, causing a variation in nip pressure during formation of the fastener tape. Running a fibrous preformed material through the nip against the pressure roll with the molten resin, as taught by Kennedy, et al., will, in this configuration, cause fibers of the preformed material to be encapsulated more fully in the resin in areas corresponding to protrusions 216. This in situ "staking" method is particularly useful when the fibrous preformed material is a very porous, thin material such as a needled non-woven web with a low basis weight. The pattern of protrusions on the pressure roll is selected to form an inverse pattern of lofted "pillows" of loop material at most only partially encapsulated in the substrate resin.

Fig. 13 is a transverse cross-section of a composite fastener tape 218 produced in this fashion, having an array of hook-shaped fastener elements 220 extending from one side of the substrate 222, and a lightweight, non-woven web of loop material 224 permanently bonded to an opposite side of the substrate. Loop material 224 is coextensive with the substrate in this case (i.e., it extends across the full width of the substrate), but is fully encapsulated in substrate resin only in discrete regions 226. Between regions 226, the loop material forms the above-described "pillows" 228, or lofted regions, which are not fully encapsulated in resin. The loft of pillows 228 enables the heads of fastener elements 220 to penetrate the loop material and engage individual fibers during fastening. A similarly contoured pressure roll 156' (Fig. 12) may also be employed to attach a strip of loop material to the fastener element side of a fastener tape.

Fig. 11 illustrates an alternative method and apparatus for forming the above-described closure strips. The contoured surface of an extrusion head 188 (sometimes called an injection head) is placed adjacent a mold roll 154 (with fixed fastener element molding cavities as described above with respect to Fig. 7), and a continuous flow of molten resin is injected under pressure into the gap 190 defined between head 188 and mold roll 154, filling the fastener element cavities and forming the front and back faces of the substrate. The configuration and construction of mold roll 154 is the same as is shown in Fig. 8, in which member 156 may be taken to be the adjoining extrusion head. The strip 160 of loop material is fed through a predetermined region of gap 190, and held up against the surface of mold roll 154 by resin pressure in the gap. In this manner, the loop material is partially impregnated with substrate resin and permanently bonded to the front face of the substrate. In applications where it is not possible to fill the fastener element cavities without completely saturating the loop surface of the loop material with resin, a strip of barrier material 178 may be fed through gap 190 between head 188 and loop material 160. Barrier material 178 is discussed in more detail above with respect to Fig. 7. For some applications a strip 174 of paper or other suitable backing material is laminated to the back face of the substrate while the molded product is retained on mold roll 154, by pressure supplied by a pressure roll 192, as shown in dashed outline. Alternatively, a strip of adhesive-coated paper 174' may be adhered to the formed substrate either at stripping roll 158 or at idler 176.

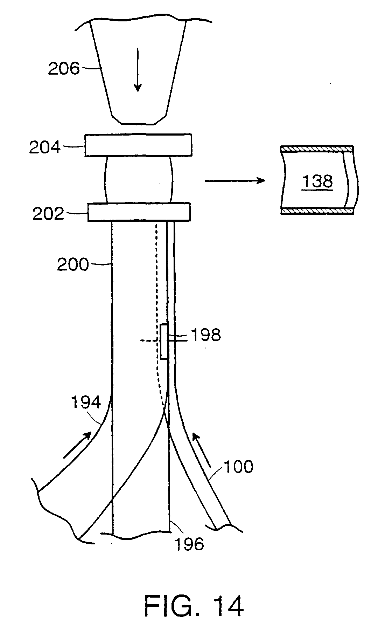

Fig. 14 illustrates an inverted vertical form/fill (VFF) method and apparatus for forming and filling bags (such as bag 138 of Fig. 4A). Closure strip 100 and a sheet of bag material 194 are each folded and fed about a longitudinal mandrel 196, with their edges overlapping at two points. In the embodiment shown, both the bag material 194 and the substrate of closure strip 100 are polyethylene. Two heated rollers 198 (only one visible from the perspective illustrated) weld the edges of the closure strip and bag material together to form a continuous tube 200 with two longitudinal sealed seams. In the apparatus shown, tube 200 extends upward through a lower sealing/cutting device 202 and an upper sealing device 204. In the bag forming and filling sequence, tube 200 is advanced upward until its open end is aligned with upper sealing device 204. Lower sealing/cutting device 202 then forms a transverse seal across the tube to form one sealed side of the resulting bag. The bag is then filled from above, through the still open end of the tube, with material supplied through chute 206. After a predetermined amount of material has been released into the bag, the open end of the tube is sealed by upper sealing device 204 to form a sealed bag 138, which is then severed from tube 200 by cutting the tube just below the previously formed transverse seal by lower sealing/cutting device 202. The resulting bag 138 has one edge 208 of folded bag material 194, two sealed edges 210, and one edge 212 of folded closure strip 100. Other methods of sealing closure strips to bag materials are known to those of normal skill in the art of bag making. For instance, for sealing the paper-covered surface of closure strip 100' (Fig. 6) to a paper bag material 194, a layer of adhesive would normally be applied between the overlapping paper edges of the closure strip and bag material.

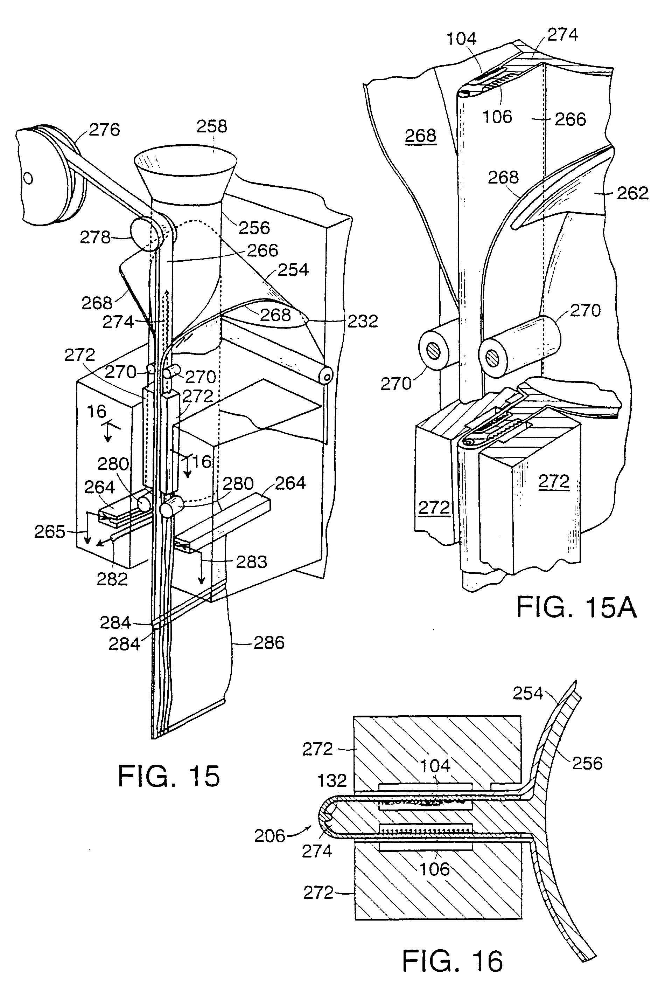

Fig. 15 illustrates a modification to a more common VFF machine configuration, for continuously securing the above-described closure strip to a flow of bag-forming web during the forming and filling of individual bags. The bag-forming web consists of a thin sheet of thermoplastic film 254 which is shaped into a tube by being fed over a filling tube 256, which has an upper funnel end 258 through which contents are discharged to fall into individual bags formed of the film. Film 254 is fed from a roll (not shown) over an attitude roller , and guided onto the fill tube by curved guide forms 262. In some cases, the film is advanced continuously and the transverse sealing jaws 264 (described below) reciprocate vertically, traveling with the film during the sealing/cutting process (as indicated by arrows 265); in other cases the film is advanced incrementally and the transverse jaws remain within the same horizontal plane.

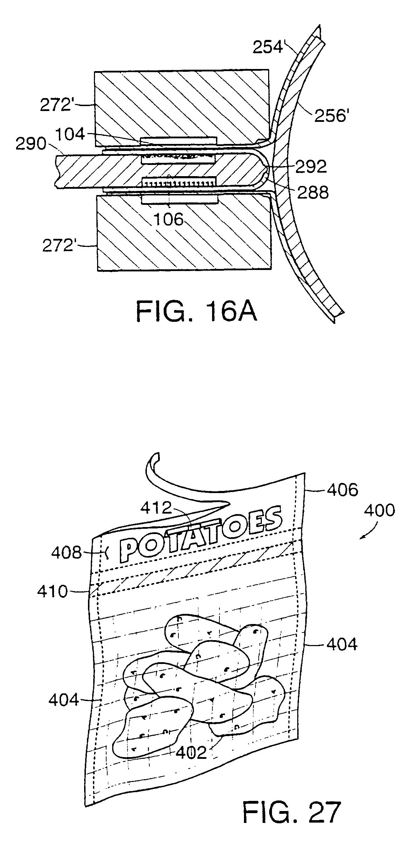

As film 254 is formed into a tube, its two longitudinal edges 268 form flanges extending generally radially from the tube, between which a continuous length of closure strip 266 is fed in a folded condition, such that the edge regions of the web film lie at least partially against the outer sides of the closure strip in face-to-face relation, but do not overlap the folded edge of the closure strip. Guide rollers 270 above the closure sealing bars 272 maintain the adjacency of the sides of the closure strip and the film edges. Closure strip 266 is fed over a contoured insulating rail 274 extending longitudinally along the fill tube from above guide rollers 270 to below closure sealing bars 272. As shown in Figs. 15A and 16, insulating rail 274 has a longitudinal groove along each of its sides. One groove accommodates the loop material 104 so as to avoid crushing the extended engageable loops, and the other groove receives the hooks 106 of the closure strip, helping to guide the closure strip through the sealing process. Rail 274 also has a notch extending along its distal end, for accommodating the middle grasp rib 132 of the closure strip. The primary purpose of insulating rail 274 is to inhibit undesired welding ofthe inner sides of the closure strip together as the edges of the bag film are welded to the outer surfaces of the closure strip by closure sealing bars 272 (see Fig. 16). When not employing an insulating rail, the closure strip may be configured to utilize the insulating properties of the loop material to avoid permanent welding together of the inner surfaces of the closure strip, as discussed more fully below.

Closure strip 266 may either be spooled from roll 276 over guide roll 278 in a folded condition, as shown, with its hooks and loops engaged and then pulled over insulating rail 274, thus separating the hook and loop sections of the closure strip, or the closure strip may be spooled flat and then folded about the insulating rail, thereby avoiding having to disengage the hook and loop sections in the process.

Closure sealing jaws 272 each have a longitudinal groove adjacent the longitudinal grooves of insulating rail 274, such that the heated sealing jaws slidingly contact the film edge regions only on either side of the hook and loop bands of the closure strip, sealing the film to the closure strip in two discrete bands on each side of the closure strip. Sealing jaws 272 have appropriate heating elements embedded within them (not shown) to maintain the sealing surfaces at a predetermined, elevated temperature. To leave the inner edge of the loop side of the closure strip free from the film to form an anti-peel flap (as discussed above with respect to Figs. 2A and 2B), the sealing jaw 272 on the loop side of the closure is at least partially recessed, as shown, to avoid bonding the inner edge of the loop side of the closure strip to the bag film. To form an even wider anti-peel flap, the sealing jaw 272 on the loop side of the closure may be configured to contact the bag film only outboard of the band of loop material 104.

Immediately below the lower edges of sealing jaws 272, insulating rail 274 terminates and the hook and loop bands of the closure strip are pressed together between a pair of rollers 280, just above the lower end of fill tube 256.

After a selected amount of contents have discharged through the lower end of the fill tube, transverse sealing jaws 264 come together about the bag film and closure strip and form two parallel, transverse seals 284, each of which will form the sealed edge of a bag. As jaws 264 travel with the advancing film, a cutting knife 282 within the jaws severs the film and closure strip between the transverse seals 284. When jaws 264 open at the end of the sealing cycle, a fully formed, filled and severed bag 286 is complete.

Fig. 16A shows another configuration of sealing a closure strip 288 to edge regions of a film web 254 as the film web is fed about a fill tube 256, for creating what we call an inverted closure having free outer edges and a recessed center portion. In this configuration the closure strip is guided over a separate insulating rail 290 that extends between the film edges and the opposing sides of the closure strip, similar in cross-section to the insulating rail of Fig. 16 but in opposite orientation. In this case closure strip 288 is provided with a center tear notch 292, rather than a center rib, along which the closure is burst to initially open the bag. In the bag formed with this style closure, the hook and loop elements are not exposed to the bag contents prior to the initial opening, and the center portion of the closure strip provides a tamper-evident seal. Closure strip 288 is permanently sealed to the bag film by heated sealing jaws 272' which are similar in construction to sealing jaws 272 of Fig. 16.

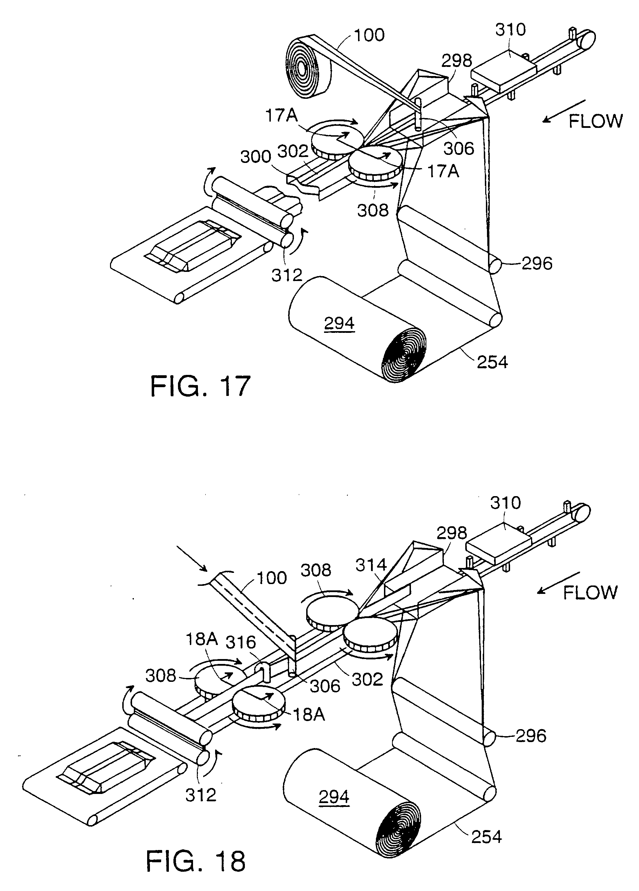

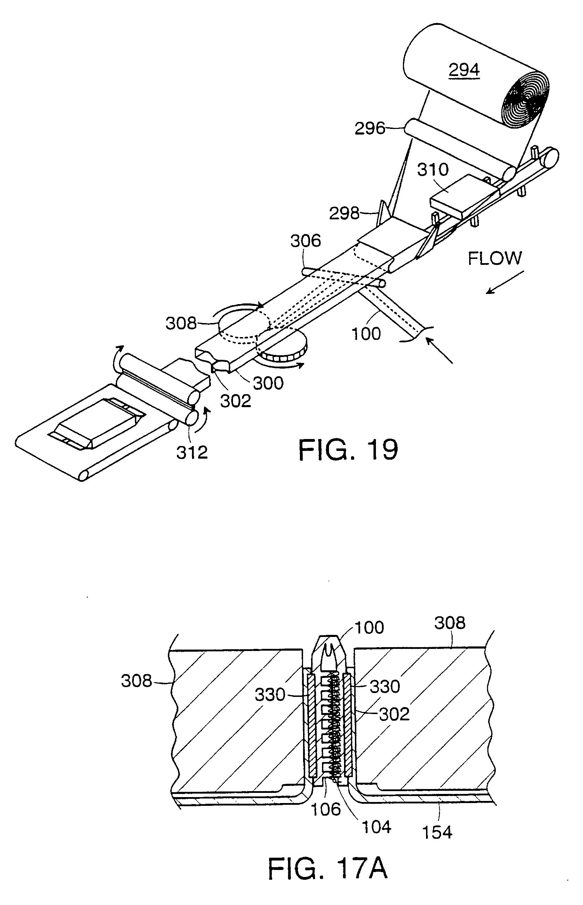

Figs. 17-19 illustrate three examples of horizontal form/fill (HFF) machines and processes featuring the above-described closure strips. Referring first to Fig. 17, a bag film 254 is continuously fed from roll 294 over attitude roller 296 and into a forming head 298 shaped to form the film into a rectangular tube 300. As with the VFF method described above, the edges of the film are brought together to form a perpendicular fin 302 extending from one side of the tube. In this case, closure strip 100 is fed from roll 304, folded to engage the hook and loop bands, passed about angled roller 306, and fed into the nip between heated fin seal rollers 308 between the edges of the bag film. Meanwhile individual products 310 to be packaged (e.g., trays of cookies) are fed through the forming head and into film tube 300 at a predetermined spacing and rate corresponding to the speed of the bag film.

As shown in Fig. 17A, the outer surfaces of folded closure strip 100 are permanently welded to the extending film flanges forming the perpendicular fin 302 of the film tube in the nip between fin seal rollers 308. No insulating rail is needed between the inner surfaces of the closure strip in this case because the air between the hooks and loops extending from the inner surfaces of the closure strip prevents extensive welding inside the closure strip. With proper adjustment of the temperature and pressure of rollers 308, which depends on the type of resin employed and the line speed, among other things, at most only a small fraction of the heads of hook elements in hook band 106 will be lightly bonded to either loop material 104 or the resin in which the loop material is embedded. This small amount of bonding will advantageously increase the amount of peel force required to initially open the package, leaving a sufficient proportion of undamaged hook elements to provide adequate engagement upon reclosure. We note that with many hook and loop resins, speeds, temperatures and pressures will have to be carefully adjusted and controlled to provide a light bond while avoiding rapid progression of hook melting.

Referring back to Fig. 17, diagonal offset folding rollers (not shown) fold over the fin seal, and a pair of offset rollers 312 carrying a heated seal bar and cutting blade seal the ends of the bags and sever the bags from each other.

Fig. 18 shows a similar HFF process, in which the closure strip 100 is folded over on the outside of both the bag film flanges and a fin seal insulating rail 314 that extends to just downstream of heated fin sealing rollers 308. Passed around angled roller 306, closure strip 100 is folded within a guide channel 316 such that the edges of the closure strip overlap the edges of the bag film, as shown in Fig. 18A. These overlapped regions are welded together on either side of insulating rail 314 by the fin sealing rollers, permanently bonding the closure strip to the bag film. As the fin seal is folded over before passing between offset rollers 312, the hook and loop bands of the closure strip are pressed together, before the inner surfaces of the bag film flanges are welded together at the end seals of the bag. The hook and loop bands may also be welded together at the end seals, if desired, by providing sufficient heat, pressure and dwell time of the portion of the heated sealing bar of the offset rollers that contacts the closure strip at the hook/loop interface.

Fig. 19 illustrates the incorporation of a reclosable closure strip into a more common HFF machine configuration, with the longitudinal fin seal 302 formed on the bottom side of the rectangular film tube 300. As in Fig. 18, closure strip 100 is folded about the outside of the extended film edge flanges, which are separated by an insulating rail (not shown) that extends through the nip between the fin sealing rollers 308.

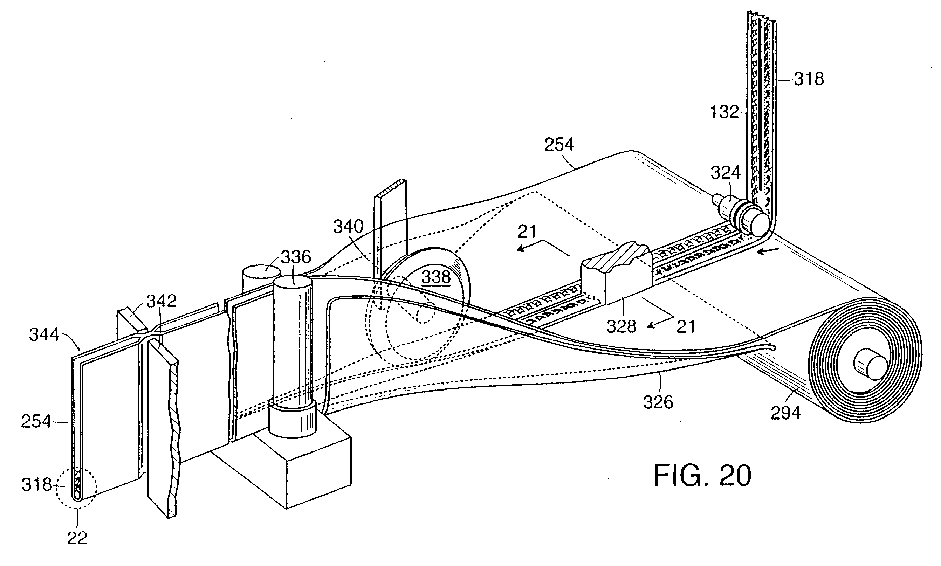

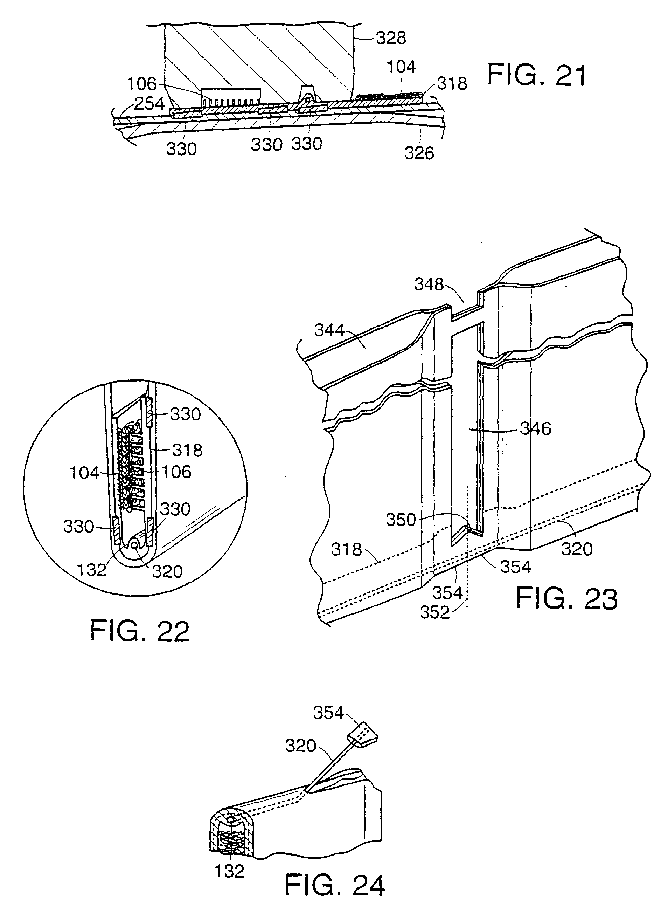

Fig. 20 shows another application of our closure strip in a bag-making process. Closure strip 318 differs from the closure strip shown in Fig. 1 only in that it contains a pull cord 320 (Fig. 22) embedded along its central rib 132. The pull cord is configured to tear through the closure strip and bag film longitudinally between the hook and loop bands when pulled transverse to the closure strip, and therefore must be of sufficient tensile strength to tear through the closure strip resin without breaking. Suitable pull cord materials include drawn nylons, such as fishing line, for example. The pull cord is embedded within the resin of the center closure strip rib by being continuously fed into the rib-forming channel 322 of the mold roll (Fig. 8) prior to the introduction of the rib-forming resin (such as along the feed path labeled 178 in Figs. 7 or 11). Appropriate guides (not shown) are recommended to keep the pull cord from walking out of the rib-forming channel.

Closure strip 318 is passed around a guide roller 324 to travel with bag film 254 onto a folding collar 326 where it is permanently bonded to the film under heat and pressure by a sealing shoe 328. As shown in Fig. 21, sealing shoe 328 slidingly engages the closure strip along three bands, forming three continuous welds 330 between the closure strip and bag film 254. Collar 326 supports the bag film against the light pressure applied by the sealing shoe. The channels 332 and 334 in the sealing shoe accommodate the hook band 106 and center rib 132 of the closure strip, accordingly, and maintain the transverse location of the closure strip during bonding. The outer edge of the loop side of the closure strip is not welded to the bag film in this instance, to provide an internal anti-peel flap in the finished bag, as shown in Fig. 22. Other bonding configurations are employed for various applications.

Once welded together, bag film 254 and closure strip 318 are folded along their longitudinal centerline and passed between two drive rollers 336 that press the hook and loop bands of the closure strip together and ensure an appropriate crease along the spine of the closure strip. The folding of the bag film and closure strip is effected by collar 326 and a creasing idler 338 that runs along the center of the closure strip and defines a rim groove 340 for receiving the center rib of the closure strip during folding.

The folded bag film next passes between a pair of reciprocating sealing/cutting jaws 342 which close against the outer surfaces of the bag film to seal the two sides of the folded bag film and the folded closure strip together to form a series of individual pouches, each pouch sealed on three sides and having a single open end 344 for subsequent filling. Jaws 342 may be configured to also sever the pouches from each other during sealing, or to leave the pouches connected in the form of a string of pouches that is readily pulled through an adjacent filling/closing station (not shown).

Fig. 23 gives one example of a pouch side seal configuration formed by the jaws 342 of Fig. 20, in which a slot 346 and notch 348 are die-cut within the vertical seal formed between adjacent pouches. The heated faces of jaws 342 form complementary die parts for cutting through the bag film and closure strip to form the configuration shown as the inter-pouch seal is formed. The pouches are then filled through their open ends, which are subsequently sealed closed. By severing the lower segments 350 joining adjacent pouches along centerlines 352, extended pull tabs 354 are formed at the edges of each pouch. Each pull tab 354 contains an end portion of pull cord 320, and provides convenient means for grasping and pulling the pull cord through the closure strip along the pouch, as shown in Fig. 24.

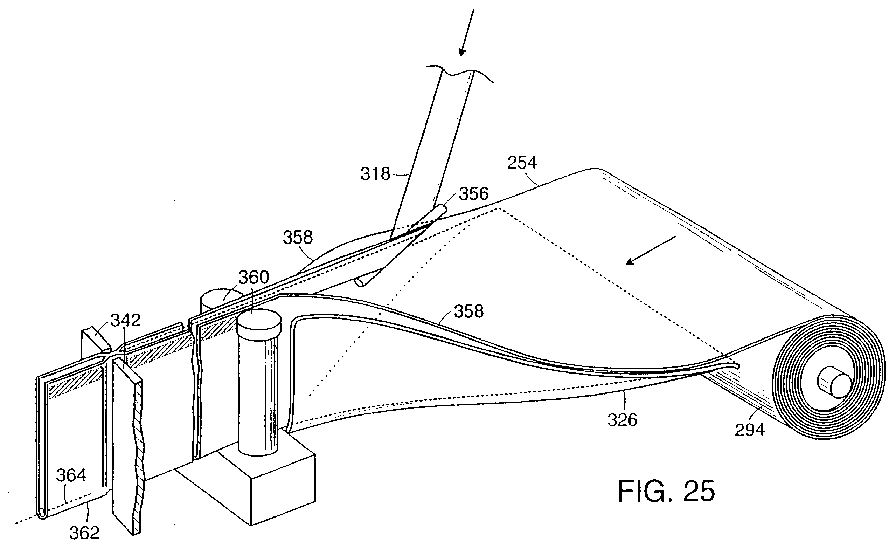

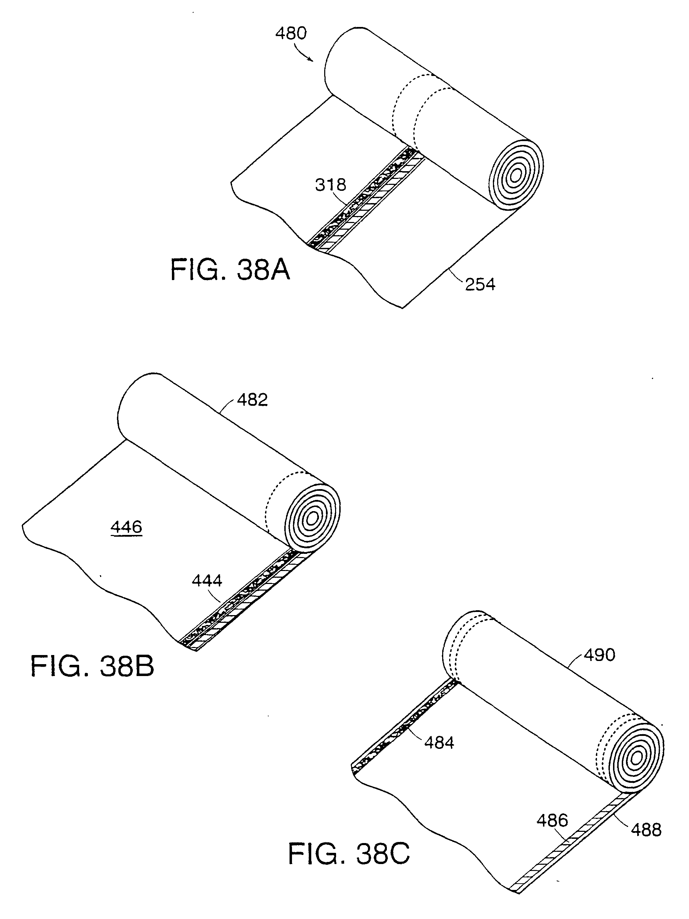

In the bag-forming method shown in Fig. 25, closure strip 318, already folded in half, is fed across an angled roller 356 and between the longitudinal edges 358 of bag film 254 as the film is folded within collar 326. A pair of heated sealing rollers 360 continuously seals the edge regions of the bag film to the overlapping closure strip. No insulating rail is necessary as the loop material of the closure strip, which in this case is sufficiently wide to extend across the entire sealing region, inhibits the bonding of the opposing inner surfaces of the closure strip (as discussed further below with respect to Figs. 36 and 37). After passing through edge sealing jaws 342, the folded edge 362 of the bag film is trimmed away along line 364, leaving the ends of the pouches opposite the closure strip open for receiving materials to be packaged. The series of pouches may then be spooled into a roll for sale or later filling.

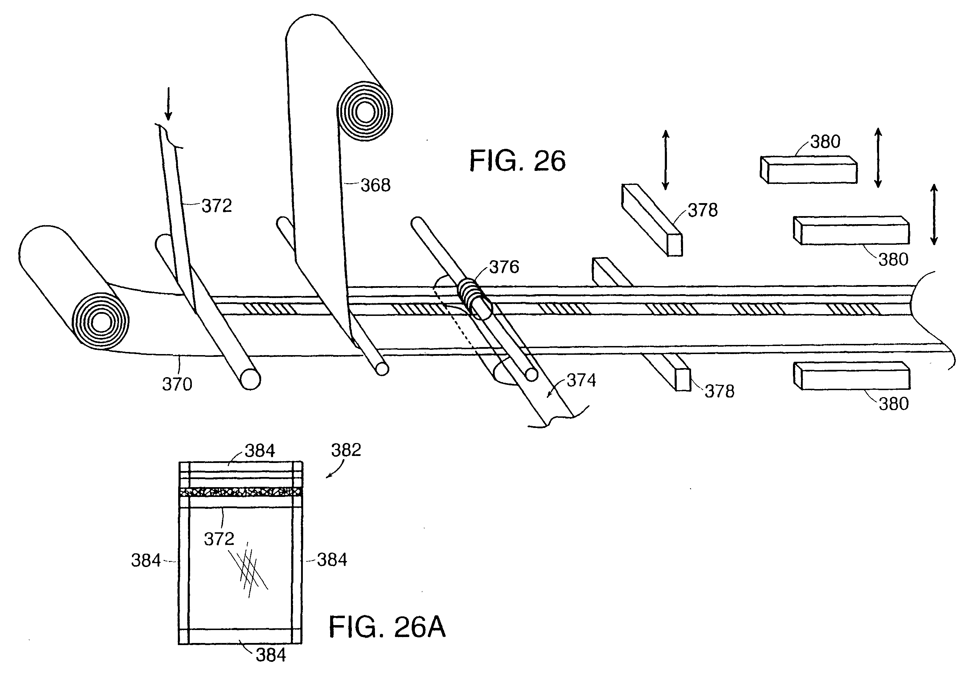

Fig. 26 shows a method of making bags from two separate sheets of bag film and the above-described bag closure strip. Upper and lower plastic films 368 and 370, respectively, are unspooled continuously, with either a pre-folded closure strip, or pre-engaged hook and loop strips 372, fed between them as shown. An insulating rail 374 extends between the hook and loop strips, temporarily disengaging the hooks from the loops, as the hook and loop strips are each permanently welded to respective inner sides of the plastic films between two rotary sealing rolls 376 (only the upper roll is shown). The parallel films and fastener strips are then welded together at spaced intervals by transverse heated sealing jaws 378, forming side seals between adjacent bags which are then filled from their open ends (not shown) and closed by upper and lower sets of sealing jaws 380. This process is also useful, for instance, for forming a series of premade bags to be rolled or stacked for later filling.

The bag 382 formed by this process has four side seals 384, as shown in Fig. 26A, along with closure 372. The side seal 384 adjacent and parallel to closure 372 is ripped off to open the bag and expose the closure. In another embodiment (not shown) the side seal 384 adjacent and parallel to closure 372 is omitted, along with the upper set of sealing jaws 380 in Fig. 26, and a folded closure strip (e.g., strip 318 of Fig. 25) is inserted in place of separate strips 372, with the fold of the closure strip pointing outward toward the adjacent side of the continuous films. In another embodiment, producing an "inverted" closure arrangement similar to that shown in Fig. 36, the folded closure strip is fed between the plastic films with its fold extending away from the adjacent edge of the films.

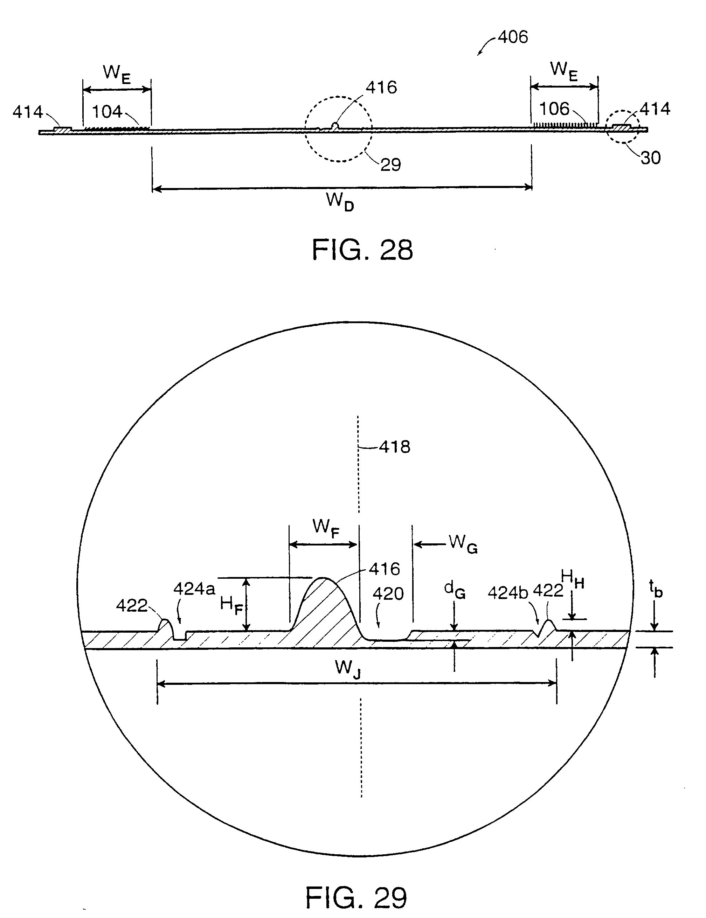

The closure strip also provides, in some instances, a broad, external bag surface for carrying text, logos or other marketing indicia. In Fig. 27, a produce bag 400 is formed generally of loosely woven plastic mesh to provide unobstructed air circulation and a clear view of the quality of the enclosed produce. The plastic mesh is formed into a bag with a fold at the bottom edge 402 and is either sewn or thermally fused along its two sides 404, one of which may remain open until the contents are inserted. A wide closure strip 406 sewn or welded to the plastic bag mesh at the upper end of the bag provides a solid surface 408 printed with appropriate marketing indicia and information, which may be applied to the closure strip either before or after it is attached to the plastic mesh forming the rest of the bag. In other instances, the broad outer face of the closure strip provides a support for securing adhesive labels (not shown) printed with such information. In the example shown, the closure strip is thermally welded to the plastic mesh in regions 410 (while an insulating rail, not shown, is disposed between the inner closure strip surfaces to prevent permanent bonding between the sides of the closure strip, as discussed above). For convenient handling, a C-shaped slit 412 is cut through both sides of the closure strip outboard of its hook and loop bands, to form a carrying handle. In other applications, air circulation holes may be provided through the closure strip sides, as necessary.

As shown in Fig. 28, closure strip 406 is of similar construction to the closure strip of Fig. 1, but with some modification. Notably, the overall width of closure strip 406 is about 6.2 inches (15.7 centimeters), with a fastener band separation distance W_{D} of about 3.9 inches (9.9 centimeters), providing sufficient width for printing with the closure edges either outboard or inboard of the plastic bag mesh. The width W_{E} of both the hook and loop bands 106 and 104, respectively, is about 0.75 inch (19 millimeters), with 3/8 inch (9.5 millimeters) wide outer edge regions having thickened weld zones 414.

The detail of the center features of the closure strip is shown in Fig. 29. Grasping rib 416 is offset slightly from the centerline 418 (i.e., the midline between the hook and loop bands), such that when the closure strip is folded, the grasping rib will be biased to lie on a predetermined side of the fold, avoiding variability in hook/loop band alignment caused by the fold line fluctuating between the two sides of the rib. Rib 416 has both a width W_{F} and a height H_{F} of about 1/32 inch (0.8 millimeter), and is immediately adjacent a shallow groove 420 extending along the length of the closure strip, of a width W_{G} of about 1/32 inch (0.8 millimeter) and a depth, d_{G}, of about 0.002 inch (0.05 millimeter). Groove 420 provides some space for rib 416 with the closure folded at centerline 418. Spaced apart from the rib and groove are tear control features. These include a continuous rip-stop rib 422 of height H_{H} of about 0.002 inch (0.05 millimeter) immediately outboard of a continuous tear-propagation groove. Two preferred tear-propagation groove profiles are shown. On the left of Fig. 29, groove 424a is of square profile with sharp bottom comers for concentrating stress during tearing. On the right of Fig. 29, groove 424b is of triangular profile with a single, acute comer at its center for concentrating stress. For reasons explained above, to form this pattern of features the mold roll is preferably equipped with a single plate or ring of width W_{J}, having a contoured outer surface for forming all of the features shown. The nominal thickness of the closure base, t_{b}, is about 0.006 inch (0.15 millimeter) in this instance, but for different applications will be selected between about 0.004 and 0.030 inch (0.1 and 0.8 millimeter).

As shown in Fig. 30, the thickened weld zones 414 near the edges of the closure strip extend a distance d_{w} of about 0.012 inch (0.3 millimeter) from the base of the closure strip (giving these areas, which have a width W_{K} of about 0.120 inch or 3.0 millimeters, an overall thickness of about 0.018 inch or 0.46 millimeter). Without adjusting the profile of the extrusion die or otherwise varying the amount of entering resin along the length of the nip as the closure strip is formed, the practical maximum thickness and width of weld zones 414 will depend on the flow properties of the resin as well as the pressures and temperatures involved. Thickening the closure strip in the areas intended to be welded to other bag materials provides more resin available for flow and bonding during welding. In addition, the greater closure strip mass absorbs more heat and helps to keep the inside surfaces of the closure strip base from being welded together. Thicker materials are also less sensitive to fluctuations in welding conditions, enabling more consistent bonding.

For some applications, the closure strip provides loop-engageable hook elements on the outer surface of the bag, such as for attaching the packaged product to a display or other support surface. For example, Fig. 31 shows a closure strip 426 at the upper end of a bag 428, having a band 430 of molded hook fastener elements extending from its outer surface and exposed for engaging loop fibers. The closure strip may include a grasping rib 132 as shown, and be configured to tear above band 430, such that the outer hooks remain on the opened bag. Alternatively, the closure strip may be configured to tear between band 430 and the top edge of the bag film, in which case the grasping rib may be unnecessary. The hooks of band 430 are useful, for instance, for hanging bag 428 from a display rack covered with loop material. For stringing multiple bags together, a mating band of loops (not shown) may be provided elsewhere on the outer surface of the bag, such that band 430 of each bag engages the exposed loop band of an adjacent bag of the string. Fig. 31 also illustrates an example of the weld-insulating loop material arrangement discussed below with respect to Figs. 36 and 37.

Optionally, closure strip 426 may include an outer band 432 of loop material, extending from a side of the bag opposite the exposed band 430 of hooks, for securing bags together in a stack. In another embodiment (not shown), the closure strip has an exposed band 432 of loops, but no exposed band 430 of hooks, and is hung thereby from a display rack having extending hook elements.

Fig. 32 shows a machine arrangement for producing closure strip 426 of Fig. 31. A first resin 434 is extruded into a nip between a hook-forming mold roll 154 and a smooth pressure roll 156, along with loop material 104 to form the primary loop band of the closure and, optionally, loop material 432 to form the secondary (i.e., outer) loop band of the closure. The cooling resin travels with the mold roll to a second nip between roll 154 and a secondary hook-forming mold roll 436, where it is joined by a second flow of resin from extruder 438. The flow of resin from extruder 438 is much narrower than the resin traveling on roll 154, and is only applied in specific strips corresponding to the secondary (i.e., outer) hook bands formed on the closure strip. The resin from extruder 438 is forced into hook-forming cavities in roll 436 by nip pressure, and cools as the closure strip travels on the surface of roll 436 until the secondary hooks are pulled from their cavities at roll 440. Thus, the primary hook band 106 and the secondary hook band 430 are formed by rolls 154 and 436, respectively, and are, in some applications, formed of different resins. As will be readily understood from this example, other machine configurations will produce similar products. For example, the upstream mold roll may be employed to mold the secondary hooks and closure base, with the downstream mold roll (i.e., the upper mold roll in Fig. 32) forming the primary hooks. In such case, the primary loop material 104 would preferably be introduced against roll 156.

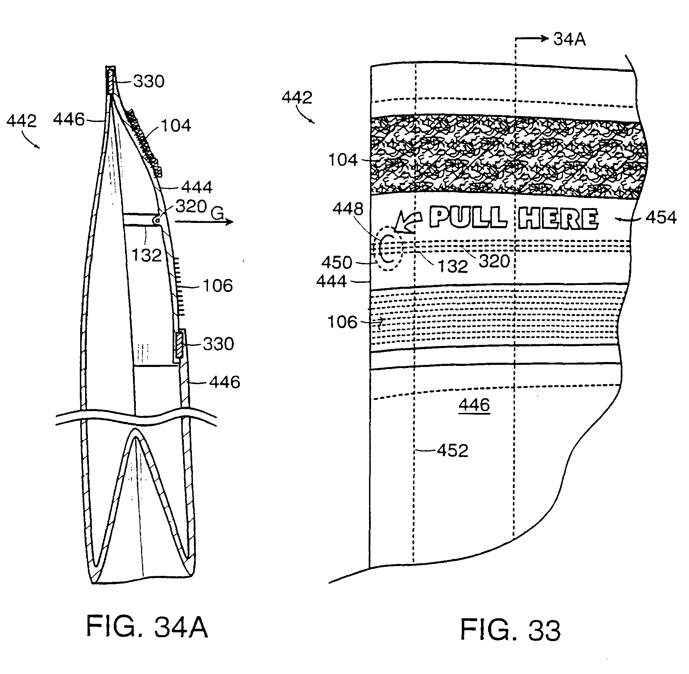

Referring now to Figs. 33 and 34A, pouch 442 includes a closure strip 444 sealed along its two edges to bag film 446 with welds 330. Along its lower edge, the closure strip is welded on its outer face; at its upper edge it is welded on its inner face. In the illustrated embodiment, closure 444 differs from the closure 100 of Fig. 1 in that its tear rib 132 extends from the face opposite the face on which its loop and hook bands 104 and 106, respectively, are carried. Additionally, rib 132 contains a pull cord 320 as described above with respect to Figs. 22-24. Rib 132 is formed in a corresponding groove in the pressure roll opposite the hook-forming mold roll in a Fischer-type process, with pull cord 320 introduced to the resin of the closure strip in the groove. Located on the inside face of the pouch as shown, pull cord 320 of rib 132 is torn through the entire thickness of the closure strip base as it is pulled outward (in the direction of arrow "G" in Fig. 34A) to open the pouch. Alternatively, rib 132 may be located on the same side of the closure strip as the hook and loop bands (as in strip 100 of Fig. 1), with appropriate tear features extending along either side of the rib to facilitate tearing of the closure strip, even without an embedded pull cord 320. In yet another embodiment (not shown), pull cord 320 is simply disposed at the inner face of the closure strip (without an enclosing base thickening or rib) and is pulled through the base in the direction of arrow "G" to open the pouch. Such a configuration is produced by introducing the pull cord to the resin in the molding nip in a Fischer-type process, on the pressure roll side of the resin, without a rib-forming groove in the pressure roll.

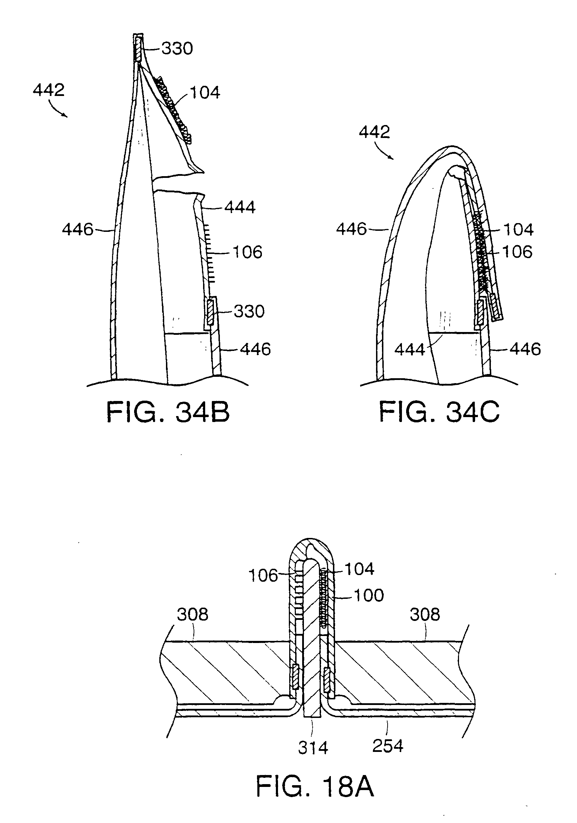

As shown in Fig. 33, a c-shaped pull tab 448 is formed at one edge of the pouch by die cutting the outline of the pull tab through the rib 132 and base of the closure strip 444 within a non-sealed region 450 within the side seal 452 of the pouch, without cutting through the bag film behind the closure strip. Because the closure strip is not bonded to the bag film (forming the back side of the pouch) within region 450, the cut pull tab is free to be grasped and pulled across the face of the pouch between the hook and loop bands of the closure strip, opening the pouch as shown in Fig. 34B. Alternatively, a hole may be provided through the layer of bag film at 450, thereby leaving tab 448 exposed for grasping. Lettering 454 is shown in Fig. 33, printed on the exposed face of the closure strip to indicate the location of the pull tab. As an alternate means of exposing the pull cord to be grasped, in another embodiment (not shown) a narrow width of closure strip 444 containing pull cord 320 is left extending beyond the edge of the bag film, exposed to be pulled through side seal 452 and across the face of the pouch. Seal 452 may be configured as a peelable weld if necessary to enable the grasping rib or pull cord to be pulled through the seal without breaking.

After being opened, pouch 442 may be closed by folding over the upper edge of the pouch such that the hook and loop bands 106 and 104 of the closure strip 444 overlap and engage, as shown in Fig. 34C. Re-opening the pouch entails simply disengaging the touch fastening and unfolding the pouch top.

To form pouch 442, closure strip 444 is first sealed along what will become its lower edge to one edge of a continuous sheet of bag film. The closure/film combination then proceeds through the pouch-forming process known in the art, in place of the bag film alone. As a final step before adjacent pouches are severed from one another, the pouches are filled through their upper ends before the upper weld 330 is formed between the closure strip and the bag film, to seal the pouch. Also note that this closure strip arrangement has the advantage that the loop and hook bands 104 and 106 of the closure strip do not generally come into contact with the pouch contents, making such an arrangement particularly applicable to pouches containing fibrous or similar materials which may become embedded in the hook or loop bands and decrease the effectiveness or cosmetic appeal of the closure over time. In another sequence, not illustrated, the closure strip is sealed to the film after the bag film is center-folded.

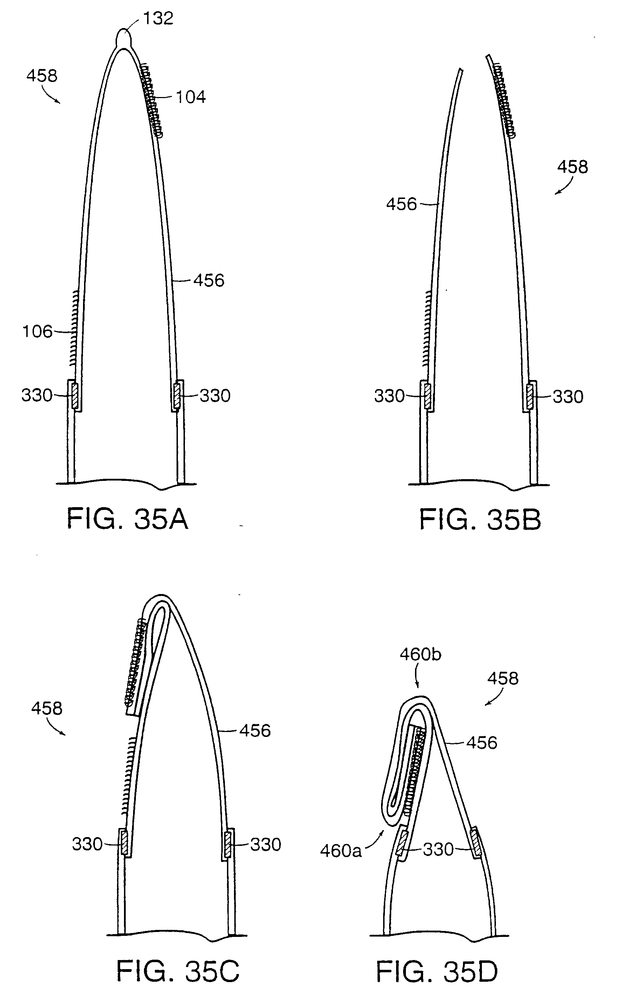

The closure strip is configured, in some cases, to be folded over upon itself multiple times after opening to form a substantially water-tight seal. For example, the closure strip 456 of home dry-cleaning bag 458 of Figs. 35A-35D is of sufficient width, as compared to the placement of its loop and hook bands 104 and 106, so as to be readily folded over twice after opening, to engage the hook and loop bands to form a releasable closure (Fig. 35D). As with the embodiment of Fig. 33, the hook and loop bands of the closure remain separated from the bag contents as they are carried on the outside of the bag. To effect the overlap of the hook and loop bands when the bag top is folded over twice, the loop band 104 is disposed much closer to the grasping rib 132 at the upper edge of the bag than is the hook band 106. The appropriate relative dimensions required to effect such an overlap will be apparent from the sequential illustration of Figs. 35B-35D. As the two separated sides of closure strip 456 are folded over together twice, two distinct folds 460a and 460b are formed. The ability of these folds to form a seal against gas or liquid penetration will depend upon the tightness of the folds and the viscosity of the fluid to be sealed, among other things, but such folds will form effective seals for many applications, such as in bags for home dry-cleaning kits as described in U.S. Pat. 5,238,587, the contents of which are incorporated herein by reference. For such applications in which the bag does not have to remain sealed prior to use, the upper edge of the bag containing rib 132 may be severed from the bag during bag production, such that the bag is sold in an open condition as in Fig. 35B. As another alternative, the closure strip may be in the form of two separate strips, a hook strip and a loop strip, each strip forming one side of the closure and being separately welded to the bag film.

For some applications, the bag closure is welded between two separate film sheets to form a bag. Fig. 36 shows one such bag closure 462 welded to bag side sheets 464a and 464b, forming what we call an "inverted" closure. The side sheets of the bag extend beyond the closure strip and are themselves welded together to form the upper edge 466 of the bag. After the closure strip has been bonded to the bag sides, and the side edges of the bag sealed (not shown) the bag is filled from its other end, in the direction of arrow "J", which is then sealed to close the bag. To initially open the bag, edge 466 is pulled, tearing the bag side sheets along perforations 468. Next, the closure strip is forced open and the closure strip web is pulled in two along a tear groove 470 at the closure strip fold. To reclose the bag, the loop and hook bands 104 and 106 of the closure strip are simply pressed together.

The welding pattern shown in Fig. 36 provides the anti-peel advantages discussed above, as the inner edge of the loop side of the closure strip remains unbonded to bag side sheet 464b. One method of forming such a weld pattern is shown in Fig. 37, in which closure strip 462 is simultaneously welded to both bag side sheets 464a and 464b by heated jaws 472 and 474, respectively. Advantageously, loop material 104 is arranged on the folded closure strip to overlap both inner and outer closure strip weld zones, inhibiting any permanent welding together of the sides of the closure strip. For applications in which a small amount of bonding between the inner faces of the closure strip is acceptable (or desirable), a chilled jaw 476 against the loop side of the bag adjacent the inner weld zone prevents any undesirable bonding of the inner edge of the loop side of the closure to bag side sheet 464b.

As an alternative to applying the closure strip to the bag film as the bag film is formed into bags, the closure strip may be pre-applied to the bag film, and both spooled together into rolls. Such configurations are particularly useful in the subsequent formation of bags on standard bag-making machines not equipped for the application of closure strips. For example, Figs. 38A through 38C show spooled or rolled film products consisting of a continuous sheet of thin plastic film permanently bonded to one or more continuous lengths of closure products. In Fig. 38A, closure strip 318 is centered upon the bag film 254, such as for forming bags with the process illustrated in Fig. 20. In Fig. 38B, closure strip 444 is sealed along one edge of bag film 446 to form rolled product 482, such as for forming pouch 442 of Fig. 33. In Fig. 38C, separate lengths of hook and loop products 484 and 486, respectively, are bonded to opposite edges of film 488 to form rolled product 490, which may be run through standard form/fill processes to incorporate resealable closures into longitudinal fin seals.

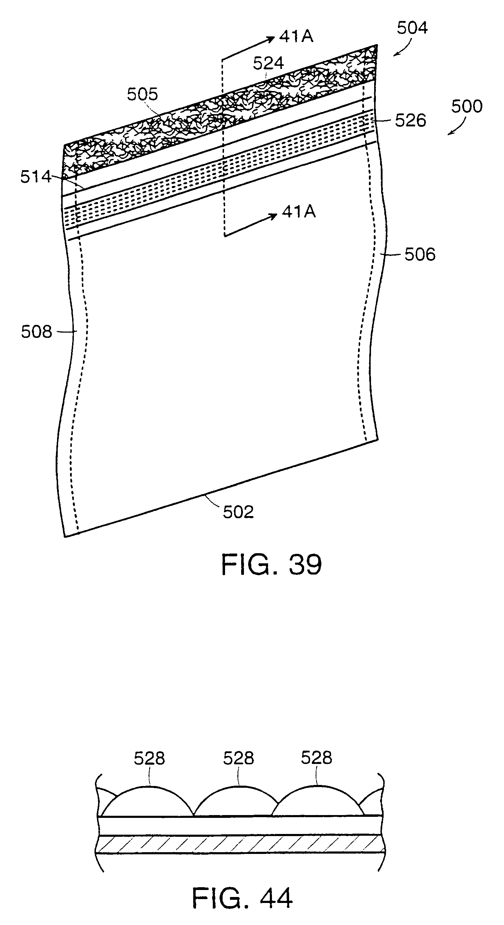

Referring to Fig. 39, bag 500 consists of a piece of polyethylene bag material folded once to form the bottom edge 502 of the bag, joined to a closure 504 to form the upper edge 505 of the bag, and permanently sealed along the remaining two sides 506 and 508 by welding the material of the front face of the bag to the material of the back face of the bag. Although illustrated as a flat bag, bag 500 may be constructed in other forms, such as a pouch with a lower pleated end for standing the pouch upright on its lower edge.

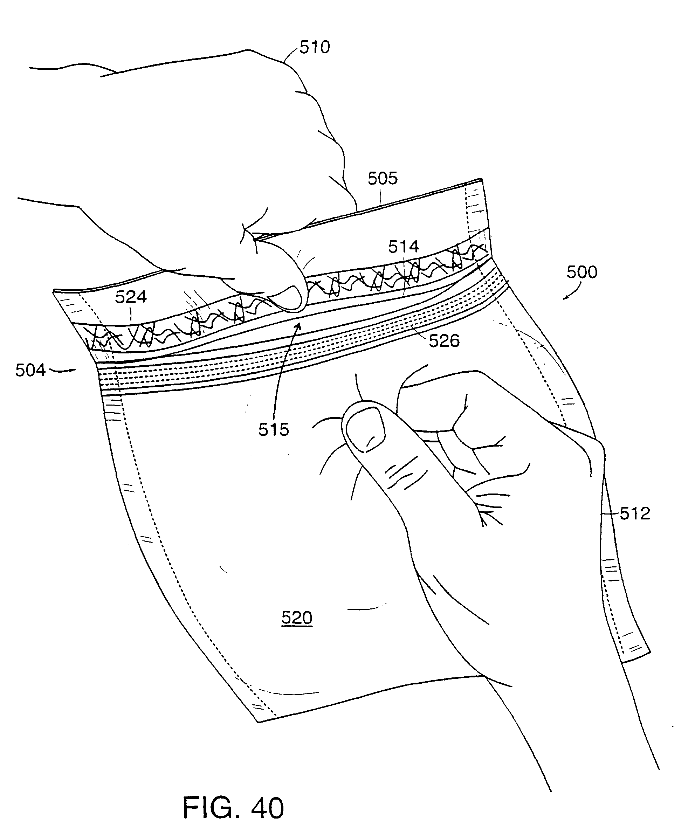

Referring to Fig. 40, to initially open the sealed bag, the upper edge 502 is grasped in one hand 510 and the front face of the bag is grasped in the other hand 512, on either side of a frangible channel 514 extending along closure 504. By only grasping or pinching the front face of the bag with hand 512, and not the back face of the bag, pulling the front face of the bag away from the upper edge places a high tensile load across channel 514, propagating a tear along channel 514 that creates an opening 515 into the bag.

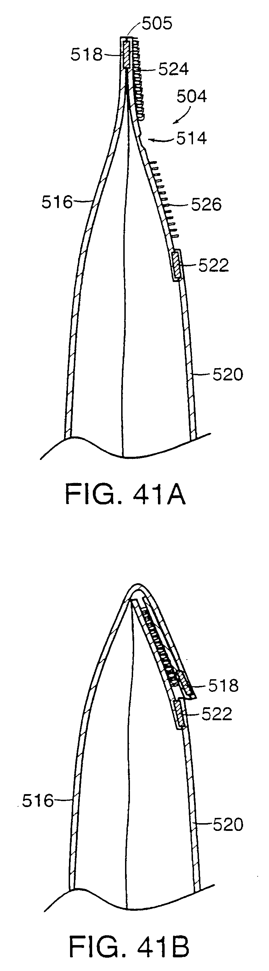

As shown in Fig. 41A, the bag material of the back side 516 of the bag is welded to the back (i.e., non-fastening) side of the reclosable closure 504 at 518. The bag material of the front side 520 of the bag is welded to the closure along an edge region 522 of the front (i.e., fastening) side of the closure 504. With the closure so attached to the bag material, and sealed along the sides of the bag (see Fig. 39), the closure provides an airtight, liquid-tight seal at one end of the bag.

The front face of closure 504 carries a strip 524 of fibrous loops, in non-woven form and partially embedded within the base resin of the closure, and a strip 526 of hook-shaped fastener elements molded out of resin of the base in rows extending along the length of the closure. After being initially opened by pulling apart the closure along groove 514, the bag may be reclosed by folding its upper edge about the opening created by tearing the closure, releasably engaging the strip 524 of loops with the strip 526 of hooks (Fig. 41B).

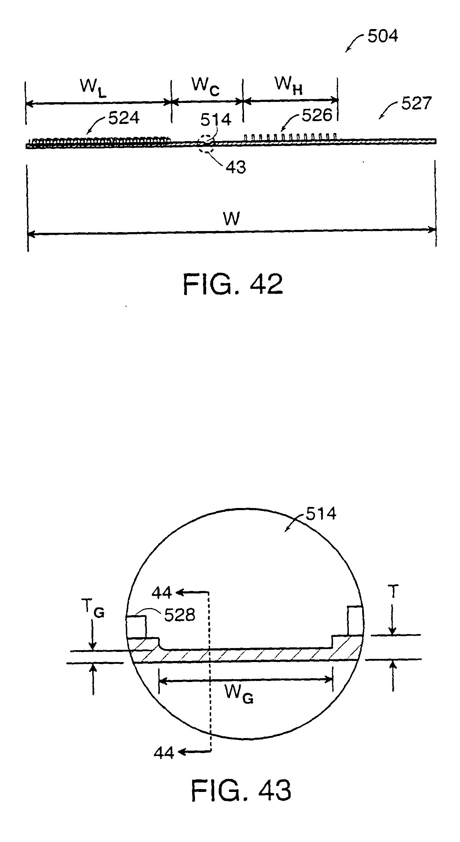

Referring to Figs. 42 and 43, closure 504 is a strip of polyethylene having an overall width "W" of about 1.5 inches (38 millimeters) and a nominal thickness "T" of about 0.004 inch (0.1 millimeter). Loop band 524 has a width W_{L} of about 0.5 inch (12 millimeters), and hook band 526 a width w_{H} of about 0.375 inch (9.5 millimeters). The hook and loop bands are separated by a distance w_{c} of about 0.29 inch (7.4 millimeters), at the center of which is formed groove 514 that is 0.002 inch (0.05 millimeter) deep and extends over a width w_{G} of about 0.036 inch (0.9 millimeter). Thus, at groove 514, the closure has a reduced thickness T_{G} of only about 0.002 inch (0.05 millimeter). The remaining width of the closure strip forms an open weld flange 527 outboard of the band 526 of fastener elements for welding or otherwise attaching the closure strip to the bag material. Extending in many parallel rows on either side of groove 514 throughout the area of the closure separating the hook and loop bands is an array of rip-stop features 528 unitarily molded with the front face of the closure strip.

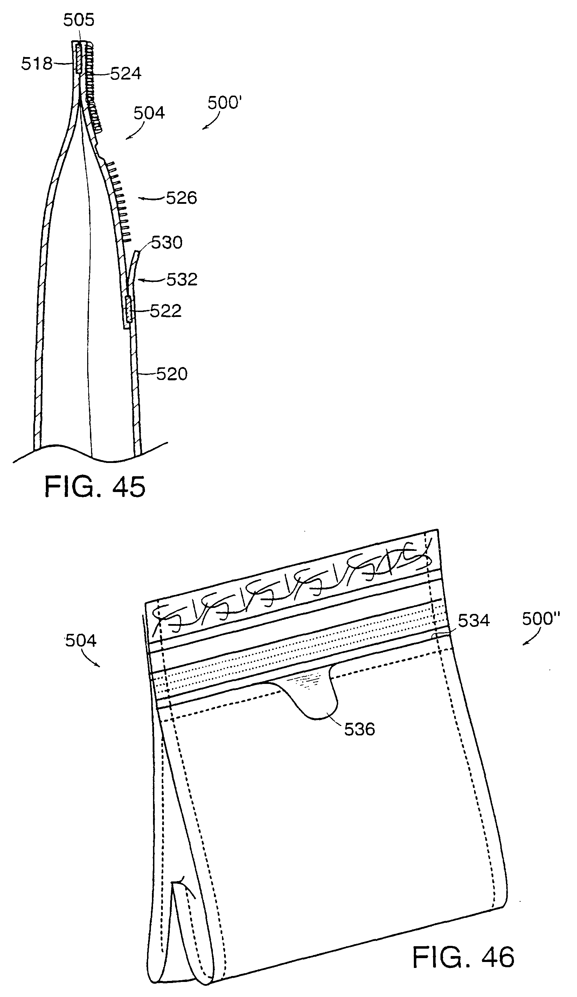

As shown in Fig. 44, the rip-stop features 528 are hump-shaped protrusions that are longitudinally offset from the protrusions of adjacent rows to form a checkerboard matrix of bumps for limiting tear propagation from the tear channel. With a height of only about 0.006 inch (0.15 millimeter) from the face of the closure, the rip-stops 528 are substantially shorter than the engageable hook elements, such that the rip stops do not interfere with the engagement of the fastener elements or the folding of the bag after opening.

Referring to Fig. 45, bag 500' is of construction similar in all aspects to that of above-described bag 500, except for the configuration of the attachment of the bag material of the front face 520 of the bag to the lower edge of closure strip 504. In this case, the weld zone 522 between the bag material and the closure strip is spaced apart from the free edge 530 of bag material 520, such that the distal edge of the bag material forms an exposed, cantilevered pull flap 532 extending along the entire width of the bag. Thus, to open bag 500' by bursting the closure strip along its tear groove, one hand grasps the upper edge 505 of the bag as with bag 500, but the other hand, rather than pinching the broad expanse of bag material forming the front face, grasps the convenient pull flap 532. The construction of bag 500' may be particularly advantageous where incidentally pinching the contents of the bag is to be avoided, for instance.

Another pull flap configuration is illustrated in Fig. 46. In this case, the upper edge 534 of the front face bag material is securely welded to the front face of closure 504, without leaving a graspable end exposed along its entire length, but the bag material is pre-cut to form an extending tab 536 of bag material at the center of the bag.

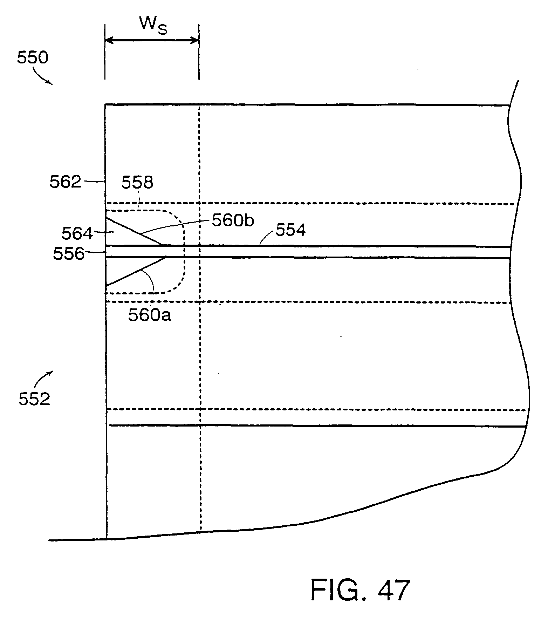

Referring to Fig. 47, bag 550 is of similar construction to the bags already described, except that its closure 552 has, in place of the frangible channel or groove, a tear rib 554 of substantially greater thickness than the base of the closure. Tear rib 554 extends along the closure midway between the loop and hook bands and is adapted to be grasped at one end 556 and pulled to separate the tear rib from the rest of the closure material along the width of the bag.

To enhance the graspability of the end 556 of tear rib 554, two features are formed in the bag and closure material adjacent the tear rib end, preferably by cutting methods. First, a notch 558 is formed in the bag material forming the back side of the bag, immediately behind tear rib end 556, big enough to enable the grasping of the tear rib end independent of the bag material but not extending through the entire width ws of the edge seal (if the integrity of the unopened bag seal is to be maintained). Second, two slits 560a and 560b are made through the base of closure 504 and extending at an angle from the bag edge 562 to, but not through, tear rib 554. The base of the closure between slits 560a and 560b thus forms a pull tab 564 with a wide distal end, free of any bag material, for improved graspability.

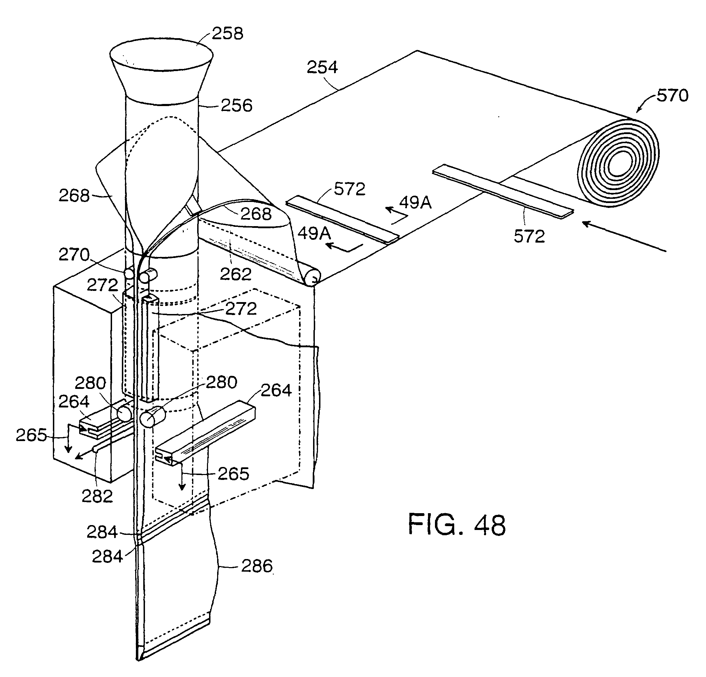

Referring to Fig. 48, another bag-making process features applying the closure strip in discrete lengths across the bag film (i.e., transversely), instead of longitudinally as earlier described. Bag film 254 is unspooled from a roll 570 and onto filling tube 256 over guide forms 262, as described above with respect to Fig. 15. However, in this case individual lengths 572 of closure strip are advanced across the bag film and permanently attached to the film, such as by thermal welding, at bag-length intervals. Preferably, the attachment of the closure strips occurs while the bag film is paused between film advancements, such as while a bag at the lower end of the tube is being sealed and severed. In this manner, inclusion of the closure strips requires very little modification in the bag-making apparatus. As an alternative to attaching the closure strips 572 to the bag film 254 as it is unrolled into the bag-making apparatus, roll 570 may be provided with the closure strips pre-applied at proper intervals.

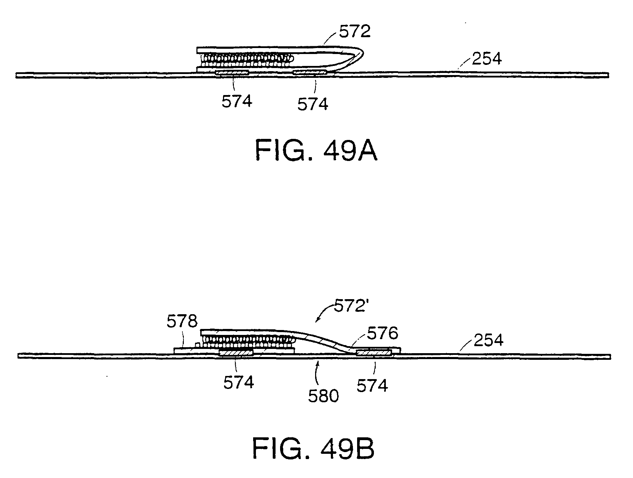

Referring also to Fig. 49A, the closure strip 572 is in one example folded over upon itself as attached to the bag film 254, with the bands of hooks and loops engaged to hold the closure in its folded condition. One side of the closure strip is welded to the bag film in areas 574, while the other side of the closure strip is left unattached until welded to an opposing surface of the bag film below the filling tube (e.g., by sealing bars 264). Thus, closure strip 572 is positioned at one end of the final bag, with its fold either directed outward or inward as desired. The sides of the bag may be joined to form the adjacent end edge of the bag to form an additional end seal. If necessary to hold the closure strip in its folded condition as the bag film is advanced onto the filling tube, the ends of the closure strip may be tacked together.

An alternative closure strip configuration is shown in Fig. 49B. In this case, the closure strip 572' is supplied as two separate fastener strips - a loop strip 576 and a hook strip 578 - that are engaged to each other along their length. Both fastener strips are permanently attached to bag film 254 along weld lines 574, on either side of a tear line 580 (e.g., a row of perforations or a continuous score) in bag film 254. Closure strip 572' may be positioned in the final bag at any point along the length of the bag, which is opened by bursting tear line 580 and separating the loop and hook bands of fastener strips 576 and 578. The bag is reclosed by pressing the hook and loop bands back together.

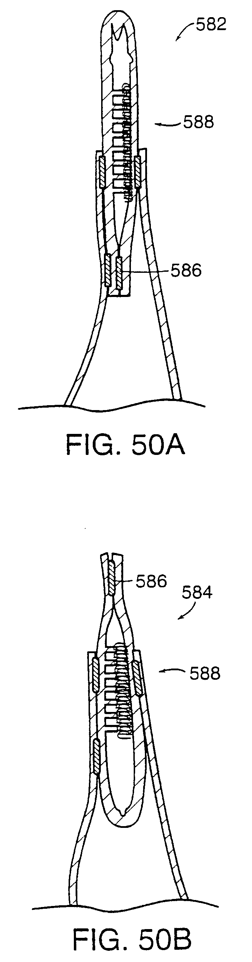

Referring to Figs. 50A and 50B, closure strips 582 and 584 are advantageously provided with peelable seals 586 that act as secondary closure means. Peelable adhesives are well known in the industry, and provide an air and liquid tight seal that is relatively easy to open without tearing the underlying substrate. In some cases, seal 586 is of a material which becomes effectively non-tacky when initially opened. In other cases, seal 586 is of a material which retains its tackiness so as to continue to provide some sealing when the bag is reclosed. In closure strip 582 (Fig. 50A) the peelable seal 586 is located inboard of the primary hook and loop closure 588, so as to protect the loops and fastener elements from contamination from bag contents. In closure strip 582' (Fig. 50B) the peelable seal 586 is located outboard of the primary hook and loop closure 588 and must be opened to access the primary closure. The peel seal may be formed by applying a peelable adhesive, such as a pressure sensitive adhesive, to the front face of the closure strip. In some cases, the adhesive is applied in two discrete regions on the face of the strip, such that the adhesive of the two regions comes together to form the seal. Such peelable seals can provide a higher pantry life (i.e., a longer useful life after the bag has been initially opened) for the bag contents.

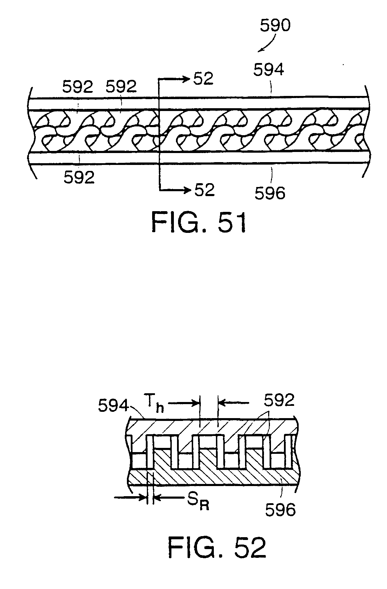

Referring to Fig. 51, a closure strip 590 has mating bands of hook-shaped fastener elements 592. In one band, extending from one side 594 of the closure strip, the fastener elements all face to the left, while from the other side 596 of the closure strip the fastener elements all face to the right As the bands of fastener elements 592 are pressed further together from the position shown, the tips of the hook-shaped fastener elements interlock to engage the two bands of elements. When pulled apart, the flexible tips extend to clear the tips of the other band of elements and then snap back to their original hook shape. This is one example of what is known in the closure industry as "self-engaging" fasteners - those in which the engaging fastener elements are of a similar structure. Other forms of self-engaging fastener elements include mushrooms, for example, such as the "DUAL-LOCK" fastener product marketed by Minnesota Mining and Manufacturing, Inc. With self-engaging hook-shaped fastening, we prefer to mold the hooks to have a greater thickness "tₕ" than the spacing "sᵣ" between adjacent rows of elements (as shown in Fig. 52), such that the bands cannot be separated by moving one side of the closure strip laterally across the rows of fastener elements of the other side of the closure strip. The CFM-15 and CFM-29 hook shapes marketed by Velcro USA in Manchester, New Hampshire, can be useful for self-engaging fasteners. The hook-shaped fastener elements should be spaced along their rows so as to provide sufficient clearance for the tips of a mating row of hooks to extend between adjacent hooks of the row. The optimal spacing will depend upon the selected hook shape and the strength of engagement desired. With mating arrays of mushroom-type fastener elements, the mushroom density of the opposing arrays should be different to avoid "dead-heading" the mushrooms (i.e., forcing the mushroom heads to deform rather than causing their stems to bend). One array may have, for example, a fastener element density on the order of about 50 to 200 fastener elements per square inch (8 to 31 per square centimeter), while the density of fastener elements in the other array is of the order of about 500 to 2000 (80 to 310 per square centimeter). Optimal density matches will depend upon the desired engagement and disengagement loads, among other things. Self-engaging bands of fastener elements may be substituted for the loop and hook bands of any of the above-described closure strips to form self-engaging closures for various applications.

Preferably, whether hook and loop bands or self-engaging fastener bands are employed, the mating bands of the closure are advantageously configured to be engaged with a very low engagement force. We measure engagement force by measuring the facial load required between mating halves of a one-inch long length of closure strip to engage the closure. Disengagement peel force is measured as the load required to peel such a one-inch (25 millimeter) strip of closure apart. The closure can provide an advantageously low engagement force of, for instance, less than about one pound over a lineal inch (0.18 Newton over a lineal millimeter) of the closure, and a low disengagement peel force of less than about two pounds per lineal inch (0.35 Newtons per lineal millimeter).

Materials other than polyethylene, such as polypropylene, polyester, nylon, and other thermoplastics and their co-polymers, may be employed. For example, laminated or co-extruded bag films can have inner surfaces of a material weld-compatible with the material of the closure base, and an outer surface of a material chosen for other properties, such as durability or impermeability.

As evident from the embodiments described above, these closure strips are useful in many packaging applications, for providing a readily-engaged releasable closure that does not require perfect alignment during closing. The closures are useful for packaged food items, such as cookies, candy bars, and even produce, and may be located at one sealed end or along a longitudinal seam of the package. By "bag", we mean to include all packages with flexible sides, including but not limited to standable pouches and flexible cartons.

Other embodiments will be understood to fall within the scope of the following claims.

## Claims

1. An elongated closure strip (100,406,504) comprising:
a sheet-form resin substrate (102) having a front face (108) and a back face;
an array of loop-engageable fastener elements integrally molded with and extending from the front face of the substrate and forming a discrete band (106,526) of fastener elements extending longitudinally along the length of the closure strip;
and
a loop strip carried on the front face of the substrate and forming a discrete band (104,524) of engageable loops extending along the length of the closure strip and spaced apart from the band of fastener elements;
the loop strip arranged to be engaged by the array of fastener elements when the substrate is folded along a fold line (C,418) extending between the loop strip and the array of fastener elements.

2. The closure strip of claim 1 wherein the substrate has attachment regions (136) extending along its length for permanently attaching the closure strip across a bag opening; the attachment regions being devoid of fastener elements and loops.

3. The closure strip of claim 2 wherein the attachment regions (136) are disposed on the front face (108) of the substrate.

4. The closure strip of claim 2 wherein the attachment regions (136) are disposed on the back face of the substrate.

5. The closure strip of claim 2 wherein the attachment regions (136) are covered with a layer of adhesive for permanently attaching the closure strip across the bag opening.

6. The closure strip of claim 2 wherein the attachment regions comprise exposed resin of the substrate, for permanently welding the closure strip to opposite sides of a bag formed of a compatible material.

7. The closure strip of claim 1 wherein the substrate defines at least one frangible region extending longitudinally along the length of the closure strip between the band of loops and the band of fastener elements, for tearing the substrate between the loops and the fastener elements, to open an associated bag.

8. The closure strip of claim 7 wherein the frangible region comprises at least one longitudinal groove (134,420,514) extending along the substrate.

9. The closure strip of claim 8 wherein the frangible region comprises a pair of spaced apart, longitudinal grooves (134), and a longitudinal rib (132) integrally molded with and extending from the substrate between the pair of grooves.

10. The closure strip of claim 8 wherein the groove (134) is defined on the front face (108) of the substrate.

11. The closure strip of claim 8 further comprising a longitudinal rib (416) integrally molded with and extending from the substrate adjacent the groove (420), on a side of the groove opposite the fold line (418), for resisting propagation of a tear from the groove away from the fold line.

12. The closure strip of claim 7 wherein the frangible region comprises an embedded longitudinally continuous filament (320) adapted to be torn from the closure strip to tear the substrate along the frangible region.

13. The closure strip of claim 12 wherein the filament (320) is completely enclosed within a longitudinal rib (132) integrally molded with and extending from the substrate between the band of loops (104) and the band of fastener elements (106).

14. The closure strip of claim 13 wherein the longitudinal rib (132) enclosing the filament is disposed on the back face of the substrate.

15. The closure strip of claim 1 further comprising a longitudinal rib (132,416) integrally molded with and extending from the front face of the substrate between the band of loops (104) and the band of fastener elements (106).

16. The closure strip of claim 15 wherein the longitudinal rib (132) is offset from the fold line (C).

17. The closure strip of claim 1 wherein the loop strip (104) comprises a non-woven web of fibers.

18. The closure strip of claim 17 wherein the web has a basis weight of less than about 4 ounces per square yard.

19. The closure strip of claim 18 wherein the web has a basis weight of less than about 2 ounces per square yard.

20. The closure strip of claim 17 wherein the non-woven web comprises a needled web in a stretched condition.

21. The closure strip of claim 1 wherein the loop strip (104) has width defined between two longitudinal edges thereof, fibers of the loop strip being affixed to the substrate (102) across said width.

22. The closure strip of claim 21 wherein fibers of the loop strip (104) are encapsulated by resin of the substrate (102) across said width.

23. The closure strip of claim 1 wherein the loop strip has a fiber density which is substantially constant across its width, and wherein the loop strip comprises discrete regions (114,116,22,126,130) which are substantially more encapsulated by resin than other regions thereof. (See Figs. 1A through 1G)

24. The closure strip of claim 23 wherein said discrete regions (122,130) are spaced apart longitudinally along the loop strip (104).

25. The closure strip of claim 23 wherein said discrete regions (114,116,126) extend lengthwise along the loop strip (104) and are spaced apart widthwise.

26. The closure strip of claim 23 wherein said discrete regions are arranged in a checkerboard pattern. (See Fig. 1E)

27. The closure strip of claim 1 wherein the loop strip (104) has two longitudinal edge regions (114,118) and a center region between the edge regions, the edge regions being affixed to the substrate (102) and the center region being substantially loose from the substrate.

28. The closure strip of claim 1 further comprising, between the substrate and the loop strip, a barrier layer (e.g., 178) of a different material than the substrate.

29. The closure strip of claim 28 wherein the barrier layer (178) comprises paper.

30. The closure strip of claim 28 wherein the barrier layer (178) comprises polymer resin.

31. The closure strip of claim 1 wherein the substrate (102) is formed of a polyethylene or of a material selected from the group consisting of polypropylene, polyester, nylon, copolymers of any of the foregoing, and compatible mixtures that include at least one of the foregoing.

32. The closure strip of claim 1 further comprising an adhesive strip carried on the front face of the substrate between the band of fastener elements (106) and the band of loops (104) (at 135), the adhesive strip having an exposed surface arranged to contact the front face (108) of the closure strip when the closure strip is folded to engage the loops with the fastener elements, to retain the closure strip in a folded state.

33. The closure strip of claim 1 further comprising:
a first adhesive strip carried on the front face of the substrate on one side of the fold line (C); and
a second adhesive strip carried on the front face of the substrate on the other side of the fold line (C); the first and second adhesive strips having exposed surfaces arranged to contact each other when the closure strip (100) is folded to engage the loops (104) with the fastener elements (106), to retain the closure strip in a folded state.

34. The closure strip of claim 1 further comprising a strip of peelable adhesive carried on the front face (108) of the substrate (102) for providing a peelable seal across the opening of an associated bag.

35. The closure strip of claim 34 wherein the strip of peelable adhesive is disposed between a longitudinal edge of the closure strip and both of the bands of fastener elements (106) and loops (104).

36. The closure strip of claim 34 wherein the strip of peelable adhesive is disposed between the bands of fastener elements (106) and loops (104).

37. The closure strip of claim 1 further comprising a layer of paper (178) permanently adhered to the substrate (102).

38. The closure strip of claim 37 wherein the layer of paper (178) is carried on the front face (108) of the substrate, along a longitudinal edge region (136) of the substrate.

39. The closure strip of claim 37 wherein the substrate has a back face opposite the front face (108), the paper (178) being carried on the back face.

40. The closure strip of claim 37 wherein the layer of paper (178) is disposed between a center region of the loop strip (104) and the substrate (102).

41. The closure strip of claim 1 further comprising
a second array of loop-engageable fastener elements integrally molded with and extending from the back face of the substrate (102) and forming a second band (430) of fastener elements extending longitudinally along the length of the closure strip, for hanging an associated package for display. (See Fig. 31)

42. The closure strip of claim 41 further comprising a second loop strip carried on the back face of the substrate and forming a second discrete band (432) of engageable loops spaced apart from the second band of fastener elements, for engaging the second band of fastener elements of another package. (See Fig. 31)

43. The closure strip of claim 1 further comprising a second loop strip carried on the back face of the substrate and forming a second discrete band (432) of engageable loops extending along the length of the closure strip, for hanging an associated package for display. (See Fig. 31)

44. The closure strip of claim 1 wherein the substrate further defines multiple longitudinal rows of hump-shaped projections (528) extending from its front face (108) between the fold line (C) and each of the bands of loops (104) and fastener elements (106).

45. A reclosable bag (138,400,442,458,500) comprising:
a bag body (140) having two opposing side walls joined along three edges to form therebetween a pouch having an open end; and
a closure strip (100,406,504) permanently attached to the two side walls of the bag body along the open end, the closure strip comprising
a sheet-form resin substrate (102) having a front face (108) and a back face;
an array of loop-engageable fastener elements integrally molded with and extending from the front face of the substrate and forming a discrete band (106,526) of fastener elements extending longitudinally along the length of the closure strip; and
a loop strip carried on the front face of the substrate and forming a discrete band (104,524) of engageable loops extending along the length of the closure strip and spaced apart from the band of fastener elements;
the loop strip arranged to be engaged by the array of fastener elements to releasably retain the bag in a closed condition.

46. The bag of claim 45 wherein the substrate (102) is continuous and solid between the band of loops (104) and the band of fastener elements (106) and forms a seal to retain the bag in a sealed condition before the bag is opened.

47. The bag of claim 45 wherein the substrate of the closure strip (100,406,504) is permanently affixed to the side walls of the bag body with adhesive.

48. The bag of claim 45 wherein the substrate (102) of the closure strip is welded to the side walls of the bag body (140).

49. The bag of claim 48 wherein the substrate (102) of the closure strip and the side walls of the bag body (140) are both formed of the same resin, such as a polyethylene or of a material selected from the group consisting of polypropylene, polyester, nylon and copolymers and compatible mixtures that include at least one of such resins.

50. The bag of claim 45 wherein the substrate (102) of the closure strip defines at least one frangible region extending longitudinally along the length of the closure strip between the band of loops (104) and the band of fastener elements (106), for tearing the substrate between the loops and the fastener elements to open the bag.

51. The bag of claim 50 wherein the frangible region comprises at least one longitudinal groove (134,420,514) extending along the substrate (102).

52. The bag of claim 51 wherein the frangible region comprises a pair of spaced apart, longitudinal grooves (134), and a longitudinal rib (132) integrally molded with and extending from the substrate between the pair of grooves.

53. The bag of claim 50 wherein the frangible region comprises an embedded, longitudinally continuous filament (320,554) adapted to be torn from the closure strip to tear the substrate along the frangible region.

54. The bag of claim 53 wherein the filament (320,554) is fully enclosed within a longitudinal rib (132) extending from the back face of the substrate (102) of the closure strip and disposed inside the bag.

55. The bag of claim 53 wherein the filament (320,554) has an end attached to a pull tab (354) extending from one edge of the bag. (See Figs. 23 and 24)

56. The bag of claim 53 wherein the bag defines a slit (448,560a) through an edge region (450,558) of the bag but not extending into the interior of the bag, the slit defining a graspable pull tab within said edge region and containing an end of the filament (320,554).

57. The bag of claim 56 wherein the pull tab (564) is defined between a pair of slits (560a,560b) on either side of the filament (554) and extending through an adjacent edge (562) of the bag. (See Fig. 47)

58. The bag of claim 45 wherein the loop strip (104) of the closure strip comprises a non-woven web of fibers having a basis weight of less than about 4 ounces per square yard.

59. The bag of claim 45 wherein the closure strip (100) further comprises a strip of peelable adhesive carried on the front face (108) of the substrate for providing a peelable seal across the opening of the bag.

60. The bag of claim 59 wherein the peelable seal is disposed inboard of the bands of loops (104) and fastener elements (106).

61. The bag of claim 59 wherein the peelable seal is disposed outboard of the bands of loops (104) and fastener elements (106).

62. The bag of claim 45 wherein the back face of the closure strip forms an outer surface of the bag, with the bands of loops (104) and fastener elements (106) carried on an inner surface of the bag.

63. The bag of claim 62 wherein the closure strip further comprises
a second array of loop-engageable fastener elements integrally molded with and extending from the back face of the substrate (102) and forming a second band (430) of fastener elements extending longitudinally along the outer surface of the bag, for hanging the bag for display. (See Fig. 31)

64. The bag of claim 63 wherein the closure strip further comprises a second loop strip carried on the back face of the substrate and forming a second discrete band (432) of engageable loops extending along the outer surface of the bag, for hanging the bag for display.

65. The bag of claim 45 wherein the front face (108) of the closure strip forms an outer surface of the bag, with the bands of loops (104) and fastener elements (106) carried on said outer surface of the bag.

66. The bag of claim 65 wherein both the band of loops (104) and the band of fastener elements (106) are disposed on a front side of the bag, such that the fastener elements engage the loops when an adjacent edge of the bag is folded over. (See Fig. 34A)

67. The bag of claim 66 wherein the substrate of the closure strip defines a frangible region between the bands of loops (104) and fastener elements (106), the frangible region running along one side of the bag and configured to be torn to open the bag.

68. The bag of claim 67 wherein the frangible region (514) is configured to be torn by applying a transverse tensile load across the frangible region.

69. The bag of claim 68 wherein the frangible region (514) of the substrate is weaker with respect to a transverse tensile load than the side walls (516,520) of the bag and the attachment (518,522) between the side walls of the bag and the bag closure.

70. The bag of claim 68 wherein the side wall forming the front side of the bag has an exposed tab (532,536) for grasping and pulling the front side of the bag to tear the frangible region (514) of the closure strip.

71. The bag of claim 70 wherein the tab (532) extends across the front side of the bag.

72. The bag of claim 65 wherein the bands of loops (104) and fastener elements (106) are disposed on opposite sides of the bag, such that the fastener elements engage the loops when an adjacent edge of the bag, formed by a fold in the closure strip, is folded over twice. (See Figs. 35A to 35D)

73. The bag of claim 72 wherein, with the closure strip.is folded over twice, adjacent layers of the substrate together form a barrier to fluids.

74. The bag of claim 45 wherein the side walls of the bag are attached to the closure strip along the back face of the closure strip. (See Figs. 16,16A,17A,22,25,31,36)

75. The bag of claim 74 wherein one edge of the bag is formed by a fold along the substrate (102) of the closure strip (100) between the bands of loops (104) and fastener elements (106). (See Figs. 16,25,31)

76. The bag of claim 74 wherein the substrate forms a fold between the bands of fastener elements (106) and loops (104), with the fold of the substrate directed toward the interior of the bag. (See Figs. 16A,36)

77. The bag of claim 76 wherein the substrate (102) is solid and continuous between the side walls of the bag, to form a seal across the bag opening until the bag is initially opened.

78. The bag of claim 76 wherein the side walls of the bag are joined together outboard of the longitudinal edges of the closure strip to form a seal until the bag is initially opened. (See Fig. 36)

79. The bag of claim 45 wherein at least one longitudinal edge of the closure strip is disposed inside the bag and unattached to the sides of the bag except at the edges of the bag. (See Figs. 2A,16,36)

80. The bag of claim 45 wherein the substrate of the closure strip carries printed indicia (454) thereon. (See Figs. 27,33)

81. The bag of claim 45 wherein the substrate of the closure strip defines a hole (412) forming a graspable handle for carrying the bag.

82. A continuous sheet-form product useful for forming bags, the product comprising
a continuous sheet-form film (254,446); and
a length of closure strip (318,444,572) permanently bonded to the film, the closure strip comprising
a sheet-form resin substrate (102) having an exposed front face (108);
a loop strip carried on the front face of the substrate and comprising a discrete band (104) of hook-engageable loops extending along the length of the closure strip; and
an array of loop-engageable fastener elements integrally molded with resin of the front face of the substrate and forming a discrete band (106) of fastener elements extending longitudinally along the length of the closure strip and spaced apart from the band of loops.

83. The sheet-form product of claim 82 wherein the closure strip (318) is continuous and extends along the film centerline. (See Fig. 38A)

84. The sheet-form product of claim 82 wherein the closure strip (444) is continuous and extends along one edge of the film. (See Fig. 38B)

85. The sheet-form product of claim 82 wherein the closure strip (572) extends transversely across the film. (See Fig. 48)

86. A method of fabricating a closure strip, the method comprising:
molding a continuous, sheet-form substrate (102) having a band of fastener elements (106,526) integrally molded with and extending from a front face of the substrate; and
attaching a continuous strip of loop material (160) to resin forming the front face of the substrate, to form a discrete band of loops (104,524) spaced apart from the band of fastener elements.

87. The method of claim 86 wherein the step of molding includes forming the substrate to have a longitudinal frangible section arranged to be disposed between the band of loops and the band of fastener elements.

88. The method of claim 87 wherein the frangible section of the substrate defines at least one longitudinally extending groove (134,420,514) therein, the step of molding including forming the groove in the substrate as the substrate is formed.

89. The method of claim 88 wherein the groove (134,420,514) is formed in the front face (108) of the substrate.

90. The method of claim 88 wherein the frangible section defines a pair of longitudinally extending grooves (134) in the substrate.

91. The method of claim 90 wherein the step of molding further includes simultaneously forming a longitudinal rib (132) extending from the substrate between a pair of said grooves.

92. The method of claim 86 wherein the step of molding includes simultaneously forming a longitudinal rib (132) extending from the substrate (102), the rib arranged to be disposed between the bands of fastener elements and loops.

93. The method of claim 92 wherein the rib (132) is molded to be closer to one than the other of the bands of fastener elements and loops. (See Fig. 29)

94. The method of claim 86 wherein the step of molding includes simultaneously embedding a longitudinally continuous filament (320) in resin of the substrate (102).

95. The method of claim 94 wherein the filament is completely enclosed by resin of a rib (132) extending from one face of the substrate.

96. The method of claim 86 wherein the strip of loop material comprises a non-woven web of entangled fibers forming the loops and having a basis weight of less than about 4 ounces per square yard.

97. The method of claim 86 wherein the step of attaching comprises encapsulating fibers of the strip of loop material in resin of the substrate across the width of the strip of loop material.

98. The method of claim 86 wherein the strip of loop material has a fiber density which is substantially constant across its width, and wherein the step of attaching comprises permanently bonding discrete regions (114,116,22,126,130) of the strip of loop material to the substrate while leaving other regions of the strip of loop material in a less bonded condition. (See Figs. 1A through 1G)

99. The method of claim 88 wherein the strip of loop material (160') is permanently attached to the substrate (102) after the substrate is molded.

100. The method of claim 99 wherein the strip of loop material is attached to the substrate by heating the front face (108) of the substrate and thereafter pressing the loop material against the front face of the substrate with the front face of the substrate at an elevated temperature.

101. The method of claim 86 wherein the strip of loop material (160) is permanently attached to the substrate (102) as the substrate is molded.

102. The method of claim 101 wherein the steps of molding and attaching include
continuously feeding the strip of loop material (160) through a nip (152) defined between a rotating mold roll (154) and a pressure roll (156), the rotating mold roll defining a multiplicity of cavities about its periphery for molding the fastener elements, while
continuously introducing molten resin to the mold roll (154) under conditions which cause the resin to fill the cavities and form the substrate, such that pressure in the nip (152) bonds the strip of loop material (160) to resin of the substrate. (See Fig. 7)

103. The method of claim 102 wherein the mold roll (154) has two extending ridges that form a pair of grooves (134) in the substrate.

104. The method of claim 103 wherein the step of molding includes simultaneously forming a longitudinal rib (132) extending from the substrate (102) between the pair of grooves (134), the mold roll defining, between its two ridges, a channel for forming the longitudinal rib.

105. The method of claim 101 wherein the steps of molding and attaching include
continuously feeding the strip of loop material through a gap (190) defined between a rotating mold roll (154) and a stationary extrusion head (188), the rotating mold roll defining a multiplicity of cavities about its periphery for molding the fastener elements, while
continuously introducing molten resin to the gap (190) under conditions which cause the resin to fill the cavities and form the substrate and to permanently adhere to the strip of loop material (160). (See Fig. 11)

106. The method of claim 105 further comprising, while continuously feeding the strip of loop material (160) through the gap (190), continuously feeding a strip of preformed material (178) through the gap between the strip of loop material (160) and the extrusion head (188), such that the preformed material inhibits the encapsulation of fibers of the strip of loop material in predetermined regions and the preformed material is incorporated into the closure strip.

107. The method of claim 106 wherein the preformed material (178) is selected from the group consisting of paper, fabric and plastic film.

108. The method of claim 106 wherein the preformed material defines perforations extending through its thickness.

109. The method of claim 101 wherein the steps of molding and attaching include
continuously feeding the strip of loop material (160) through a nip (152) defined adjacent the periphery of a rotating mold roll (154), the mold roll comprising at least one staking ring (180) having a contoured outer edge and arranged to hold a predetermined region of the strip of loop material against the resin under pressure in the gap. (See Figs. 9 and 10)

110. The method of claim 109 wherein the outer edge of the staking ring comprises protrusions (184) spaced about its periphery, the protrusions corresponding to discrete regions of relatively greater encapsulation of the strip of loop material (160).

111. The method of claim 109 wherein the mold roll (154) comprises multiple staking rings (180) arranged to produce a predetermined bonding pattern across the strip of loop material.

112. A method of fabricating reclosable bags, the method comprising providing a continuous length of sheet-form bag wall material (254);
providing a continuous closure strip comprising
a sheet-form resin substrate (102) having a front face (108);
a loop strip (160) carried on the front face of the substrate and forming a discrete band (104) of engageable loops along the length of the closure strip; and
an array of loop-engageable fastener elements integrally molded with the front face of the substrate and forming a discrete band (106) of fastener elements extending longitudinally along the length of the closure strip and spaced apart from the band of loops;
permanently attaching the closure strip along the sheet-form bag wall material to form a continuous length of preform bag material; and
forming individual bags from the preform bag material.

113. The method of claim 112 wherein the step of attaching produces a preform tube of bag material, and wherein the steps of attaching and forming are performed simultaneously in a vertical form and fill process, with the individual bags containing a predetermined quantity of material to be stored in the bags. (See Fig. 15)

114. The method of claim 113 wherein the closure strip (266) is attached to longitudinal edges of the sheet-form plastic to form a fin seal of the preform tube.

115. The method of claim 114 wherein the closure strip is folded to form a fold extending outward, away from the preform tube. (See Fig. 16)

116. The method of claim 115 wherein the fold defines a distal edge of the fin seal.

117. The method of claim 113 wherein the closure strip is folded to form a fold extending inward, toward the preform tube. (See Fig. 16A)

118. The method of claim 112 wherein the step of attaching produces a preform tube of bag material, and wherein the steps of attaching and forming are performed simultaneously in a horizontal form and fill process, with the individual bags formed about associated packages of material. (See Figs. 17-19)

119. The method of claim 118 wherein longitudinal edges of the bag side wall material are brought together to form a fin seal with the closure strip folded longitudinally and disposed within the fin seal. (See Figs. 17,17A)

120. The method of claim 118 wherein longitudinal edges of the bag side wall material are brought together in a fin seal with the closure strip folded longitudinally about and attached to the longitudinal edges of the bag side wall material. (See Fig. 18)

121. The method of claim 112 wherein the step of attaching includes folding the closure strip along its length to engage the bands of loops (104) and fastener elements (106) in an engagement zone, the loops and fastener elements holding their underlying regions of the substrate in spaced apart relation. (See Fig. 17A)

122. The method of claim 121 wherein the step of attaching further includes welding the bag side wall material to the back face of the substrate, the engagement zone providing a heat barrier to inhibit permanently welding the substrate together in its folded condition.

123. The method of claim 112 wherein the step of forming comprises folding the preform bag material along its centerline; and then forming transverse seals spaced along the preform bag material at bag length intervals to form a chain of open-ended bags. (See Fig. 20)

124. The method of claim 123 wherein the closure strip is attached along the bag side wall material between longitudinal edges of said material, the preform bag material being subsequently folded at the closure strip to engage the bands of loops and fastener elements. (See Figs. 20,26)

125. The method of claim 123 wherein the step of attaching comprises
individually folding the bag side wall material (254) and the closure strip (318); and then
joining the folded wall material and closure strip along their longitudinal edges to form a continuous tube of preform bag material. (See Fig. 25)

126. The method of claim 125 wherein the step of forming comprises creating transverse seals across the tube of preform bag material to form a series of discrete, empty bags.

127. The method of claim 112 wherein the bag side wall material is provided as two separate material sheets (368,370), the step of attaching comprising attaching the closure strip (372) to one longitudinal edge of each sheet, such that the preform bag material comprises the two material sheets joined at the closure strip, the step of forming individual bags comprising forming transverse seals (384) across the preform bag material and joining the other longitudinal edges of the sheets of material to form a series of sealed bags. (See Fig. 26)

128. The method of claim 112 wherein the closure strip contains an embedded pull cord (320), the step of forming including forming a graspable pull tab (354) extending from an edge of each bag, the pull tab containing an end of the pull cord. (See Figs. 22-24,47)

129. The method of claim 128 wherein the graspable pull tab (354) is formed by slitting each bag in a side seal area thereof.

130. The method of claim 129 wherein the slitting cuts through the pull cord but does not extend into the interior of the bag.

131. The method of claim 129 wherein the slitting forms two slits (560a,560b) extending from an adjacent edge of the bag to the pull cord.

132. A method of fabricating reclosable bags in a vertical form and fill process, the method comprising
unrolling a continuous length of sheet-form bag film (254) and directing the unrolled film over a forming head, advancing the bag film one bag length between pauses;
during each pause, attaching a length (572) of closure strip across the unrolled bag film upstream of the forming head, each length of closure strip comprising
a sheet-form resin substrate (102) having a front face;
a loop strip carried on the front face of the substrate and forming a discrete band (104,524) of engageable loops along the length of the closure strip; and an array of loop-engageable fastener elements integrally molded with the front face of the substrate and forming a discrete band (106,526) of fastener elements extending longitudinally along the length of the closure strip and spaced apart from the band of loops; and
forming individual bags from the bag film, each bag having an associated length of closure strip. (See Fig. 48)

## Patentansprüche

1. Länglicher bzw. lang gestreckter Verschluss-Streifen (100,406,504), aufweisend:
Ein blatt- bzw. folienförmiges Harzsubstrat (102) mit einer Vorderseite (108) und einer Rückseite;
eine Anordnung bzw. Reihe von Befestigungselementen, die mit bzw. mit denen Schlingen bzw. Schleifen in Eingriff kommen können, mit der Vorderseite des Substrats einstückig geformt sind, sich von der Vorderseite des Substrats erstrecken und ein diskretes Band (106,526) von Befestigungselementen bilden, das sich in Längsrichtung entlang der Länge des Verschluss-Streifens erstreckt;
und einen Schlingen- bzw. Schleifenstreifen, der an der Vorderseite des Substrats getragen ist und ein diskretes Band (104,524) von in Eingriff bringbaren Schlingen bildet, das sich entlang der Länge des Verschluss-Streifens erstreckt und von dem Band der Befestigungselemente beabstandet sind;
wobei der Schlingenstreifen so angeordnet ist, dass mit ihm die Reihe der Befestigungselemente in Eingriff kommt, wenn das Substrat entlang einer Falt- bzw. Falzlinie (C, 418) gefaltet ist, die sich zwischen dem Schlingenstreifen und der Reihe der Befestigungselemente erstreckt.

2. Verschluss-Streifen nach Anspruch 1, bei dem das Substrat Anbringungsregionen (136) aufweist, die sich entlang seiner Länge zum permanenten Anbringen des Verschluss-Streifens über der Öffnung eines Beutels bzw. einer Tasche bzw. eines Sacks erstrecken; wobei die Anbringungsregionen ohne Befestigungselemente und Schlingen sind.

3. Verschluss-Streifen nach Anspruch 2, bei dem die Anbringungsregionen (136) an der Vorderseite (108) des Substrats angeordnet sind.

4. Verschluss-Streifen nach Anspruch 2, bei dem die Anbringungsregionen (136) an der Rückseite des Substrats angeordnet sind.

5. Verschluss-Streifen nach Anspruch 2, bei dem die Anbringungsregionen (136) mit einer Klebstoff- bzw. Klebemittelschicht zum permanenten Anbringen des Verschluss-Streifens über der Beutelöffnung bedeckt sind.

6. Verschluss-Streifen nach Anspruch 2, bei dem die Anbringungsregionen freigelegtes bzw. freiliegendes Harz des Substrats aufweisen, um den Verschluss-Streifen permanent an gegenüberliegende Seiten eines Beutels zu schweißen, der aus einem verträglichen bzw. kompatiblen Material gebildet ist.

7. Verschluss-Streifen nach Anspruch 1, bei dem das Substrat wenigstens eine zerreißbare bzw. aufreißbare Region definiert, die sich in der Längsrichtung
entlang der Länge des Verschluss-Streifens zwischen dem Band der Schlingen und dem Band der Befestigungselemente erstreckt, um das Substrat zwischen den Schlingen und den Befestigungselementen zu zerreißen bzw. aufzureißen, um einen zugehörigen Beutel zu öffnen.

8. Verschluss-Streifen nach Anspruch 7, bei dem die zerreißbare Region wenigstens eine Längsnut (134,420,514) aufweist, die sich entlang des Substrats erstreckt.

9. Verschluss-Streifen nach Anspruch 8, bei dem die zerreißbare Region ein Paar von beabstandeten Längsnuten (134) und eine Längsrippe (132) aufweist, die mit dem Substrat einstückig geformt ist und sich von dem Substrat zwischen dem Paar von Nuten erstreckt.

10. Verschluss-Streifen nach Anspruch 8, bei dem die Nut (134) an der Vorderseite (108) des Substrats definiert ist.

11. Verschluss-Streifen nach Anspruch 8, weiterhin eine Längsrippe (416) aufweisend, die mit dem Substrat einstückig geformt ist und sich von dem Substrat benachbart zu der Nut (420) an einer der Faltlinie (418) gegenüberliegenden Seite der Nut erstreckt, um einer Fortpflanzung bzw. einem Voranschreiten eines Risses von der Nut und von der Faltlinie weg zu widerstehen.

12. Verschluss-Streifen nach Anspruch 7, bei dem die zerreißbare Region ein eingebettetes, in Längsrichtung verlaufendes, kontinuierliches Filament bzw. Faden (320) aufweist, der dazu befähigt ist, von dem Verschluss-Streifen gerissen zu werden, um das Substrat entlang der zerreißbaren Region zu zerreißen bzw. aufzureißen.

13. Verschluss-Streifen nach Anspruch 12, bei dem das Filament (320) innerhalb einer Längsrippe (132) vollständig eingeschlossen ist, die mit dem Substrat einstückig geformt ist und sich von dem Substrat zwischen dem Band der Schlingen (104) und dem Band der Befestigungselemente (106) erstreckt.

14. Verschluss-Streifen nach Anspruch 13, bei dem die das Filament einschließende Längsrippe (132) an der Rückseite des Substrats angeordnet ist.

15. Verschluss-Streifen nach Anspruch 1, weiterhin eine Längsrippe (132,416) aufweisend, die mit der Vorderseite des Substrats einstückig geformt ist und sich von der Vorderseite des Substrats zwischen dem Band der Schlingen (104) und dem Band der Befestigungselemente (106) erstreckt.

16. Verschluss-Streifen nach Anspruch 15, bei dem die Längsrippe (132) von der Faltlinie (C) abliegt bzw. gegenüber der Faltlinie (C) versetzt ist.

17. Verschluss-Streifen nach Anspruch 1, bei dem der Schlingenstreifen (104) ein nichtgewebtes Fasergewebe aufweist.

18. Verschluss-Streifen nach Anspruch 17, bei dem die Bahn ein Basis- bzw. Grundgewicht von weniger als etwa 4 Unzen pro Quadratyard aufweist.

19. Verschluss-Streifen nach Anspruch 18, bei dem die Bahn ein Basis- bzw. Grundgewicht von weniger als etwa 2 Unzen pro Quadratyard aufweist.

20. Verschluss-Streifen nach Anspruch 17, bei dem das nichtgewebte Gewebe ein genadeltes Gewebe in einem gedehnten bzw. gereckten Zustand aufweist.

21. Verschluss-Streifen nach Anspruch 1, bei dem der Schlingenstreifen (104) eine zwischen zwei Längsrändern von diesem definierte Breite aufweist, wobei die Fasern des Schlingenstreifens an dem Substrat (102) über diese Breite befestigt sind.

22. Verschluss-Streifen nach Anspruch 21, bei dem Fasern des Schlingenstreifens (104) durch Harz des Substrats (102) über die Breite des Schlingenstreifens eingekapselt sind.

23. Verschluss-Streifen nach Anspruch 1, bei dem der Schlingen streifen eine Faserdichte aufweist, die über seine Breite im wesentlichen konstant ist, und bei dem der Schlingenstreifen diskrete Regionen (114,116,22,126,130) aufweist, die wesentlich mehr durch Harz als andere Regionen davon eingekapselt sind (vgl. Fig. 1A bis 1G).

24. Verschluss-Streifen nach Anspruch 23, bei dem die diskreten Regionen (122,130) in der Längsrichtung entlang des Schlingenstreifens (104) beabstandet sind.

25. Verschluss-Streifen nach Anspruch 23, bei dem die diskretenRegionen (114, 116,126,) sich der Länge nach entlang des Schlingenstreifens (104) erstrekken und der Breite nach voneinander beabstandet sind.

26. Verschluss-Streifen nach Anspruch 23, bei dem die diskreten Regionen in einem Schachbrettmuster angeordnet sind (vgl. Fig. 1 E).

27. Verschluss-Streifen nach Anspruch 1, bei dem der Schlingenstreifen (104) zwei Längsrandregionen (114,118) und eine Mittelregion zwischen den Randregionen aufweist, wobei die Randregionen an dem Substrat (102) befestigt sind und die Mittelregion im wesentlichen von dem Substrat lose bzw. frei ist.

28. Verschluss-Streifen nach Anspruch 1, der ferner zwischen dem Substrat und dem Schlingenstreifen eine Barriere- bzw. Sperr- bzw. Zwischenschicht (z.B. 178) aus einem von dem Substrat verschiedenen Material aufweist.

29. Verschluss-Streifen nach Anspruch 28, bei dem die Zwischenschicht (178) Papier aufweist.

30. Verschluss-Streifen nach Anspruch 28, bei dem die Zwischenschicht (178) Polymerharz aufweist.

31. Verschluss-Streifen nach Anspruch 1, bei dem das Substrat (102) aus einem Polyethylen oder aus einem Material gebildet ist, das ausgewählt ist aus der Gruppe, die besteht aus Polypropylen, Polyester, Nylon, Co-Polymere von irgend einem der vorhergehenden und kompatiblen Mischungen, die wenigstens eines bzw. einen der vorhergehenden enthalten.

32. Verschluss-Streifen nach Anspruch 1, ferner aufweisend: Einen Klebestreifen, der an der Vorderseite des Substrats zwischen dem Band der Befestigungselemente (106) und dem Band der Schlingen (104) getragen ist (bei 135), wobei der Klebestreifen eine freigelegte bzw. freiliegende Oberfläche aufweist, die so angeordnet ist, um die Vorderseite (108) des Verschluss-Streifens zu berühren, wenn der Verschluss-Streifen gefaltet ist, um die Schlingen mit den Befestigungselementen in Eingriff zu bringen, um den Verschluss-Streifen in einem gefalteten Zustand zu halten.

33. Verschluss-Streifen nach Anspruch 1, ferner aufweisend:
Einen ersten Klebestreifen, der an der Vorderseite des Substrats an einer Seite der Faltlinie (C) getragen ist; und
einen zweiten Klebestreifen, der an der Vorderseite des Substrats an der anderen Seite der Faltlinie (C) getragen ist; wobei der erste Klebestreifen und der zweite Klebestreifen jeweils eine freigelegte bzw. freiliegende Oberfläche aufweisen, die so angeordnet ist, damit sich diese Oberflächen einander berühren, wenn der Verschluss-Streifen (100) gefaltet ist, um die Schlingen (104) mit den Befestigungselementen (106) in Eingriff zu bringen, um den Verschluss-Streifen in einem gefalteten Zustand zu halten.

34. Verschluss-Streifen nach Anspruch 1, weiterhin einen Streifen aus einem abziehbaren bzw. ablösbaren Kleber aufweisend, der an der Vorderseite (108) des Substrats (102) getragen ist, um einen abziehbaren Verschluss bzw. Dichtung über die Öffnung eines zugeordneten Beutels zu ergeben.

35. Verschluss-Streifen nach Anspruch 34, bei dem der Streifen aus abziehbarem Kleber zwischen einem Längsrand des Verschluss-Streifens und der beiden der Bänder der Befestigungselemente (106) und Schlingen (104) angeordnet ist.

36. Verschluss-Streifen nach Anspruch 34, bei dem der Streifen aus abziehbarem Kleber zwischen dem Band der Befestigungselemente (106) und dem Band der Schlingen (104) angeordnet ist.

37. Verschluss-Streifen nach Anspruch 1, ferner eine Schicht bzw. Lage aus Papier (178) aufweisend, die an dem Substrat (102) permanent angeheftet ist.

38. Verschluss-Streifen nach Anspruch 37, bei dem die Lage aus Papier (178) an der Vorderseite (108) des Substrats entlang eines Längsrandbereichs (136) des Substrats getragen ist.

39. Verschluss-Streifen nach Anspruch 37, bei dem das Substrat eine zu der Vorderseite (108) entgegengesetzte Rückseite aufweist, wobei das Papier (178) an der Rückseite getragen ist.

40. Verschluss-Streifen nach Anspruch 37, bei dem die Lage aus Papier (178) zwischen einer mittleren Region des Schlingenstreifens (104) und dem Substrat (102) angeordnet ist.

41. Verschluss-Streifen nach Anspruch 1, weiterhin aufweisend:
Eine zweite Anordnung bzw. Reihe von Befestigungselementen, die mit Schlingen in Eingriff kommen können, mit der Rückseite des Substrats (102) einstückig geformt sind, sich von der Rückseite des Substrats (102) erstrekken und ein zweites Band (430) von Befestigungselementen bilden, das sich in Längsrichtung entlang der Länge des Verschluss-Streifens erstreckt, um eine zugeordnete Verpackung für eine Auslage bzw. Ausstellung aufzuhängen (vgl. Fig. 31).

42. Verschluss-Streifen nach Anspruch 41, ferner einen zweiten Schlingenstreifen aufweisend, der an der Rückseite des Substrats getragen ist und ein zweites, diskretes Band (432) von in Eingriff bringbaren Schlingen bildet, das von dem zweiten Band der Befestigungselemente beabstandet ist, um mit dem zweiten Band der Befestigungselemente einer anderen Verpackung in Eingriff zu kommen (vgl. Fig. 31).

43. Verschluss-Streifen nach Anspruch 1, weiterhin einen zweiten Schlingenstreifen aufweisend, der an der Rückseite des Substrats getragen ist, und ein zweites diskretes Band (432) von in Eingriff bringbaren Schlingen bildet, das sich entlang der Länge des Verschluss-Streifens erstreckt, um eine zugeordnete Verpackung für eine Auslage bzw. Ausstellung aufzuhängen (vgl. Figur 31).

44. Verschluss-Streifen nach Anspruch 1, bei dem das Substrat ferner mehrfach Längsreihen von höcker- bzw. buckelförmigen Vorsprüngen (528) definiert, wobei sich diese Reihen von der Vorderseite (108) des Substrats zwischen der Faltlinie (C) und jedem der Bänder von Schlingen (104) und Befestigungselementen (106) erstrecken.

45. Wiederverschließbarer Beutel bzw. Tasche bzw. Sack (138,400,442,458,500), aufweisend:
Einen Beutelkörper (140) mit zwei einander gegenüberliegenden Seitenwänden, die entlang dreier Ränder verbunden sind, um dazwischen eine Tasche mit einem offenen Ende zu bilden; und
einen Verschluss-Streifen (100,406,504), der an den zwei Seitenwänden des Beutelkörpers entlang des offenen Endes permanent angebracht ist, wobei der Verschluss-Streifen aufweist:
Ein blatt- bzw. folienförmiges Harzsubstrat (102) mit einer Vorderseite (108) und einer Rückseite;
Eine Anordnung bzw. Reihe von Befestigungselementen, die mit bzw. mit denen Schlingen bzw. Schleifen in Eingriff kommen können, mit der Vorderseite des Substrats einstückig geformt sind, sich von der Vorderseite des Substrats erstrecken und ein diskretes Band (106,526) von Befestigungselementen bilden, das sich in Längsrichtung entlang der Länge des Verschluss-Streifens erstreckt; und
einen Schlingenstreifen, der an der Vorderseite des Substrats getragen ist und ein diskretes Band (104,524) von in Eingriff bringbaren Schlingen bildet, das sich entlang der Länge des Verschluss-Streifens erstreckt und von dem Band der Befestigungselemente beabstandet ist;
wobei der Schlingenstreifen so angeordnet ist, dass mit ihm die Reihe der Befestigungselemente in Eingriff kommt, um den Beutel in einer lösbaren Art in einem geschlossenen Zustand zu halten.

46. Beutel nach Anspruch 45, bei dem das Substrat (102) zwischen dem Band der Schlingen (104) und dem Band der Befestigungselemente (106) kontinuierlich und fest ist und eine Dichtung bzw. Verschluss bildet, um den Beutel in einem abgedichteten bzw. verschlossenen Zustand zu halten, bevor der Beutel geöffnet wird.

47. Beutel nach Anspruch 45, in dem das Substrat des Verschluss-Streifens (100, 406,504) an den Seitenwänden des Beutelkörpers mittels Klebstoffs bzw. Klebemittel permanent befestigt ist.

48. Beutel nach Anspruch 45, bei dem das Substrat (102) des Verschluss-Streifens an die Seitenwände des Beutelkörpers (140) geschweißt ist.

49. Beutel nach Anspruch 48, bei dem das Substrat (102) des Verschluss-Streifens und die Seitenwände des Beutelkörpers (140) beide aus dem gleichen Harz gebildet sind, z.B. einem Polyethylen oder einem Material, das ausgewählt ist aus der Gruppe, die besteht aus Polypropylen, Polyester, Nylon und Co-Polymeren und kompatiblen Mischungen, die wenigstens eines derartiger Harze enthalten.

50. Beutel nach Anspruch 45, bei dem das Substrat (102) des Verschluss-Streifens wenigstens eine zerreißbare bzw. aufreißbare Region definiert, die sich in Längsrichtung entlang der Länge des Verschluss-Streifens zwischen dem Band der Schlingen (104) und dem Band der Befestigungselemente (106) erstreckt, um das Substrat zwischen den Schlingen und den Befestigungselementen zu zerreißen bzw. aufzureißen, um den Beutel zu öffnen.

51. Beutel nach Anspruch 50, bei dem die zerreißbare Region wenigstens eine Längsnut (134,420,514) aufweist, die sich entlang des Substrats (102) erstreckt.

52. Beutel nach Anspruch 51, bei dem die zerreißbare Region ein Paar von beabstandeten Längsnuten (134) und eine Längsrippe (132) aufweist, die mit dem Substrat einstückig geformt ist und sich von dem Substrat zwischen dem Paar von Nuten erstreckt.

53. Beutel nach Anspruch 50, bei dem die zerreißbare Region ein eingebettes, in Längsrichtung verlaufendes, kontinuierliches Filament bzw. Faden (320,554) aufweist, der dazu befähigt ist, von dem Verschluss-Streifen gerissen zu werden, um das Substrat entlang der zerreißbaren Region zu zerreißen bzw. aufzureißen.

54. Beutel nach Anspruch 53, bei dem das Filament (320,554) vollständig innerhalb einer Längsrippe (132) eingeschlossen ist, die sich von der Rückseite des Substrats (102) des Verschluss-Streifens erstreckt und innerhalb des Beutels angeordnet ist.

55. Beutel nach Anspruch 53, bei dem das Filament (320,554) ein Ende aufweist, das an einer Zuglasche (354) angebracht ist, die sich von einem Rand des Beutels erstreckt (vgl. Fig. 23 und 24).

56. Beutel nach Anspruch 53, bei dem der Beutel einen Schlitz (448,560a) durch eine Randregion (450,558) des Beutels definiert, jedoch sich nicht in das Innere des Beutels erstreckend, wobei der Schlitz eine greifbare bzw. fassbare Zuglasche innerhalb der Randregion definiert und ein Ende des Filaments (320,554) enthält.

57. Beutel nach Anspruch 56, bei dem die Zuglasche (564) zwischen einem Paar von Schlitzen (560a, 560b) an jeder Seite des Filaments (554) definiert ist, die sich durch einen angrenzenden Rand (562) des Beutels erstrecken (vgl.Fig.47).

58. Beutel nach Anspruch 45, bei dem der Schlingenstreifen (104) des Verschluss-Streifens ein nichtgewebtes Fasergewebe mit einem Basis- bzw. Grundgewicht von weniger als etwa 4 Unzen pro Quadratyard aufweist.

59. Beutel nach Anspruch 45, bei dem der Verschluss-Streifen (100) ferner einen Streifen aus abziehbarem bzw. ablösbarem Kleber aufweist, der an der Vorderseite (108) des Substrats getragen ist, um einen abziehbaren Verschluss bzw. Dichtung über die Öffnung des Beutels zu ergeben.

60. Beutel nach Anspruch 59, bei dem der abziehbare Verschluss innerhalb des Bandes der Schlingen (104) und des Bandes der Befestigungselemente (106) angeordnet ist.

61. Beutel nach Anspruch 59, bei dem der abziehbare Verschluss außerhalb des Bandes der Schlingen (104) und des Bandes der Befestigungselemente (106) angeordnet ist.

62. Beutel nach Anspruch 45, bei dem die Rückseite des Verschluss-Streifens eine Außenseite des Beutels bildet, wobei die Bänder der Schlingen (104) und Befestigungselemente (106) an einer Innenfläche des Beutels getragen sind.

63. Beutel nach Anspruch 62, bei dem der Verschluss-Streifen weiterhin eine zweite Anordnung bzw. Reihe von Befestigungselementen aufweist, die mit Schlingen in Eingriff kommen können, mit der Rückseite des Substrats (102) einstückig geformt sind, sich von der Rückseite des Substrats (102) erstrekken und ein zweites Band (430) von Befestigungselementen bilden, das sich in Längsrichtung entlang der Außenseite des Beutels erstreckt, um den Beutel für eine Auslage bzw. Ausstellung aufzuhängen (vgl. Fig. 31).

64. Beutel nach Anspruch 63, bei dem der Verschluss-Streifen weiterhin einen zweiten Schlingenstreifen aufweist, der an der Rückseite des Substrats getragen ist und ein zweites, diskretes Band (432) von in Eingriff bringbaren Schlingen bildet, das sich entlang der Außenseite des Beutels erstreckt, um den Beutel für eine Auslage bzw. Ausstellung aufzuhängen.

65. Beutel nach Anspruch 45, bei dem die Vorderseite (108) des Verschluss-Streifens eine Außenseite des Beutels bildet, wobei das Band der Schlingen (104) und das Band der Befestigungselemente (106) an der Außenseite des Beutels getragen sind.

66. Beutel nach Anspruch 65, bei dem sowohl das Band der Schlingen (104) als auch das Band der Befestigungselemente (106) an einer Vorderseite des Beutels derart angeordnet sind, dass die Befestigungselemente mit den Schlingen in Eingriff kommen, wenn ein angrenzender bzw. benachbarter Rand des Beutels darüber gefaltet ist (vgl. Fig. 34A).

67. Beutel nach Anspruch 66, bei dem das Substrat des Verschluss-Streifens eine zerreißbare bzw. aufreißbare Region zwischen den Bändern der Schleifen (104) und Befestigungselemente (106) definiert, wobei die zerreißbare Region entlang einer Seite des Beutels verläuft und so ausgestaltet ist, um zerrissen bzw. aufgerissen zu werden, um den Beutel zu öffnen.

68. Beutel nach Anspruch 67, bei dem die aufreißbare Region (514) so ausgestaltet ist, um durch Aufbringen bzw. Anwenden einer quer gerichteten Zugbelastung über die aufreißbare Region aufgerissen zu werden.

69. Beutel nach Anspruch 68, bei dem die aufreißbare Region (514) des Substrats in Bezug auf eine quer gerichtete Zugbelastung schwächer ist als die Seitenwände (516,520) des Beutels und die Anbringung bzw. Befestigung (518, 522) zwischen den Seitenwänden des Beutels und dem Beutelverschluß.

70. Beutel nach Anspruch 68, bei dem die Vorderseite des Beutels bildende Seitenwand eine freigelegte bzw. freiliegende Lasche (532,536) aufweist, um die Vorderseite des Beutels zu ergreifen und zu ziehen, um die aufreißbare Region (514) des Verschluss-Streifens aufzureißen.

71. Beutel nach Anspruch 70, bei dem sich die Lasche (532) über die Vorderseite des Beutels erstreckt.

72. Beutel nach Anspruch 65, bei dem das Band der Schlingen (104) und das Band der Befestigungselemente (106) an gegenüberliegenden Seiten des Beutels derart angeordnet sind, dass die Befestigungselemente mit den Schlingen in Eingriff kommen, wenn ein benachbarter bzw. angrenzender Rand des Beutels, wobei dieser angrenzende Rand durch eine Faltung bzw. Falte bzw. Falz in dem Verschluss-Streifen gebildet ist, zweimal darüber gefaltet ist (vgl. Fig. 35A bis 35D).

73. Beutel nach Anspruch 72, bei dem, wenn der Verschluss-Streifen zweimal darüber gefaltet ist, angrenzende bzw. benachbarte Schichten des Substrats gemeinsam eine Schranke bzw. Sperre gegenüber Fluiden bilden.

74. Beutel nach Anspruch 45, bei dem die Seitenwände des Beutels an dem Verschluss-Streifen entlang der Rückseite des Verschluss-Streifens angebracht sind (vgl. Fig. 16,16A,17A,22,25,31,36).

75. Beutel nach Anspruch 74, bei dem ein Rand des Beutels durch eine Faltung bzw. Falte bzw. Falz entlang des Substrats (102) des Verschluss-Streifens (100) zwischen den Bändern der Schlingen (104) und Befestigungselemente (106) gebildet ist (vgl. Fig. 16,25,31).

76. Beutel nach Anspruch 74, bei dem das Substrat eine Faltung bzw. Falte bzw. Falz zwischen den Bändern der Befestigungselemente (106) und Schlingen (104) bildet, wobei die Faltung des Substrats in Richtung zu dem Inneren des Beutels gerichtet ist (vgl. Fig. 16A, 36).

77. Beutel nach Anspruch 76, bei dem das Substrat (102) zwischen den Seitenwänden des Beutels fest und kontinuierlich ist, um eine Dichtung bzw. Verschluss über die Beutelöffnung zu bilden, bis der Beutel anfänglich geöffnet wird.

78. Beutel nach Anspruch 76, bei dem die Seitenwände des Beutels außerhalb der Längsränder des Verschluss-Streifens miteinander verbunden sind, um eine Dichtung bzw. Verschluss zu bilden, bis der Beutel anfänglich geöffnet wird (vgl. Fig.36).

79. Beutel nach Anspruch 45, bei dem wenigstens ein Längsrand des Verschluss-Streifens innerhalb des Beutels angeordnet ist und an den Seiten des Beutels, mit Ausnahme an den Rändern des Beutels, nicht angebracht ist (vgl. Fig. 2A,16,36).

80. Beutel nach Anspruch 45, bei dem das Substrat des Verschluss-Streifens an ihm aufgedruckte Merkmale bzw. Zeichen (454) trägt (vgl. Fig. 27,33).

81. Beutel nach Anspruch 45, bei dem das Substrat des Verschluss-Streifens ein Loch bzw. Öffnung (412) definiert, die einen ergreifbaren Handgriff zum Tragen des Beutels bildet.

82. Kontinuierliches, blatt- bzw. folienförmiges Produkt, das zum Bilden von Beuteln bzw. Taschen bzw. Säcken brauchbar ist, wobei das Produkt aufweist:
Einen kontinuierlichen, blatt- bzw. folienförmigen Film (254,446); und
Eine Länge eines Verschluss-Streifens (318,444,572), die mit dem Film permanent bzw. dauerhaft verbunden ist, wobei der Verschluss-Streifen aufweist:
Ein blatt- bzw. folienförmiges Harzsubstrat (102) mit einer freigelegten bzw. freiliegenden Vorderseite (108);
einen Schlingen- bzw. Schleifenstreifen, der an der Vorderseite des Substrats getragen ist und ein diskretes Band (104) von Schlingen aufweist, die mit bzw. mit denen Haken in Eingriff kommen können, wobei sich das Band (104) entlang der Länge des Verschluss-Streifens erstreckt; und
eine Anordnung bzw. Reihe von Befestigungselementen, die mit bzw. mit denen Schlingen bzw. Schleifen in Eingriff kommen können, die mit Harz der Vorderseite des Substrats einstückig geformt sind und ein diskretes Band (106) von Befestigungselementen bilden, das sich in Längsrichtung entlang der Länge des Verschluss-Streifens erstreckt und von dem Band aus Schlingen beabstandet ist.

83. Blatt- bzw. folienförmiges Produkt nach Anspruch 82, bei dem der Verschluss-Streifen (318) kontinuierlich ist und sich entlang der Mittellinie des Films erstreckt (vgl. Fig. 38A).

84. Blatt- bzw. folienförmiges Produkt nach Anspruch 82, bei dem der Verschluss-Streifen (444) kontinuierlich ist und sich entlang eines Randes des Films erstreckt (vgl. Fig. 38B).

85. Blatt- bzw. folienförmiges Produkt nach Anspruch 82, bei dem sich der Verschluss-Streifen (572) quer über den Film erstreckt (vgl. Fig. 48).

86. Verfahren zum Herstellen eines Verschluss-Streifens, wobei das Verfahren aufweist:
Formen eines kontinuierlichen, blatt- bzw. folienförmigen Substrats (102) mit einem Band von Befestigungselementen (106,526), die mit einer Vorderseite des Substrats einstückig geformt sind und sich von der Vorderseite des Substrats erstrecken; und
Anbringen eines kontinuierlichen Streifens aus Schlingenmaterial (106), um die Vorderseite des Substrats als Harz zu bilden bzw. harzförmig auszubilden, um ein diskretes Band von Schlingen (104,524) zu bilden, das von dem Band der Befestigungselemente beabstandet ist.

87. Verfahren nach Anspruch 86, bei dem der Schritt des Formens ein derartiges Bilden des Substrats aufweist, dass dieses einen in Längsrichtung verlaufenden, aufreißbaren bzw. zerreißbaren Abschnitt aufweist, der so angeordnet ist, um zwischen dem Band der Schlingen und dem Band der Befestigungselemente angeordnet zu werden.

88. Verfahren nach Anspruch 87, bei dem der aufreißbare Abschnitt des Substrats wenigstens eine sich in Längsrichtung erstreckende Nut (134,420,514) hierin definiert, wobei der Schritt des Formens ein Bilden der Nut in dem Substrat beinhaltet, wenn das Substrat gebildet wird.

89. Verfahren nach Anspruch 88, bei dem die Nut (134,420,514) in der Vorderseite (108) des Substrats gebildet wird.

90. Verfahren nach Anspruch 88, bei dem der aufreißbare Abschnitt ein Paar von sich in Längsrichtung erstreckenden Nuten (134) in dem Substrat definiert.

91. Verfahren nach Anspruch 90, bei dem der Schritt des Formens ferner ein gleichzeitiges Bilden in einer Längsrippe (132) beinhaltet, die sich von dem Substrat zwischen einem Paar der Nuten erstreckt.

92. Verfahren nach Anspruch 86, bei dem der Schritt des Formens ein gleichzeitiges Bilden einer Längsrippe (132) beinhaltet, die sich von dem Substrat (102) erstreckt, wobei die Rippe so angeordnet ist, um zwischen dem Band der Befestigungselemente und dem Band der Schleifen angeordnet zu werden.

93. Verfahren nach Anspruch 92, bei dem die Rippe (132) so geformt ist, um näher bzw. enger bei dem einen als dem anderen der Bänder von Befestigungselementen und Schlingen (vgl. Fig. 29) zu sein.

94. Verfahren nach Anspruch 86, bei dem der Schritt des Formens ein gleichzeitiges Einbetten eines in Längsrichtung verlaufenden, kontinuierlichen Filaments bzw. Fadens (320) in dem Harz des Substrats (102) beinhaltet.

95. Verfahren nach Anspruch 94, bei dem das Filament durch Harz einer Rippe (132) vollständig eingeschlossen wird, die sich von einer Seite des Substrats erstreckt.

96. Verfahren nach Anspruch 86, bei dem der Streifen aus Schlingenmaterial ein nichtgewebtes Gewebe aus miteinander verwirrten bzw. verwickelten Fasern aufweist, die die Schlingen bildet und ein Basis- bzw. Grundgewicht von weniger als 4 Unzen pro Quadratyard aufweist.

97. Verfahren nach Anspruch 86, bei dem der Schritt des Anbringens ein Einkapseln von Fasern des Streifens aus Schlingenmaterial in Harz des Substrats über die Breite des Streifens aus Schlingenmaterial aufweist.

98. Verfahren nach Anspruch 86, bei dem der Streifen aus Schlingenmaterial eine Faserdichte aufweist, die über seine Breite im wesentlichen konstant ist, und bei dem der Schritt des Anbringens ein permanentes Verbinden diskreter Regionen (114,116,22,126,130) des Streifens aus Schlingenmaterial mit dem Substrat aufweist, während andere Regionen des Streifens aus Schlingenmaterial in einem weniger verbundenen Zustand gelassen werden (vgl. Fig. 1A bis 1G).

99. Verfahren nach Anspruch 88, bei der Streifen aus Schlingenmaterial (160') an dem Substrat (102) permanent angebracht wird, nachdem das Substrat geformt ist.

100. Verfahren nach Anspruch 99, bei dem der Streifen aus Schlingenmaterial an dem Substrat durch Erwärmen der Vorderseite (108) des Substrats und anschließendes Drücken bzw. Pressen des Schlingenmaterials gegen bzw. an die Vorderseite des Substrats angebracht wird, wobei sich die Vorderseite des Substrats auf einer erhöhten Temperatur befindet.

101. Verfahren nach Anspruch 86, bei dem der Streifen aus Schlingenmaterial (160) an dem Substrat (102) permanent angebracht wird, wenn das Substrat geformt wird.

102. Verfahren nach Anspruch 101, bei dem die Schritte des Formens und Anbringens beinhalten:
Kontinuierliches Zuführen des Streifens aus Schlingenmaterial (160) durch einen Spalt (152), der zwischen einer sich drehenden Formwalze (154) und einer Druckwalze (156) definiert ist, wobei die sich drehende Formwalze eine Vielzahl von Hohlräumen um ihren Umfang herum zum Formen der Befestigungselemente definiert, während
geschmolzenes Harz zu der Formwalze (154) unter Bedingungen kontinuierlich zugebracht bzw. zugeführt wird, die das Harz veranlassen, die Hohlräume zu füllen und das Substrat zu bilden, derart, dass Druck in dem Spalt (152) den Streifen aus Schlingenmaterial (160) mit dem Harz des Substrats verbindet (vgl. Fig. 7).

103. Verfahren nach Anspruch 102, bei dem die Formwalze (154) zwei sich erstreckende Grate bzw. Rücken bzw. vorstehende Ränder aufweist, die ein Paar von Nuten (134) in dem Substrat bilden.

104. Verfahren nach Anspruch 103, bei dem der Schritt des Formens ein gleichzeitiges Bilden einer Längsrippe (132) beinhaltet, die sich von dem Substrat (102) zwischen dem Paar von Nuten (134) erstreckt, wobei die Formwalze zwischen ihren zwei Graten einen Kanal zum Bilden der Längsrippe definiert.

105. Verfahren nach Anspruch 101, bei dem die Schritte des Formens und Anbringens beinhalten:
Kontinuierliches Zuführen des Streifens aus Schlingenmaterials durch einen Spalt (190), der zwischen einer sich drehenden Formwalze (154) und einem stationären Extrusions- bzw. Spritzkopf (188) definiert ist, wobei die sich drehende Formwalze eine Vielzahl von Hohlräumen um ihren Umfang herum zum Formen der Befestigungselemente definiert, während geschmolzenes Harz zu dem Spalt (190) unter Bedingungen kontinuierlich zugebracht bzw. zugeführt wird, die das Harz veranlassen, die Hohlräume zu füllen und das Substrat zu bilden und an dem Streifen aus Schlingenmaterial (160) permanent anzuhaften (vgl. Fig. 11).

106. Verfahren nach Anspruch 105, ferner aufweisend: während der Streifen aus Schlingenmaterial (160) durch den Spalt (109) kontinuierlich zugeführt wird, kontinuierliches Zuführen eines Streifens aus vorgeformtem Material (178) durch den Spalt zwischen dem Streifen aus Schlingenmaterial (160) und dem Spritzkopf (188), derart, dass das vorgeformte Material die Einkapselung von Fasern des Streifens aus Schlingenmaterial in vorbestimmten Regionen hindert bzw. hemmt und das vorgeformte Material in den Verschluss-Streifen eingearbeitet bzw. eingebracht wird.

107. Verfahren nach Anspruch 106, bei dem das vorgeformte Material (178) aus der Gruppe ausgewählt ist, die aus Papier, Gewebe und Kunststofffilm bzw.-folie besteht.

108. Verfahren nach Anspruch 106, bei dem das vorgeformte Material Perforationen definiert, die sich durch seine Dicke erstrecken.

109. Verfahren nach Anspruch 101, bei dem die Schritte des Formens und Anbringens beinhalten:
Kontinuierliches Zuführen des Streifens aus Schlingenmaterial (160) durch einen Spalt (152), der benachbart zu dem Umfang einer sich drehenden Formwalze (154) definiert ist, wobei die Formwalze wenigstens einen Absteck- bzw. Abgrenz-Ring (180) aufweist, der einen konturierten bzw. profilierten äußeren Rand aufweist und so angeordnet ist, um eine vorbestimmte Region des Streifens aus Schlingenmaterial gegen das Harz unter Druck in dem Spalt zu halten (vgl. Fig. 9 und 10).

110. Verfahren nach Anspruch 109, bei dem der Außenrand des Absteck- bzw. Abgrenzrings Vorsprünge (184) aufweist, die um seinen Umfang herum beabstandet sind, wobei die Vorsprünge diskreten Regionen von verhältnismäßig größerer Einkapselung des Streifens aus Schlingenmaterial (160) entsprechen.

111. Verfahren nach Anspruch 109, bei dem die Formwalze (154) mehrfache Absteck- bzw. Abgrenzringe (180) aufweist, die so angeordnet sind, um ein vorbestimmtes Verbindungsmuster über den Streifen aus Schlingenmaterial zu erzeugen.

112. Verfahren zum Herstellen wiederverschließbarer Beutel bzw. Taschen bzw. Säcke, wobei das Verfahren aufweist:
Bereitstellen einer kontinuierlichen Länge eines blatt- bzw. folienförmigen Beutelwandmaterials (254);
Bereitstellen eines kontinuierlichen Verschluss-Streifens, der aufweist:
Ein blatt- bzw. folienförmiges Harzsubstrat (102) mit einer Vorderseite (108);
einen Schlingen bzw. Schleifenstreifen (160), der an der Vorderseite des Substrats getragen ist und ein diskretes Band (104) von in Eingriff bringbaren Schlingen entlang der Länge des Verschluss-Streifens bildet;
eine Anordnung bzw. Reihe von Befestigungselementen, die mit bzw. mit denen Schlingen bzw. Schleifen in Eingriff kommen können, mit der Vorderseite des Substrats einstückig geformt sind und ein diskretes Band (106) von Befestigungselementen bilden, das sich in Längsrichtung entlang der Länge des Verschluss-Streifens erstreckt und von dem Band der Schlingen beabstandet ist;
permanentes Anbringen des Verschluss-Streifens entlang des folienförmigen Beutelwandmaterials, um eine kontinuierliche Länge von Vorform-Beutelmaterial zu bilden; und
Formen einzelner bzw. individueller Beutel aus dem Vorform-Beutelmaterial.

113. Verfahren nach Anspruch 112, bei dem der Schritt des Anbringens einen Vorform-Schlauch aus Beutelmaterial erzeugt und bei dem die Schritte des Anbringens und Bildens gleichzeitig in einem vertikalen Form- und Füll-Prozess durchgeführt werden, wobei die einzelnen bzw. individuellen Beutel eine vorbestimmte Menge von Material enthalten, das in den Beuteln zu speichern ist (vgl. Fig. 15).

114. Verfahren nach Anspruch 113, bei dem der Verschluss-Streifen (266) an Längsrändern des blatt- bzw. folienförmigen Kunststoffes angebracht wird, um einen Rippenverschluss des Vorformschlauches zu bilden.

115. Verfahren nach Anspruch 114, bei dem der Verschluss-Streifen gefaltet wird, um eine sich auswärts weg von dem Vorformschlauch erstreckende Faltung zu bilden (vgl. Fig. 16).

116. Verfahren nach Anspruch 115, bei dem die Faltung einen distalen Rand des Rippenverschlusses definiert.

117. Verfahren nach Anspruch 113, bei dem der Verschluss-Streifen gefaltet wird, um eine sich einwärts, in Richtung zu dem Vorformschlauch erstreckende Faltung zu bilden (vgl. Fig. 16A).

118. Verfahren nach Anspruch 112, bei dem der Schritt des Anbringens einen Vorformschlauch aus Beutelmaterial erzeugt und bei dem die Schritte des Anbringens und Bildens gleichzeitig in einem horizontalen Form- und Füllprozess durchgeführt werden, wobei die individuellen bzw. einzelnen Beutel um zugeordnete Materialpackungen bzw. -verpackungen herum gebildet werden (vgl. Fig. 17-19).

119. Verfahren nach Anspruch 118, bei dem Längsränder des Beutelseitenwandmaterials zusammengebracht werden, um einen Rippenverschluss zu bilden,
wobei der Verschluss-Streifen in Längsrichtung gefaltet und innerhalb des Rippenverschlusses angeordnet ist (vgl. Fig. 17,17A).

120. Verfahren nach Anspruch 118, bei dem Längsränder des Beutelseitenwandmaterials in einem Rippenverschluss zusammengebracht werden, wobei der Verschluss-Streifen in Längsrichtung um die Längsränder des Beutelseitenwandmaterials herum gefaltet und an den Längsrändern des Beutelseitenwandmaterials angebracht ist (vgl. Fig. 18).

121. Verfahren nach Anspruch 112, bei dem der Schritt des Anbringens ein Falten des Verschluss-Streifens entlang seiner Länge beinhaltet, um das Band der Schlingen (104) und das Band der Befestigungselemente (106) in einer Eingriffszone in Eingriff zu bringen, wobei die Schlingen und die Befestigungselemente ihre darunter liegenden Regionen des Substrats in einer beabstandeten Beziehung halten (vgl. Fig. 17A).

122. Verfahren nach Anspruch 121, bei dem der Schritt des Anbringens weiterhin ein Schweißen des Beutelseitenwandmaterials an die Rückseite des Substrats beinhaltet, wobei die Eingriffszone eine Wärmeschranke bzw.-sperre ergibt, um ein permanentes Zusammenschweißen des Substrats in seinem gefalteten Zustand zu verhindern.

123. Verfahren nach Anspruch 112, bei dem der Schritt des Bildens aufweist: Falten des Vorformbeutelmaterials entlang seiner Mittellinie; und sodann Bilden von Querdichtungen bzw. -verschlüssen, die entlang des Vorformbeutelmaterials bei Beutellängenintervallen bzw. -zwischenräumen beabstandet sind, um eine Kette von offenendigen Beuteln zu bilden (vgl. Fig. 20).

124. Verfahren nach Anspruch 123, bei dem der Verschluss-Streifen entlang des Beutelseitenwandmaterials zwischen Längsrändern dieses Materials angebracht ist, wobei das Vorformbeutelmaterial darauffolgend bei dem Verschluss-Streifen gefaltet wird, um mit dem Band der Schlingen und dem Band der Befestigungselemente in Eingriff zu kommen (vgl. Fig. 20,26).

125. Verfahren nach Anspruch 123, bei dem der Schritt des Anbringens aufweist:
Individuelles bzw. einzelnes Falten des Beutelseitenwandmaterials (254) und des Verschluss-Streifens (318); und sodann
Verbinden des gefalteten Wandmaterials und des Verschluss-Streifens entlang ihrer Längsränder, um einen kontinuierlichen Schlauch aus Vorformbeutelmaterial zu bilden (vgl. Fig. 25).

126. Verfahren nach Anspruch 125, bei dem der Schritt des Bildens ein Erzeugen von Querdichtungen bzw. -verschlüssen quer über den Schlauch aus Vorform-beutelmaterial aufweist, um eine Reihe von diskreten, leeren Beuteln zu bilden.

127. Verfahren nach Anspruch 112, bei dem das Beutelseitenwandmaterial als zwei getrennte Materialfolien bzw. -blätter (368,370) vorgesehen ist, wobei der Schritt des Anbringens ein Anbringen des Verschluss-Streifens (372) an einem Längsrand jeder Folie aufweist, derart, dass das Vorformbeutelmaterial die zwei Materialfolien, die an dem Verschluss-Streifen verbunden sind, aufweist, und wobei der Schritt des Bildens individueller bzw. einzelner Beutel ein Bilden von Querdichtungen bzw. -verschlüssen (384) quer über das Vorformbeutelmaterial und ein Verbinden der anderen Längsränder der Materialfolien aufweist, um eine Reihe von verschlossenen bzw. versiegelten Beuteln zu bilden (vgl. Fig. 26).

128. Verfahren nach Anspruch 112, bei dem der Verschluss-Streifen eine eingebettete Zugschnur (320) enthält, wobei der Schritt des Formens ein Formen einer ergreifbaren bzw. fassbaren Zuglasche (354) beinhaltet, die sich von einem Rand eines jeden Beutels erstreckt, wobei die Zuglasche ein Ende der Zugschnur enthält (vgl. Fig. 22-24, 47).

129. Verfahren nach Anspruch 128, bei dem die ergreifbare Zuglasche (354) durch Schlitzen bzw. Aufschlitzen eines jeden Beutels in einem seitlichen Verschluss- bzw. Versiegelungsbereich von diesem gebildet wird.

130. Verfahren nach Anspruch 129, bei dem das Schlitzen durch die Zugschnur schneidet, sich jedoch nicht in das Innere des Beutels erstreckt.

131. Verfahren nach Anspruch 129, bei dem das Schlitzen zwei Schlitze (560a, 560b) bildet, die sich von einem angrenzenden bzw. benachbarten Rand des Beutels zu der Zugschnur erstrecken.

132. Verfahren zum Herstellen wiederverschließbarer Beutel in einem vertikalen Form- und Füllprozess, wobei das Verfahren aufweist:
Abrollen einer kontinuierlichen Länge eines blatt- bzw. folienförmigen Beutelfilms (254) und Richten bzw. Lenken des abgerollten Films über einen Formkopf, wobei der Beutelfilm um eine Beutellänge zwischen Pausen bzw. Unterbrechungen vorgeschoben wird;
während jeder Pause Anbringen einer Länge (572) des Verschluss-Streifens über den abgerollten Beutelfilm stromabwärts des Formkopfes, wobei jede Länge des Verschluss-Streifens aufweist:
Ein blatt- bzw. folienförmiges Harzsubstrat (102) mit einer Vorderseite;
einen Schlingen- bzw. Schleifenstreifen, der an der Vorderseite des Substrats getragen ist und ein diskretes Band (104,524) von bzw. in Eingriff bringbaren Schlingen entlang der Länge des Verschluss-Streifens bildet; und eine Anordnung bzw. Reihe von Befestigungselementen, die mit bzw. mit denen Schlingen in Eingriff kommen können, mit der Vorderseite des Substrats einstückig geformt sind und ein diskretes Band (106,526) von Befestigungselementen bilden, das sich in Längsrichtung entlang der Länge des Verschluss-Streifens erstreckt und von dem Band der Schlingen beabstandet ist; und
Bilden individueller bzw. einzelner Beutel aus dem Beutelfilm, wobei jeder Beutel eine zugeordnete Länge des Verschluss-Streifens aufweist (vgl. Fig. 48).

## Revendications

1. Bande de fermeture allongée (100, 406, 504) comprenant :
un substrat de résine en forme de feuille (102) ayant une face avant (108) et une face arrière ;
un groupe d'éléments de fixation venant en prise avec des boucles, moulé d'un seul tenant avec et s'étendant à partir de la face avant du substrat et formant une bande discrète (106, 526) d'éléments de fixation s'étendant longitudinalement selon la longueur de la bande de fermeture ;
et
une bande à boucles portée sur la face avant du substrat et formant une bande discrète (104, 524) de boucles pouvant venir en prise s'étendant selon la longueur de la bande de fermeture et espacée de la bande d'éléments de fixation ;
la bande à boucles agencée de façon à venir en prise avec le groupe d'éléments de fixation lorsque le substrat est plié le long d'une ligne de pliage (C, 418) s'étendant entre la bande à boucles et le groupe d'éléments de fixation.

2. Bande de fermeture selon la revendication 1, dans laquelle le substrat présente des régions de fixation (136) s'étendant selon sa longueur pour fixer de manière permanente la bande de fermeture de part et d'autre d'une ouverture de sac ; les régions de fixation étant dépourvues d'éléments de fixation et de boucles.

3. Bande de fermeture selon la revendication 2, dans laquelle les régions de fixation (136) sont disposées sur la face avant (108) du substrat.

4. Bande de fermeture selon la revendication 2, dans laquelle les régions de fixation (136) sont disposées sur la face arrière du substrat.

5. Bande de fermeture selon la revendication 2, dans laquelle les régions de fixation (136) sont couvertes d'une couche de colle pour fixer de manière permanente la bande de fermeture de part et d'autre de l'ouverture de sac.

6. Bande de fermeture selon la revendication 2, dans laquelle les régions de fixation comprennent une résine exposée du substrat, pour souder de manière permanente la bande de fermeture aux côtés opposés d'un sac formé dans un matériau compatible.

7. Bande de fermeture selon la revendication 1, dans laquelle le substrat définit au moins une région cassable s'étendant longitudinalement sur toute la longueur de la bande de fermeture entre la bande de boucles et la bande d'éléments de fixation, pour déchirer le substrat entre les boucles et les éléments de fixation, pour ouvrir un sac associé.

8. Bande de fermeture selon la revendication 7, dans laquelle la région cassable comprend au moins une rainure longitudinale (134, 420, 514) s'étendant le long du substrat.

9. Bande de fermeture selon la revendication 8, dans laquelle la région cassable comprend deux rainures longitudinales espacées l'une de l'autre (134) et une nervure longitudinale (132) moulée d'un seul tenant avec et s'étendant à partir du substrat entre les deux rainures.

10. Bande de fermeture selon la revendication 8, dans laquelle la rainure (134) est définie sur la face avant (108) du substrat.

11. Bande de fermeture selon la revendication 8, comprenant en outre une nervure longitudinale (416) moulée d'un seul tenant avec et s'étendant à partir du substrat adjacent à la rainure (420), sur un côté de la rainure opposé à la ligne de pliage (418), pour résister à la propagation d'une déchirure à partir de la rainure à distance de la ligne de pliage.

12. Bande de fermeture selon la revendication 7, dans laquelle la région cassable comprend un filament longitudinalement continu noyé (320) adapté pour être arraché de la bande de fermeture pour déchirer le substrat le long de la région cassable.

13. Bande de fermeture selon la revendication 12, dans laquelle le filament (320) est complètement contenu à l'intérieur d'une nervure longitudinale (132) moulée d'un seul tenant avec et s'étendant à partir du substrat entre la bande de boucles (104) et la bande d'éléments de fixation (106).

14. Bande de fermeture selon la revendication 13, dans laquelle la nervure longitudinale (132) contenant le filament est disposée sur la face arrière du substrat.

15. Bande de fermeture selon la revendication 1, comprenant en outre une nervure longitudinale (132, 416) moulée d'un seul tenant avec et s'étendant à partir de la face avant du substrat entre la bande de boucles (104) et la bande d'éléments de fixation (106).

16. Bande de fermeture selon la revendication 15, dans laquelle la nervure longitudinale (132) est décalée par rapport à la ligne de pliage (C).

17. Bande de fermeture selon la revendication 1, dans laquelle la bande à boucles (104) comprend une bande continue non-tissée de fibres.

18. Bande de fermeture selon la revendication 17, dans laquelle la bande continue présente une masse surfacique inférieure à environ 4 onces par yard carré.

19. Bande de fermeture selon la revendication 18, dans laquelle la bande continue présente une masse surfacique inférieure à environ 2 onces par yard carré.

20. Bande de fermeture selon la revendication 17, dans laquelle la bande continue non-tissée comprend une bande continue aiguilletée dans un état étiré.

21. Bande de fermeture selon la revendication 1, dans laquelle la largeur de la bande à boucles (104) est définie entre deux bords longitudinaux de celle-ci, des fibres de la bande à boucles étant fixées au substrat (102) de part et d'autre de ladite largeur.

22. Bande de fermeture selon la revendication 21, dans laquelle les fibres de la bande à boucles (104) sont encapsulées par la résine du substrat (102) de part et d'autre de ladite largeur.

23. Bande de fermeture selon la revendication 1, dans laquelle la bande à boucles présente une densité de fibres qui est sensiblement constante de part et d'autre de sa largeur, et dans laquelle la bande à boucles comprend des régions discrètes (114, 116, 22, 126, 130) qui sont sensiblement plus encapsulées de résine que d'autres régions de celle-ci (voir figures 1A à 1G).

24. Bande de fermeture selon la revendication 23, dans laquelle lesdites régions discrètes (122, 130) sont espacées les unes des autres longitudinalement le long de la bande à boucles (104).

25. Bande de fermeture selon la revendication 23, dans laquelle lesdites régions discrètes (114, 116, 126) s'étendent dans le sens de la longueur le long de la bande à boucles (104) et sont espacées les unes des autres dans le sens de la largeur.

26. Bande de fermeture selon la revendication 23, dans laquelle lesdites régions discrètes sont agencées selon un motif en échiquier (voir figure 1E).

27. Bande de fermeture selon la revendication 1, dans laquelle la bande à boucles (104) comporte deux régions de bord longitudinales (114, 118) et une région centrale entre les régions de bord, les régions de bord étant fixées au substrat (102) et la région centrale étant sensiblement détachée du substrat.

28. Bande de fermeture selon la revendication 1, comprenant en outre, entre le substrat et la bande à boucles, une couche barrière (ex. 178) faite dans un matériau différent de celui du substrat.

29. Bande de fermeture selon la revendication 28, dans laquelle la couche barrière (178) comprend du papier.

30. Bande de fermeture selon la revendication 28, dans laquelle la couche barrière (178) comprend une résine polymère.

31. Bande de fermeture selon la revendication 1, dans laquelle le substrat (102) est formé d'un polyéthylène ou d'un matériau choisi dans le groupe se composant de polypropylène, de polyester, de Nylon, de copolymères de l'un quelconque de ces éléments, et de mélanges compatibles qui comprennent au moins l'un des éléments susmentionnés.

32. Bande de fermeture selon la revendication 1, comprenant en outre une bande adhésive portée sur la face avant du substrat, entre la bande d'éléments de fixation (106) et la bande de boucles (104) (en 135), la bande adhésive comportant une surface exposée agencée de façon à venir au contact de la face avant (108) de la bande de fermeture lorsque la bande de fermeture est pliée pour mettre les boucles en prise avec les éléments de fixation, afin de maintenir la bande de fermeture à l'état plié.

33. Bande de fermeture selon la revendication 1, comprenant en outre :
une première bande adhésive portée sur la face avant du substrat, d'un côté de la ligne de pliage (C) ; et
une seconde bande adhésive portée sur la face avant du substrat de l'autre côté de la ligne de pliage (C) ; les première et seconde bandes adhésives ayant des surfaces exposées agencées de façon à venir en contact l'une avec l'autre lorsque la bande de fermeture (100) est pliée pour mettre les boucles (104) en prise avec les éléments de fixation (106), afin de maintenir la bande de fermeture à l'état plié.

34. Bande de fermeture selon la revendication 1, comprenant en outre une bande d'adhésif pelable portée sur la face avant (108) du substrat (102) pour conférer un scellement pelable de part et d'autre de l'ouverture d'un sac associé.

35. Bande de fermeture selon la revendication 34, dans laquelle la bande d'adhésif pelable est disposée entre un bord longitudinal de la bande de fermeture et à la fois les bandes d'éléments de fixation (106) et de boucles (104).

36. Bande de fermeture selon la revendication 34, dans laquelle la bande d'adhésif pelable est disposée entre les bandes d'éléments de fixation (106) et de boucles (104).

37. Bande de fermeture selon la revendication 1, comprenant en outre une couche de papier (178) collée de manière permanente au substrat (102).

38. Bande de fermeture selon la revendication 37, dans laquelle la couche de papier (178) est portée sur la face avant (108) du substrat, le long d'une région de bord longitudinale (136) du substrat.

39. Bande de fermeture selon la revendication 37, dans laquelle le substrat possède une face arrière en face de la face avant (108), le papier (178) étant porté sur la face arrière.

40. Bande de fermeture selon la revendication 37, dans laquelle la couche de papier (178) est disposée entre une région centrale de la bande à boucles (104) et le substrat (102).

41. Bande de fermeture selon la revendication 1, comprenant en outre
un second groupe d'éléments de fixation pouvant venir en prise avec les boucles, moulé d'un seul tenant avec et s'étendant à partir de la face arrière du substrat (102) et formant une seconde bande (430) d'éléments de fixation s'étendant longitudinalement sur toute la longueur de la bande de fermeture, pour suspendre un emballage associé à des fins de présentation (voir figure 31).

42. Bande de fermeture selon la revendication 41, comprenant en outre une seconde bande à boucles portée sur la face arrière du substrat et formant une seconde bande discrète (432) de boucles pouvant venir en prise, espacée de la seconde bande d'éléments de fixation, pour venir en prise avec la seconde bande d'éléments de fixation d'un autre emballage (voir figure 31).

43. Bande de fermeture selon la revendication 1, comprenant en outre une seconde bande à boucles portée sur la face arrière du substrat et formant une seconde bande discrète (432) de boucles pouvant venir en prise s'étendant sur toute la longueur de la bande de fermeture, pour suspendre un emballage associé à des fins de présentation (voir figure 31).

44. Bande de fermeture selon la revendication 1, dans laquelle le substrat définit en outre plusieurs rangées longitudinales de saillies en forme de bosses (528) s'étendant à partir de sa face avant (108) entre la ligne de pliage (C) et chacune des bandes de boucles (104) et d'éléments de fixation (106).

45. Sac refermable (138, 400, 442, 458, 500) comprenant :
un corps de sac (140) ayant deux parois latérales opposées jointes le long de trois bords pour former entre elles une poche ayant une extrémité ouverte ; et
une bande de fermeture (100, 406, 504) fixée de manière permanente aux deux parois latérales du corps de sac le long de l'extrémité ouverte, la bande de fermeture comprenant
un substrat de résine en forme de feuille (102) ayant une face avant (108) et une face arrière ;
un groupe d'éléments de fixation pouvant venir en prise avec les boucles, moulé d'un seul tenant avec et s'étendant à partir de la face avant du substrat et formant une bande discrète (106, 526) d'éléments de fixation s'étendant longitudinalement sur toute la longueur de la bande de fermeture ; et
une bande à boucles portée sur la face avant du substrat et formant une bande discrète (104, 524) de boucles pouvant venir en prise s'étendant sur toute la longueur de la bande de fermeture et espacée de la bande d'éléments de fixation ;
la bande à boucles agencée de façon à venir en prise avec le groupe d'éléments de fixation pour conserver de manière amovible le sac à l'état fermé.

46. Sac selon la revendication 45, dans lequel le substrat (102) est continu et plein entre la bande de boucles (104) et la bande d'éléments de fixation (106) et forme un scellement pour maintenir le sac à l'état scellé avant que le sac ne soit ouvert.

47. Sac selon la revendication 45, dans lequel le substrat de la bande de fermeture (100, 406, 504) est fixé de manière permanente aux parois latérales du corps de sac à l'aide d'un adhésif.

48. Sac selon la revendication 45, dans lequel le substrat (102) de la bande de fermeture est soudé aux parois latérales du corps de sac (140).

49. Sac selon la revendication 48, dans lequel le substrat (102) de la bande de fermeture et les parois latérales du corps de sac (140) sont tous les deux formés à partir de la même résine, telle qu'un polyéthylène ou un matériau choisi dans le groupe constitué par le polypropylène, le polyester, le Nylon et des copolymères et des mélanges compatibles qui comprennent au moins une de ces résines.

50. Sac selon la revendication 45, dans lequel le substrat (102) de la bande de fermeture définit au moins une région cassable s'étendant longitudinalement sur toute la longueur de la bande de fermeture entre la bande de boucles (104) et la bande d'éléments de fixation (106), pour déchirer le substrat entre les boucles et les éléments de fixation pour ouvrir le sac.

51. Sac selon la revendication 50, dans lequel la région cassable comprend au moins une rainure longitudinale (134, 420, 514) s'étendant le long du substrat (102).

52. Sac selon la revendication 51, dans lequel la région cassable comprend deux rainures longitudinales espacées l'une de l'autre (134) et une nervure longitudinale (132) moulée d'un seul tenant avec et s'étendant à partir du substrat entre les deux rainures.

53. Sac selon la revendication 50, dans lequel la région cassable comprend un filament longitudinalement continu noyé (320, 554) adapté pour être arraché de la bande de fermeture pour déchirer le substrat le long de la région cassable.

54. Sac selon la revendication 53, dans lequel le filament (320, 554) est entièrement contenu à l'intérieur d'une nervure longitudinale (132) s'étendant à partir de la face arrière du substrat (102) de la bande de fermeture et disposée à l'intérieur du sac.

55. Sac selon la revendication 53, dans lequel le filament (320, 554) possède une extrémité reliée à une languette (354) s'étendant à partir d'un bord du sac (voir figures 23 et 24).

56. Sac selon la revendication 53, dans lequel le sac définit une fente (448, 560a) ménagée à travers une région de bord (450, 558) du sac mais ne s'étendant pas à l'intérieur du sac, la fente définissant une languette à saisir à l'intérieur de ladite région de bord et contenant une extrémité du filament (320, 554).

57. Sac selon la revendication 56, dans lequel la languette (564) est définie entre deux fentes (560a, 560b) de chaque côté du filament (554) et s'étendant à travers un bord adjacent (562) du sac (voir figure 47).

58. Sac selon la revendication 45, dans lequel la bande à boucles (104) de la bande de fermeture comprend une bande continue non-tissée de fibres ayant une masse surfacique inférieure à environ 4 onces par yard carré.

59. Sac selon la revendication 45, dans lequel la bande de fermeture (100) comprend en outre une bande d'adhésif pelable portée sur la face avant (108) du substrat afin de conférer un scellement pelable de part et d'autre de l'ouverture du sac.

60. Sac selon la revendication 59, dans lequel le scellement pelable est disposé à l'intérieur des bandes de boucles (104) et d'éléments de fixation (106).

61. Sac selon la revendication 59, dans lequel le scellement pelable est disposé à l'extérieur des bandes de boucles (104) et d'éléments de fixation (106).

62. Sac selon la revendication 45, dans lequel la face arrière de la bande de fermeture forme une surface extérieure du sac, les bandes de boucles (104) et d'éléments de fixation (106) étant portées sur une surface intérieure du sac.

63. Sac selon la revendication 62, dans lequel la bande de fermeture comprend en outre
un second groupe d'éléments de fixation pouvant venir en prise avec les boucles, moulé d'un seul tenant avec et s'étendant à partir de la face arrière du substrat (102) et formant une seconde bande (430) d'éléments de fixation s'étendant longitudinalement le long de la surface extérieure du sac, pour suspendre le sac à des fins de présentation (voir figure 31).

64. Sac selon la revendication 63, dans lequel la bande de fermeture comprend en outre une seconde bande à boucles portée sur la face arrière du substrat et formant une seconde bande discrète (432) de boucles pouvant venir en prise s'étendant le long de la surface extérieure du sac, pour suspendre le sac à des fins de présentation.

65. Sac selon la revendication 45, dans lequel la face avant (108) de la bande de fermeture forme une surface, extérieure du sac, les bandes de boucles (104) et d'éléments de fixation (106) étant portés sur ladite surface extérieure du sac.

66. Sac selon la revendication 65, dans lequel à la fois la bande de boucles (104) et la bande d'éléments de fixation (106) sont disposées sur un côté avant du sac, de telle sorte que les éléments de fixation viennent en prise avec les boucles lorsqu'un bord adjacent du sac est replié (voir figure 34A).

67. Sac selon la revendication 66, dans lequel le substrat de la bande de fermeture définit une région cassable entre les bandes de boucles (104) et les éléments de fixation (106), la région cassable s'étendant le long d'un côté du sac et étant configurée pour être déchirée afin d'ouvrir le sac.

68. Sac selon la revendication 67, dans lequel la région cassable (514) est configurée de façon à être déchirée en appliquant une charge de traction transversale de part et d'autre de la région cassable.

69. Sac selon la revendication 68, dans lequel la région cassable (514) du substrat est plus faible par rapport à une charge de traction transversale que les parois latérales (516, 520) du sac et la fixation (518, 522) entre les parois latérales du sac et la fermeture du sac.

70. Sac selon la revendication 68, dans lequel la paroi latérale formant le côté avant du sac présente une languette exposée (532, 536) pour saisir et tirer le côté avant du sac pour déchirer la région cassable (514) de la bande de fermeture.

71. Sac selon la revendication 70, dans lequel la languette (532) s'étend de part et d'autre du côté avant du sac.

72. Sac selon la revendication 65, dans lequel les bandes de boucles (104) et d'éléments de fixation (106) sont disposées sur des côtés opposés du sac, de telle sorte que les éléments de fixation viennent en prise avec les boucles lorsqu'un bord adjacent du sac, formé par un pli dans la bande de fermeture, est replié deux fois (voir figures 35A à 35D).

73. Sac selon la revendication 72, dans lequel, avec la bande de fermeture repliée deux fois, des couches adjacentes du substrat forment ensemble une barrière aux fluides.

74. Sac selon la revendication 45, dans lequel les parois latérales du sac sont fixées à la bande de fermeture le long de la face arrière de la bande de fermeture (voir figures 16, 16A, 17A, 22, 25, 31, 36).

75. Sac selon la revendication 74, dans lequel un bord du sac est formé par un pli le long du substrat (102) de la bande de fermeture (100) entre les bandes de boucles (104) et d'éléments de fixation (106) (voir figures 16, 25, 31).

76. Sac selon la revendication 74, dans lequel le substrat forme un pli entre les bandes d'éléments de fixation (106) et de boucles (104), le pli du substrat étant dirigé vers l'intérieur du sac (voir figures 16A, 36).

77. Sac selon la revendication 76, dans lequel le substrat (102) est plein et continu entre les parois latérales du sac, pour former un scellement de part et d'autre de l'ouverture du sac jusqu'à ce que le sac soit ouvert pour la première fois.

78. Sac selon la revendication 76, dans lequel les parois latérales du sac sont jointes l'une à l'autre vers l'extérieur des bords longitudinaux de la bande de fermeture pour former un scellement jusqu'à ce que le sac soit ouvert pour la première fois (voir figure 36).

79. Sac selon la revendication 45, dans lequel au moins un bord longitudinal de la bande de fermeture est disposé à l'intérieur du sac et n'est pas fixé aux côtés du sac excepté au niveau des bords du sac (voir figures 2A, 16, 36).

80. Sac selon la revendication 45, dans lequel le substrat de la bande de fermeture porte des marques imprimées (454) (voir figures 27, 33).

81. Sac selon la revendication 45, dans lequel le substrat de la bande de fermeture définit un orifice (412) formant une poignée pouvant être saisie pour porter le sac.

82. Produit continu en forme de feuille utile pour former des sacs, le produit comprenant
un film continu en forme de feuille (254, 446) ; et
une longueur de bande de fermeture (318, 444, 572) collée de manière permanente au film, la bande de fermeture comprenant
un substrat de résine en forme de feuille (102) ayant une face avant exposée (108) ;
une bande à boucles portée sur la face avant du substrat et comprenant une bande discrète (104) de boucles pouvant être mises en prise par des crochets s'étendant sur toute la longueur de la bande de fermeture ; et
un groupe d'éléments de fixation pouvant venir en prise avec les boucles, moulé d'un seul tenant avec la résine de la face avant du substrat et formant une bande discrète (106) d'éléments de fixation s'étendant longitudinalement selon la longueur de la bande de fermeture et espacée de la bande de boucles.

83. Produit en forme de feuille selon la revendication 82, dans lequel la bande de fermeture (318) est continue et s'étend le long de l'axe central du film (voir figure 38A).

84. Produit en forme de feuille selon la revendication 82, dans lequel la bande de fermeture (444) est continue et s'étend le long d'un bord du film (voir figure 38B).

85. Produit en forme de feuille selon la revendication 82, dans lequel la bande de fermeture (572) s'étend transversalement sur le film (voir figure 48).

86. Procédé de fabrication d'une bande de fermeture, le procédé comprenant les étapes
de moulage d'un substrat continu en forme de feuille (102) ayant une bande d'éléments de fixation (106, 526) moulée d'un seul tenant avec et s'étendant à partir d'une face avant du substrat ; et
de fixation d'une bande continue de matériau de boucles (160) à la résine formant la face avant du substrat, pour former une bande de boucles discrète (104, 524) espacée de la bande d'éléments de fixation.

87. Procédé selon la revendication 86, dans lequel l'étape de moulage comprend la formation du substrat afin d'avoir une section cassable longitudinale agencée de façon à être disposée entre la bande de boucles et la bande d'éléments de fixation.

88. Procédé selon la revendication 87, dans lequel la section cassable du substrat définit au moins une rainure s'étendant longitudinalement (134, 420, 514) à l'intérieur, l'étape de moulage comprenant la formation de la rainure dans le substrat lorsque le substrat est formé.

89. Procédé selon la revendication 88, dans lequel la rainure (134, 420, 514) est formée dans la face avant (108) du substrat.

90. Procédé selon la revendication 88, dans lequel la section cassable définit deux rainures s'étendant longitudinalement (134) dans le substrat.

91. Procédé selon la revendication 90, dans lequel l'étape de moulage comprend en outre la formation simultanée d'une nervure longitudinale (132) s'étendant à partir du substrat entre une paire desdites rainures.

92. Procédé selon la revendication 86, dans lequel l'étape de moulage comprend la formation simultanée d'une nervure longitudinale (132) s'étendant à partir du substrat (102), la nervure étant agencée de façon à être disposée entre les bandes d'éléments de fixation et de boucles.

93. Procédé selon la revendication 92, dans lequel la nervure (132) est moulée de façon à être plus proche de l'une que de l'autre des bandes d'éléments de fixation et de boucles (voir figure 29).

94. Procédé selon la revendication 86, dans lequel l'étape de moulage comprend l'étape consistant à noyer simultanément un filament longitudinalement continu (320) dans la résine du substrat (102).

95. Procédé selon la revendication 94, dans lequel le filament est entièrement contenu par la résine d'une nervure (132) s'étendant à partir d'une face du substrat.

96. Procédé selon la revendication 86, dans lequel la bande de matériau de boucles comprend une bande continue non-tissée de fibres enchevêtrées formant les boucles et ayant une masse surfacique inférieure à environ 4 onces par yard carré.

97. Procédé selon la revendication 86, dans lequel l'étape de fixation comprend l'encapsulage de fibres de la bande de matériau de boucles dans la résine du substrat de part et d'autre de la largeur du matériau de boucles.

98. Procédé selon la revendication 86, dans lequel la bande de matériau de boucles présente une densité de fibres qui est sensiblement constante de part et d'autre de sa largeur, et dans lequel l'étape de fixation comprend l'étape consistant à coller de manière permanente des régions discrètes (114, 116, 22, 126, 130) de la bande de matériau de boucles au substrat tout en laissant d'autres régions de la bande de matériau de boucles dans un état moins collé (voir figures 1A à 1G).

99. Procédé selon la revendication 88, dans lequel la bande de matériau de boucles (160') est fixée de manière permanente au substrat (102) une fois que le substrat a été moulé.

100. Procédé selon la revendication 99, dans lequel la bande de matériau de boucles est fixée au substrat en chauffant la face avant (108) du substrat puis en appuyant le matériau de boucles contre la face avant du substrat avec la face avant du substrat à une température élevée.

101. Procédé selon la revendication 86, dans lequel la bande de matériau de boucles (160) est fixée de manière permanente au substrat (102) lorsque le substrat est moulé.

102. Procédé selon la revendication 101, dans lequel les étapes de moulage et de fixation comprennent
l'amenée en continu de la bande de matériau de boucles (160) à travers un point de serrage (152) défini entre un cylindre de moulage rotatif (154) et un rouleau presseur (156), le cylindre de moulage rotatif définissant une pluralité de cavités autour de sa périphérie pour mouler les éléments de fixation, tout en
introduisant en continu la résine fondue dans le cylindre de moulage (154) dans des conditions qui amènent la résine à remplir les cavités et former le substrat, de telle sorte que la pression dans le point de serrage (152) colle la bande de matériau de boucles (160) sur la résine du substrat (voir figure 7).

103. Procédé selon la revendication 102, dans lequel le cylindre de moulage (154) présente deux arêtes allongées qui forment deux rainures (134) dans le substrat.

104. Procédé selon la revendication 103, dans lequel l'étape de moulage comprend la formation simultanée d'une nervure longitudinale (132) s'étendant à partir du substrat (102) entre les deux rainures (134), le cylindre de moulage définissant, entre ses deux arêtes, un canal pour former la nervure longitudinale.

105. Procédé selon la revendication 101, dans lequel les étapes de moulage et de fixation comprennent
l'amenée en continu de la bande de matériau de boucles à travers un intervalle (190) défini entre un cylindre de moulage rotatif (154) et une tête d'extrusion fixe (188), le cylindre de moulage rotatif définissant une pluralité de cavités autour de sa périphérie pour mouler les éléments de fixation, tout en
introduisant en continu la résine fondue vers l'intervalle (190) dans des conditions qui amènent la résine à remplir les cavités et former le substrat et à adhérer de manière permanente à la bande de matériau de boucles (160) (voir figure 11).

106. Procédé selon la revendication 105, comprenant en outre, tout en amenant en continu la bande de matériau de boucles (160) à travers l'intervalle (190), l'amenée en continu d'une bande de matériau préformé (178) à travers l'intervalle entre la bande de matériau de boucles (160) et la tête d'extrusion (188), de telle sorte que le matériau préformé inhibe l'encapsulage des fibres de la bande de matériau de boucles dans des régions prédéterminées et que le matériau préformé est incorporé dans la bande de fermeture.

107. Procédé selon la revendication 106, dans lequel le matériau préformé (178) est choisi dans le groupe constitué par le papier, le tissu et le film plastique.

108. Procédé selon la revendication 106, dans lequel le matériau préformé définit des perforations s'étendant à travers son épaisseur.

109. Procédé selon la revendication 101, dans lequel les étapes de moulage et de fixation comprennent
l'amenée en continu de la bande de matériau de boucles (160) à travers un point de serrage (152) défini adjacent à la périphérie d'un cylindre de moulage rotatif (154), le cylindre de moulage comprenant au moins une bague de maintien (180) ayant un bord extérieur profilé et agencé pour maintenir une région prédéterminée de la bande de matériau de boucles contre la résine sous pression dans l'intervalle (voir figures 9 et 10).

110. Procédé selon la revendication 109, dans lequel le bord extérieur de la bague de maintien comprend des saillies (184) espacées autour de sa périphérie, les saillies correspondant à des régions discrètes d'encapsulage relativement plus important de la bande de matériau de boucles (160).

111. Procédé selon la revendication 109, dans lequel le cylindre de moulage (154) comprend plusieurs bagues de maintien (180) agencées de façon à produire un motif de collage prédéterminé de part et d'autre de la bande de matériau de boucles.

112. Procédé de fabrication de sacs refermables, le procédé comprenant
la prévision d'une longueur continue de matériau en forme de feuille formant paroi du sac (254) ;
la prévision d'une bande de fermeture continue comprenant
un substrat de résine en forme de feuille (102) ayant une face avant (108) ;
une bande à boucles (160) portée sur la face avant du substrat et formant une bande discrète (104) de boucles pouvant venir en prise sur toute la longueur de la bande de fermeture ; et
un groupe d'éléments de fixation pouvant venir en prise avec les boucles, moulé d'un seul tenant avec la face avant du substrat et formant une bande discrète (106) d'éléments de fixation s'étendant longitudinalement sur toute la longueur de la bande de fermeture et espacée de la bande de boucles ;
la fixation de manière permanente de la bande de fermeture le long du matériau en forme de feuille formant paroi du sac pour former une longueur continue de matériau de sacs de préforme ; et
la formation des sacs individuels à partir du matériau de sacs de préforme.

113. Procédé selon la revendication 112, dans lequel l'étape de fixation produit un tube de matériau de sacs de préforme, et dans lequel les étapes de fixation et de formation sont effectuées simultanément au cours d'un procédé de mise en forme et d'ensachage vertical, les sacs individuels contenant une quantité prédéterminée du produit à stocker dans les sacs (voir figure 15).

114. Procédé selon la revendication 113, dans lequel la bande de fermeture (266) est fixée aux bords longitudinaux du plastique en forme de feuille pour former un scellement à ailettes du tube de préforme.

115. Procédé selon la revendication 114, dans lequel la bande de fermeture est pliée pour former un pli s'étendant vers l'extérieur, à distance du tube de préforme (voir figure 16).

116. Procédé selon la revendication 115, dans lequel le pli définit un bord distal du scellement à ailettes.

117. Procédé selon la revendication 113, dans lequel la bande de fermeture est pliée pour former un pli s'étendant vers l'intérieur, vers le tube de préforme (voir figure 16A).

118. Procédé selon la revendication 112, dans lequel l'étape de fixation produit un tube de préforme de matériau de sacs et dans lequel les étapes de fixation et de formation sont effectuées simultanément lors d'un procédé de mise en forme et d'ensachage horizontal, les sacs individuels étant formés autour d'emballages de produits associés (voir figures 17 à 19).

119. Procédé selon la revendication 118, dans lequel les bords longitudinaux du matériau formant paroi latérale du sac sont réunis pour former un scellement à ailettes avec la bande de fermeture pliée longitudinalement et disposée à l'intérieur du scellement à ailettes (voir figures 17, 17A).

120. Procédé selon la revendication 118, dans lequel les bords longitudinaux du matériau formant paroi latérale de sac sont réunies dans un scellement à ailettes, la bande de fermeture étant pliée longitudinalement autour et fixée aux bords longitudinaux du matériau formant paroi latérale du sac (voir figure 18).

121. Procédé selon la revendication 112, dans lequel l'étape de fixation comprend l'étape consistant à plier la bande de fermeture sur toute sa longueur pour venir en prise avec les bandes de boucles (104) et d'éléments de fixation (106) dans une zone de mise en prise, les boucles et les éléments de fixation maintenant leurs régions sous-jacentes du substrat en relation espacée (voir figure 17A).

122. Procédé selon la revendication 121, dans lequel l'étape de fixation comprend en outre la soudure du matériau formant paroi latérale du sac à la face arrière du substrat, la zone de mise en prise procurant une barrière thermique pour empêcher de souder de manière permanente le substrat entier dans son état plié.

123. Procédé selon la revendication 112, dans lequel l'étape de formation comprend le pliage du matériau de sacs de préforme le long de son axe central, puis à former des scellements transversaux espacés le long du matériau de sacs de préforme à des intervalles de longueur du sac pour former une chaîne de sacs à extrémité ouverte (voir figure 20).

124. Procédé selon la revendication 123, dans lequel la bande de fermeture est fixée le long du matériau formant paroi latérale du sac entre les bords longitudinaux dudit matériau, le matériau du sac de préforme étant ensuite plié au niveau de la bande de fermeture pour venir en prise avec les bandes de boucles et d'éléments de fixation (voir figures 20, 26).

125. Procédé selon la revendication 123, dans lequel l'étape de fixation comprend
le pliage individuel du matériau formant paroi latérale du sac (254) et la bande de fermeture (318) ; puis
le rattachement du matériau formant paroi pliée et la bande de fermeture le long de leurs bords longitudinaux pour former un tube continu de matériau de sacs de préforme (voir figure 25).

126. Procédé selon la revendication 125, dans lequel l'étape de formation comprend la création de scellements transversaux de part et d'autre du tube de matériau de sacs de préforme pour former une série de sacs vides discrets.

127. Procédé selon la revendication 112, dans lequel le matériau formant paroi latérale du sac est prévu sous la forme de deux feuilles de matériau distinctes (368, 370), l'étape de fixation comprenant la fixation de la bande de fermeture (372) à un bord longitudinal de chaque feuille, de telle sorte que le matériau de sacs de préforme comprend les deux feuilles de matériau jointes au niveau de la bande de fermeture, l'étape de formation des sacs individuels comprenant la formation de scellements transversaux (384) de part et d'autre du matériau de sacs de préforme et la réunion des autres bords longitudinaux des feuilles de matériau pour former une série de sacs scellés (voir figure 26).

128. Procédé selon la revendication 112, dans lequel la bande de fermeture contient un cordon noyé (320), l'étape de formation comprenant la formation d'une languette à saisir (354) s'étendant à partir d'un bord de chaque sac, la languette contenant une extrémité du cordon (voir figures 22 à 24, 47).

129. Procédé selon la revendication 128, dans lequel la languette à saisir (354) est formée en découpant chaque sac dans une région de scellement latérale de celui-ci.

130. Procédé selon la revendication 129, dans lequel la découpe traverse le cordon mais ne s'étend pas jusqu'à l'intérieur du sac.

131. Procédé selon la revendication 129, dans lequel l'opération de découpe forme deux découpes (560a, 560b) s'étendant d'un bord adjacent du sac jusqu'au cordon.

132. Procédé de fabrication de sacs refermables lors d'un procédé de mise en forme et d'ensachage vertical, le procédé comprenant
le déroulement d'une longueur continue de film à sacs en forme de feuille (254) et l'orientation du film déroulé par-dessus une tête de formation, en faisant avancer le film à sacs d'une longueur de sac entre les arrêts ;
pendant chaque arrêt, la fixation d'une longueur (572) de bande de fermeture de part et d'autre du film à sacs déroulé en amont de la tête de formation, chaque longueur de bande de fermeture comprenant
un substrat de résine en forme de feuille (102) ayant une face avant ;
une bande à boucles portée sur la face avant du substrat et formant une bande discrète (104, 524) de boucles pouvant venir en prise selon la longueur de la bande de fermeture ; et
un groupe d'éléments de fixation pouvant venir en prise avec des boucles, moulé d'un seul tenant avec la face avant du substrat et formant une bande discrète (106, 526) d'éléments de fixation s'étendant longitudinalement selon la longueur de la bande de fermeture et espacée de la bande de boucles ; et
la formation de sacs individuels à partir du film à sacs, chaque sac ayant une longueur associée de bande de fermeture (voir figure 48).
